# EUROPÄISCHE PATENTSCHRIFT

(11) **EP 3 296 576 B1**
(45) Veröffentlichungstag und Bekanntmachung des Hinweises auf die Patenterteilung: **08.09.2021**
(21) Anmeldenummer: 17191461.7
(22) Anmeldetag: 15.09.2017
(51) Int. Cl.: F16B 5/01, F16B 11/00

(54) **FÜGEVERFAHREN UND MITTEL ZUR DURCHFÜHRUNG DES VERFAHRENS**
JOINING METHOD AND MEANS FOR CARRYING OUT THE METHOD
PROCÉDÉ D'ASSEMBLAGE ET MOYENS DE MISE EN OEUVRE DU PROCÉDÉ

(30) Priorität: 15.09.2016 DE 102016011095
(43) Veröffentlichungstag der Anmeldung: 21.03.2018
(73) Patentinhaber: Technische Hochschule Ostwestfalen-Lippe, 32657 Lemgo (DE)
(72) Erfinder: STOSCH, Martin, 50679 Köln (DE)
(74) Vertreter: Michalski Hüttermann & Partner Patentanwälte mbB

(56) Entgegenhaltungen:
- EP-A1- 2 428 137
- EP-A2- 2 698 077
- EP-B1- 2 115 234
- DE-A1-102008 031 575
- DE-A1-102011 002 880
- DE-B3-102005 057 525
- DE-U1- 7 821 340
- US-A- 3 530 921

## Beschreibung

Die vorliegende Erfindung betrifft ein System aus Insert und komplementärer Aussparung in einem plattenförmigen Bauteil zur zonalen Funktionalisierung des Bauteils in seinem Randbereich und Verfahren zur Einbringung des Systems in plattenförmige Bauteile sowie plattenförmige Bauteile, die mit einem solchen System ausgestattet sind.

Im industriellen wie handwerklichen Möbelbau und Innenausbau von Mobilien (Fahrzeugen, Bahnen, Schiffen, Flugzeugen u. dgl.) und Immobilien kommen vorwiegend Plattenwerkstoffe, vielfach auch ligno-zellulosebasierte Holzwerkstoffe mit oder ohne Beschichtungen mit Fremdwerkstoffen zum Einsatz, die einen mehr oder weniger diskontinuierlichen Dichteverlauf im Plattenquerschnitt aufweisen.

Das gilt sowohl für klassische Holzwerkstoffe wie Span- und Faserplatten, Sperrhölzer u. dgl., die durch ihre Herstellverfahren bedingt und außerdem derzeit zunehmend zum Zwecke der gezielten Materialeinsparung über hohe Differenzen zwischen der Materialdichte im Randbereich und der Materialdichte im Kernbereich verfügen, wobei der Übergang zwischen den Dichtezonen ohne klare Grenzlinie fließend sein kann, als auch für sog. Sandwichwerkstoffe, also lagenweise geschichtete und miteinander verklebte Materialverbunde aus drei oder mehr Schichten, die sich i.d.R. durch dünne und gleichzeitig feste Deckschichten mit hohen Materialdichten auf den Verbundaußenseiten und eine leichte Kernschicht aus Werkstoffen geringer Materialdichte (leichte Schäume oder Leichtbaustrukturen, z.B. mono-, bi- oder multiaxial ausgerichtete Stützstrukturen orthogonaler, wellenförmiger, hexagonal- oder sinuswabenförmiger bzw. sonstiger Anordnung) mit mehr oder weniger geometrisch bestimmten Hohlräumen in der Verbundmittellage auszeichnen.

Plattenwerkstoffe (ligno-zellulosebasierte Holzwerkstoffe wie Plattenwerkstoffe aus anderen Werkstoffen oder Werkstoffkombinationen wie Kunststoff, Metall, Glas, Keramik u. dgl.) der vorbeschrieben Art kommen als sog. Leichtbauwerkstoffe (Plattenwerkstoffe mit einer Rohdichte von 500 kg/m³ und weniger) aus funktionalen, ökologischen, ökonomischen oder sonstigen Umgebungsansprüchen im Möbel- und Innenausbau zunehmend zum Einsatz, was aufgrund der damit unweigerlich einhergehenden reduzierten Druck- und Querzugsfestigkeit senkrecht zur Plattenebene zu Problemen bei ihrer maschinellen Verarbeitung führt.

Bei der horizontalen Plattenlagerung wird häufig schon bei einer geringen Stapelhöhe die Druckfestigkeit durch das Eigengewicht des Plattenstapels überschritten. Beim Formatieren auf horizontalen Aufteilungssägen werden die Platten bzw. Plattenstapel durch einen Druckbalken bis an die Grenze ihrer Druckfestigkeit und ggf. darüber hinaus belastet, was zur dauerhaften Zerstörung der Kernstruktur der Sandwichplatten führen kann. Dasselbe gilt für die Druckbeaufschlagung durch Transportbänder o. dgl. von formatierten Plattenzuschnitten bei ihrem Weg entlang der einzelnen Bearbeitungsaggregate durch die Bearbeitungsanlagen, was beispielsweise zu regional unsauber angebrachten Schmalflächenbeschichtungen führen kann, insb. im Eckbereich der Bauteile. Auf der anderen Seite werden Plattenzuschnitte im Produktionsprozess beispielsweise durch Vakuumhebevorrichtungen punktuell bzw. regional begrenzt nur an der oberen Deckschicht gehalten, sodass bei ungünstigen Verhältnissen die Querzugsfestigkeit der Verklebung zwischen Deckschichten und Kernschicht durch das Eigengewicht der Platten und ggf. die Beschleunigungsenergie beim Hebevorgang überschritten werden kann.

Weit schwerwiegender sind die weitreichenden Einschränkungen in der Montage- und Verbindungstechnik von Plattenwerkstoffen mit diskontinuierlichem Dichteverlauf, insb. von Sandwichplatten mit leichten Kernschichten und/oder strukturellen Hohlräumen, gegenüber herkömmlichen Plattenwerkstoffen im Möbel- und Innenausbau. Dabei lassen sich einerseits durch die spezifische Querschnittsstruktur zahlreiche etablierte Montage- und Verbindungstechniken gar nicht oder nur eingeschränkt anwenden, anderseits besitzen diese Montage- und Verbindungspunkte nur eine deutlich eingeschränkte Stabilität in der Benutzung der so gefügten Produkte.

Leichtbauplatten der vorbeschriebenen Art weisen häufig ein stark reduziertes axiales Schraubenhaltevermögen auf, da sich nur wenige Gewindegänge von Befestigungsschrauben oder Verbindungsbolzen und sonstigen Beschlagteilen in die Deckschicht formen oder hinter dieser verklemmen können und die Kernschicht i.d.R. keinen oder nur einen unwesentlichen Beitrag zur Schraubfestigkeit leistet. Die feste Verleimung von Möbel- oder Ausbauprodukten, also das stoffschlüssige Verbinden mittels üblicher Verleimhilfen wie Holzdübeln, Formfederholzplättchen o. dgl. ist aufgrund der geringen Materialdicken der Deckschichten durch die zu kleine Leimfläche meist gar nicht möglich. Stirnseitig in der Schmalfläche derartiger Plattenwerkstoffe angeordnete Schraub- oder Dübelbefestigungen sind aufgrund der geringen Kerndichte oder mitunter der Hohlstruktur von Plattenwerkstoffen im Sandwichaufbau gar nicht möglich, was den Einsatz der im Möbel- und Innenausbau etablierten Befestigungs-, Verbindungs- und Montagetechnik zu großen Teilen bislang verhindert. Somit ergeben sich im industriellen wie handwerklichen Fügeprozess von plattenförmigen Leichtbauteilen bislang zahlreiche nicht zufriedenstellend gelöste Fragestellungen bei der Herstellung von lösbaren wie festen Plattenlängsverbindungen und winkel- oder T-förmigen Platteneckverbindungen sowie Anschlussverbindungen zu Fremdbauteilen.

Diesem Übelstand wird in der geübten Verarbeitungspraxis von mehrlagigen, leichten Sandwichwerkstoffen durch die Integration von Rahmenhölzern in der Ebene der Kernschicht im Plattenrandbereich begegnet, was einerseits zur wesentlichen Versteifung der Bauteile beiträgt und andererseits einen großen Teil der Befestigungs-, Verbindungs- und Montagproblematik löst, da Verbindungspunkte im Möbel- und Innenausbau naturgemäß überwiegend im Randbereich der Bauteile liegen. Durch Integration von Rahmenhölzern (auch als Riegel bezeichnet) werden für die Ausbildung von Verbindungspunkten derartige Bedingungen geschaffen, die denen von klassischen Vollholzplatten oder klassischen Holzwerkstoffplatten oder sonstigen Plattenwerkstoffen mit weitgehend homogenem Dichteverlauf entsprechen. Dabei können Rahmenhölzer aus Massivholz, Holzwerkstoffen oder sonstigen Werkstoffen, beispielsweise Riegel aus Polyurethan, bei der sogenannten "Board on Frame"-Bauweise bereits im Herstellprozess des Sandwichbauteils, also bei der Urformung des Bauteils, in die Kernschicht integriert werden. In Teilbranchen werden Riegel durch sogenannte "Potting"-Massen, also flüssig oder pastös vorliegende, mehrkomponentige Polymersysteme gebildet, die im Plattenrandbereich in die Stützstruktur der Kernschicht eingebracht werden und dort zu festen Rahmen aushärten.

Bei der Verarbeitung von großformatigen, mehrlagigen, leichten Sandwichplatten lassen sich Rahmenhölzer auch nach dem Formatieren im sogenannten "Post Frame"-Prozess auf speziellen Schmalflächenbeschichtungsanlagen in den Randbereich eines Sandwichbauteils einbringen. Beide Verfahren sind im ersten Fall durch die wesentliche Erweiterung des Produktionsprozesses (Urformung des Sandwichbauteils aus Deckschichten, Rahmenhölzern und stützender Kernschicht bzw. Füllmassen im Randbereich stützender Kernschichten), und im zweiten Fall durch den zusätzlichen maschinellen Arbeitsprozessschritt des Einbringens der Rahmenhölzer sowie in beiden Fällen durch die dafür notwendige spez. Anlagentechnik vergleichsweise kostenexpansiv. Während die "Board on Frame"-Bauweise unter den Voraussetzungen der Großserie, besonders einfacher, recht linearer (i.d.R. rechteckiger) Bauteilgeometrien und bei Optimierung der Rahmenquerschnitte und Rahmenwerkstoffe durchaus eine ökonomisch vertretbare Produktionsoption darstellt, ist das nachträgliche Einbringen von Rahmenhölzern in den Randbereich einer Sandwichplatte mit vergleichsweise sehr hohen Kosten verbunden und nur mit spezieller, kaum verbreiteter Anlagentechnik in der verarbeitenden Industrie umsetzbar, im handwerklichen Produktionsprozess auf Standardbearbeitungsmaschinen gar nur durch die Aneinanderreihung sehr vieler Prozessschritte und daher nicht rationell anzuwenden.

Daher wurden für die Ausbildung von wirksamen Verbindungspunkten in Leichtbauteilen, die aus großformatigen leichten Sandwichplatten formatiert werden, in der Vergangenheit unterschiedliche kraft-, form- und stoffschlüssig sowie kombiniert schlüssige, wirksame Beschlagsysteme entwickelt.

Aus der DE 20 2006 002 648 U1 und der US 2007/0169430 A1 sind mechanische Verbindungsanordnungen zum Ausführen von stirnseitigen Längsverbindungen zweier plattenförmiger Bauteile - auch geeignet für plattenförmige Bauteile mit diskontinuierlichem Dichteverlauf, respektive leichten, mehrlagigen Sandwichbauteilen - bekannt. Ähnlich ist die aus der DE 20 2004 000 473 U1 bekannte mechanische Verbindungsanordnung zum Ausführen von winkel- und T-förmigen Eckverbindungen zweier plattenförmiger Bauteile aufgebaut.

Die DE 10 2009 008 846 A1 offenbart einen Beschlag zur Ausbildung eines schraubfesten Klebdübels und das Verfahren zu seiner Einbringung in eine Ausnehmung. Die DE 10 2006 049 953 A1 und Weiterentwicklungen derselben Erfindung wie beispielsweise in DE 10 2008 010 730 A1, DE 10 2008 048 354 A1undDE 10 2008 048 387 A1 offenbaren ebenfalls einen Klebedübel, wobei hier der zur stoffschlüssigen Verbindung des Kunststoffbeschlages mit den Deckschichtinnenseiten der plattenförmigen Bauteile benötigte Reaktionsklebstoff bereits in einem Klebstoffreservoir Bestandteil des Beschlages ist. Die Aufnahme von Beschlag- und/oder Funktionselementen im Inneren oder Verleimhilfen wie Holzdübeln oder Formfederholzplättchen u. dgl. ist nicht möglich.

Die US 8550759 B2 offenbart einen Kunststoffbeschlag zur Ausbildung eines schraubfesten Verbindungspunktes, der mittels Einleitung von Ultraschallenergie über eine Sonotrode an den Grenzflächen der zylindrischen Ausnehmung mit den Deckschichten von plattenförmigen Bauteilen verschweißt wird. Die EP 2 202 050 A1 zeigt eine entsprechende Lösung, bei der aber der Kaltschmelzdübel immer mindestens zweiteilig aufgebaut ist. Das Grundverfahren zur Herstellung eines Mikroformschlusses zwischen Kunststoffelementen und porösen Werkstoffen wie beispielsweise Holz oder Holzwerkstoffen ist bereits in der CH 694 058 A5 dargelegt, ein nach diesem Verfahren in weitgehend homogene, poröse Werkstoffe eingebrachtes einteiliges, stiftförmiges Verbindungsmittel ist in EP 0 968 373 B1 dargelegt.

Die DE 10 2010 000 019 A1 offenbart die Erfindung eines Beschlages zum Verbinden von zwei Leichtbauplatten über eine Gehrungsfuge. Die DE 10 2009 005 596 A1 und DE 20 2008 002 540 U1 offenbaren Beschlaganordnungen zum winkel- bzw. T-förmigen Anschluss eines plattenförmigen Bauteils an andere Bauteile, Innenausbauteile oder Raumwände mittels Steckmontage. Dabei sind bei den Beschlaganordnungen Leimkanäle in das Kunststoffteil integriert, die das Verkleben desselben mit ein oder zwei Deckschichten ermöglichen.

Die DE 10 2012 015 879 B4 offenbart eine Erfindung, die eine Leichtbauplatte und ein in eine Ausnehmung der Leichtbauplatte eingesetztes Bauteil (Insert) betrifft, welches mit den Deckschichten verklebt wird und mindestens eine Vertiefung in Form eines Loches (Durchgangsloch oder Sackloch/Grundloch) aufweist, die zur kraft- und/oder stoffschlüssigen Aufnahme eines Bolzens geeignet ist. Die dargelegte geometrische Ausführung des Inserts ist ungeeignet, andere Beschlag- oder Funktionselemente noch von der Kreisquerschnittsform abweichende Verleimhilfen wie Flachdübel, Formfederholzplättchen oder Federn u. dgl. aufzunehmen.

Die DE 10 2005 057 525 B3 offenbart die Erfindung eines Verbindungssystems für Mehrschichtplatten, insbesondere Leichtbauplatten, in Form eines massiven Inserts, welches von Seite einer Schmalfläche in eine Kerschichtausparung und mindestens eine an gleicher Stelle liegende Deckschichtaussparung eingebracht wird und dort im Bereich der Überlappung von Deckschicht und Insert mit demselben verklebt wird.

EP 2 115 234 B1 offenbart eine ganz oder teilweise kantige Platte aus Holz oder Holzfasern enthaltend einen Sandwichrohling mit äußeren Schichten fester Konsistenz und mindestens eine weichen innere Schicht mit einem leichten, möglicherweise Waben- oder weichen Schaumstruktur. Die Platte ist dadurch gekennzeichnet, dass mindestens ein Abstandshalter zwischen den beiden äußeren Schichten des Rohlings und durch die peripheren Außenflächen von eingefügt ist Der Rohling wird mit einem Klebestreifen eingefasst. Ebenfalls beschrieben werden Verfahren und Systeme zur Herstellung der Platte.

Jenseits der dargelegten Problemfelder im Verarbeitungsprozess und insb. in der Verbindungstechnik und weit über den dargelegten Stand der Technik hinaus eröffnen insb. leichte Sandwichplatten neben der Gewichtsreduzierung durch die mitunter erhebliche Ressourceneinsparung und den damit einhergehenden ökologischen und ökonomischen Vorteilen aber auch besondere funktionelle Möglichkeiten, die sich beispielsweise aus der Nutzung der teils materialfreien Kernstruktur zur Leitung von Medien nahezu aller Art ergeben. Diese Vorteile werden bislang gar nicht genutzt. So lassen sich daten- oder stromführende Kabel (Kabel, Leiterbahnen o. dgl.), luft-, wasser-, öl- oder sonstige gase- und fluideführende Leitungen (Rohre, Schläuche o. dgl.) und starre oder bewegliche Beschlagteile zur Weiterleitung von mechanischer Energie in die Platten selber, von außen vollkommen unsichtbar, integrieren. Dasselbe gilt für punktuell oder regional in die Kernstruktur eingebrachte Beschlag- oder Funktionselemente wie beispielweise Verstärkungen oder Verspannungen zur Erhöhung der Biegefestigkeit oder etwa Funktionseinheiten wie Netzteile, Induktionsladestationen oder berührungslose Schaltelemente u. dgl. für technische Geräte. Diese besonderen funktionellen Möglichkeiten werden bislang in der Praxis nicht genutzt, da bislang keine überzeugenden, preiswürdigen, rationell in den Fertigungsprozess zu integrierenden Schnittstellenlösungen zwischen den leichten Sandwichplatten und den Funktionseinbauelementen und/oder Leitungen von Medien bekannt sind.

Der vorliegenden Erfindung liegt deshalb die Aufgabe zugrunde, die Randbereiche einer Platte mit diskontinuierlichem Dichteverlauf, insb. einer leichten Sandwichplatte, punktuell und/oder regional durch Inserts zu funktionalisieren, was durch die partielle Materialanhäufung sowohl die Steigerung der mechanischen Platten- und Verbindungsfestigkeit, als auch durch eine geeignete innere Ausformung besondere Schnittstellenausbildungen zu Einbauelementen einschließt und getrennt oder gleichzeitig genutzt werden kann.

Die Aufgabe wird erfindungsgemäß durch ein Insert-System aus Insert und eine komplementäre Kernschichtaussparung in einem plattenförmigen Bauteil mit den Merkmalen des Anspruches 1 sowie durch ein Verfahren zur Einbringung eines Inserts in ein plattenförmiges Bauteil entsprechend des Insert-Systems mit den Merkmalen des Anspruches 13 gelöst. Vorteilhafte Ausführungsformen des Insert-Systems sowie des Verfahrens sind in den abhängigen Ansprüchen beschrieben.

Das erfinderische Insert-System ist zur zonalen Funktionalisierung eines plattenförmigen Bauteils im Randbereich eines Plattenwerkstoffs mit diskontinuierlichem Dichteverlauf im Plattenquerschnitt vorgesehen. Unter einem diskontinuierlichen Dichteverlauf kann dabei verstanden werden, dass im Plattenquerschnitt die Bereiche der äußeren Deckschichten eine höhere Dichte aufweisen als der Bereich zwischen den Deckschichten (Kernschicht). Der Übergang zwischen der jeweiligen Deckschicht und der Kernschicht kann dabei mehr oder weniger fließend oder auch scharf abgegrenzt ausgebildet sein. Übliche Holzwerkstoffe wie beispielsweise Feinspanplatten oder auch eine Vielzahl der handelsüblichen Faserplatten weisen einen entsprechenden Dichteverlauf auf, da ihre Deckschichten gegenüber ihrer Kernschicht eine höhere Dichte aufweisen. Letztlich trifft die Erfindung insbesondere Leichtbauplatten die einen mehrlagigen Aufbau aufweisen. Diese Leichtbauplatten weisen üblicherweise außenseitig angeordnete Lagen (Deckschichten) auf, die mit einer oder mehreren innenliegenden Lagen, die die Kernschicht bilden, verbunden, insbesondere verklebt sind. Dabei können die äußeren und inneren Lagen aus unterschiedlichen Materialien ausgebildet sein. Auch ist es möglich, dass sowohl die Deckschichten als auch die Kernschicht aus dem gleichen Grundmaterial, beispielsweise Holz, jedoch mit jeweils unterschiedlicher Dichte, ausgebildet sind. Alle diese Platten weisen letztlich einen diskontinuierlichen Dichteverlauf im Querschnitt auf.

Das Insert-System ist dazu vorgesehen, in die Plattenschmalflächen der plattenförmigen Werkstoffe eingebracht zu werden. Unter den Plattenschmalflächen sind dabei die die beiden Hauptoberflächen (Deckseiten) verbindenden Flächenabschnitte zu verstehen.

Erfindungsgemäß erfolgt zu diesem Zweck (zum Einbringen der Inserts) zunächst ein punktueller oder regionaler, zerspanender Eingriff in eine, oder über Eck, in zwei benachbarte Plattenschmalflächen mittels axial rotierendem Bohr- und/oder Fräswerkzeug in Form eines Schaftfräsers mit Schneiden an der Stirnfläche und auf der seitlichen Mantelfläche, wodurch eine im Querschnitt ovale oder aus auf einer Linie liegenden Kreisen zusammengesetzte Kontur, exakter Lage und Dimensionen erzeugt wird. Diese Ausnehmung wird im Nachgang vollständig oder teilweise mit einem geometrisch entsprechenden Insert ausgefüllt, das mittels Stoffschluss (Verkleben, Verleimen, Verschweißen) insbesondere mit beiden Deckschichten oder beiden Deckschichten und der Kernschicht oder einer Deckschicht und der Kernschicht oder nur der Kernschicht verbunden wird. Dabei kann sich die Ausnehmung in ihrer Geometrie, Lage und Dimension ausschließlich auf einen Bereich der Kernschicht erstrecken, wenn ein ausreichender Stoffschluss zwischen Insert und Plattenwerkstoff erfolgt, bei leichten Sandwichplatten mit senkrecht angeordneten Wabenstrukturen beispielsweise durch einen spaltfüllenden, ggf. leicht aufschäumenden Klebstoff, der die Verklebung mit den Deckschichten auch auf eine gewisse Distanz ermöglicht.

Des Weiteren kann sich die Ausnehmung in ihrer Geometrie, Lage und Dimension exakt auf die Höhe der Kernschicht erstrecken, wenn ein ausreichender Stoffschluss zwischen Insert und Plattenwerkstoff durch einen Klebstoff erfolgt, der die notwendigen Adhäsionskräfte auch zwischen der durch die Sandwichproduktion klebstoffbenetzten Innenseite der Deckschichten und dem Insert selber sicherstellt. Vorzugsweise wird die Ausnehmung in ihrer Geometrie, Lage und Dimension so ausgeführt, dass im Mindesten der durch die Sandwichproduktion applizierte Klebstoff von den Innenseiten einer oder beider Deckschichten entfernt wird oder besser die Deckschichten selber zu Teilen im Bereich der Ausnehmung liegen. Durch das leichte Anbohren bzw. Anfräsen der Deckschichten bis etwa zur Hälfte der Materialstärke werden diese optimal für einen dauerfesten Stoffschluss zum Insert vorbereitet und gleichzeitig wird ein stabiler Passsitz zur exakten Positionierung des Inserts erzeugt, was das Einbringen des Inserts in die Ausnehmung und damit den positionsgenauen Verklebeprozess wesentlich erleichtert.

Es ist dabei besonders vorteilhaft, wenn die Querschnittsfläche der Ausnehmung, respektive die Querschnittsfläche des Inserts, zweiachsen-spiegelsymmetrisch ausgeführt sind, sich der Querschnitt also aus vier konturgleichen Abschnitten ergibt, die geometrisch betrachtet um den Mittelpunkt gedreht bzw. entlang der Achsen gespiegelt und gedreht deckungsgleich übereinanderliegen könnten. Bei einer derartigen Gestalt können die Inserts niemals falsch in der Ausnehmung positioniert werden, was eine automatische Zuführung in industriellen Produktionsprozessen erleichtert bzw. bei manueller Verarbeitung im Handwerk Fehlpositionierungen ganz ausschließt.

Die Länge der Inserts, die auf unterschiedlichste Art und Weise mithilfe von Urform-, Umform-, Füge- und/oder Trennverfahren hergestellt werden können, insb. in Form von fertig profilierten und fix abgelängten Einsätzen oder aber in Form von Halbzeugen größerer Länge (beispielsweise als Meterware), richtet sich nach dem Einsatzzweck, also beispielweise der Lage und Entfernung der notwendigen Plattenversteifung von der Plattenkante sowie gleichfalls nach der technischen Möglichkeit eine entsprechend tiefe Ausnehmung im plattenförmigen Bauteil mit Handmaschinen, Stationärmaschinen, Anlagen, Bearbeitungsaggregaten und Maschinenwerkzeugen herstellen zu können. Das einzubringende Insert kann insbesondere aus einem vollen Material bestehen, wobei anzumerken ist, dass unter einem vollen Material auch ein nicht homogenes Material zu verstehen ist. Das Insert kann somit sowohl homogen, d. h. aus einer Materialart aufgebaut sein oder es kann aus zwei oder mehr Materialien zusammengesetzt sein. Selbstverständlich können auch mehrere gleiche Materialien zu einem Insert verbunden werden.

Dabei ist es insb. aus Gründen der besseren Integration in die Fertigungsprozesse des Holzhandwerks und der holzverarbeiten Industrie besonders vorteilhaft, wenn das Insert beim Einbringen in einen ligno-zellulosebasierten Plattenwerkstoff aus massivem Vollholz, Holzwerkstoffen, Papierfasermaterial oder sonstigen porösen Werkstoffen wie expandiertem Kunststoff bzw. Werkstoffkombinationen wie beispielsweise expandiertem WPC (Wood Polymer Composites) besteht, selber aus einem Werkstoff besteht, der eine hochwirksame Verklebung des Inserts im Plattenmaterial mit herkömmlichen Montageleimen (PVAC-Dispersionsklebstoffen) aufgrund seiner Benetzungsfähigkeit und Porosität zulässt.

Dabei kann der Leim entweder nur in die Ausnehmung (Sackloch-/Grund-Bohrung oder Sackloch-/Taschen-Fräsung), nur auf der Oberfläche des Inserts oder beidseitig mit geeigneten Düsen (Leimflasche oder Auftragsgerät, ggf. mit einer spez. Applikationskopfes in Form der Ausnehmung und Leimaustrittsdüsen in Richtung der Bauteildeckschichten) oder vollflächig (Leimpinsel, Rollen- oder Sprühauftrag) angegeben werden.

In einer besonderen Ausführung des Inserts ist es auch möglich, zunächst das Insert in die Ausnehmung des Plattenwerkstoffs zu positionieren und erst im Nachgang mittels geeigneter Düsen und leichtem Druck den Leim über einen oder mehrere Klebstoffkanäle im Inneren und topologisch direkt anschließende Klebstofffurchen auf der Oberfläche des Inserts oder ausschließlich über entsprechende Klebstofffurchen auf der Oberfläche des Inserts, die bis zur Stirnfläche reichen, in die Klebefugen zwischen Insert und Plattenwerkstoff zu applizieren.

In einer weiteren Variante der Erfindung kann ein aus beliebigem Material bestehendes Insert mittels andersartigen, möglicherweise ein-, zwei- und mehrkomponentigen Klebstoffen in den Plattenwerkstoffen verklebt werden. In einer besonderen Variante der Erfindung werden zweikomponentige Klebstoffsysteme eingesetzt, wobei die Ausnehmung mit der ersten Komponente (Harz) und das Insert mit der zweiten Komponente (Härter) benetzt wird, sodass der zur Klebstoffaushärtung notwendige Reaktionsprozess erst im Moment der unmittelbaren Relationierung von Plattenausnehmung und Insert, also erst im Moment des Fügeprozesses erfolgt. Selbstverständlich ist auch eine Benetzung der Ausnehmung mit der zweiten Komponente und eine Benetzung des Inserts mit der ersten Komponente möglich.

In einer weiteren Variante der Erfindung kann ein aus Kunststoff (polymeres Vollmaterial oder in sich verripptes Spritzgussbauteil aus Kunststoff oder der Abschnitt eines Strangpressprofiles aus Kunststoff) hergestelltes Insert durch Einleitung von Wärme und Druck oder Vibrationsenergie und Druck an seiner Grenzfläche zur Ausnehmung im Plattenwerkstoff aufgeschmolzen werden und durch einen sogenannten Mikroformschluss mit den Kavitäten der porösen Deckschichten verschweißt werden (Eindringen und Erkalten der durch "Fernfeld"-Energieeinleitung, also über mittelbare Distanz, temporär fließfähig gemachten, pastösen Kunststoffmassen an der Außenseite der Inserts). Auf prinzipiell dieselbe Art und Weise kann ein Mikroformschluss zwischen einem Insert aus einem beliebigen Werkstoff und einer aus Kunststoff bestehenden Oberflächenbeschichtung des Inserts, insb. einer sogenannten Pulverlackierung, einer Nasslackierung auf Basis thermoplastischer Polymere oder einer Beschichtung mit Schmelzklebstoffen oder sonstigen thermoplastischen Polymeren, mit dem Plattenwerkstoff verschweißt werden.

Ein essentieller Vorteil der dargelegten Erfindung gegenüber dem Stand der Technik ist die Tatsache, dass das Insert sowohl vor dem Einbringen in eine Ausnehmung des plattenförmigen Bauteils mit üblichen Maschinen und Werkzeugen der Holzverarbeitung spanend bearbeitet werden kann, als auch nach dem Einfügen in und dem Verkleben mit dem plattenförmigen Bauteil mit üblichen Maschinen und Werkzeugen der Holzverarbeitung spanend bearbeitet werden kann und außerdem insb. nach dem Einfügen in und dem Verkleben mit dem plattenförmigen Bauteil gemeinsam mit diesem, ohne jegliche Einschränkung in den herkömmlichen Prozessschritten mit üblichen Maschinen und Werkzeugen der Holzverarbeitung spanend bearbeitet werden kann.

Mit der Vielzahl der vorbeschriebenen Verarbeitungsmöglichkeiten der Inserts - isoliert, außerhalb eines plattenförmigen Bauteils oder isoliert, innerhalb eines plattenförmigen Bauteils, oder eben integriert, gemeinsam mit dem plattenförmigen Bauteil - ergibt sich die gegenüber dem Stand der Technik die vollkommen neuartige Chance, mit ein und demselben Grundsystem weitgehende Anforderungen zur zonalen Funktionalisierung von plattenförmigen Bauteilen aus Werkstoffen mit diskontinuierlichem Dichteverlauf, bis hin zu leichten, mehrlagigen Sandwichbauteilen mit leichten Kernschichten aus Werkstoffen geringer Materialdichte oder Leichtbaustrukturen mit mehr oder weniger geometrisch bestimmten Hohlräumen in der Verbundmittellage zu erfüllen.

In der Grundvariante besteht ein Insert aus einem monolithischen Werkstoff ohne jegliche Aufnahmelöcher, Hohlräume, Kanäle u. dgl. wie beispielsweise aus einem massivem Vollholzprofilabschnitt, Holzwerkstoffprofilabschnitt, Profilabschnitt aus Papierfasermaterial oder sonstigen porösen Werkstoffen bzw. Werkstoffkombinationen und wird in der der Ausnehmungstiefe entsprechenden Länge in der Ausnehmung des plattenförmigen Bauteils verleimt/verklebt. Somit sind beispielsweise bezogen auf die Anforderungen der Verbindungstechnik (feste Verbindungen wie lösbare Verbindungen) von plattenförmigen Bauteilen im Möbel- und Innenausbau von Mobilien und Immobilien im Verbindungspunkt zonal alle Anforderungen erfüllt, die den Einsatz nahezu aller herkömmlichen, gattungsgemäßen Verbindungsbeschläge für entsprechende Verbindungen klassischer Plattenwerkstoffe ermöglichen. Dies gilt insb. auch dann noch uneingeschränkt, wenn die Fugengestalt vom stumpfen Plattenstoß abweicht, also eine Fugengestalt auf Gehrung oder andere Profilierung erfolgen soll. Neben dem Einbau von Verbindungsbeschlägen aller Art können mittels der zonalen Funktionalisierung durch das Insert erstmals auch alle Arten der verleimten Bauteilverbindung mittels Verleimhilfen wie Holzdübeln, Winkeldübeln, Flachdübeln, Formfederholzplättchen, Federn, Winkelfedern oder auch mittels Verleimprofilen wie Kronenfräsungen u. dgl. zum Einsatz kommen. Und dabei löst ein zonal mit dem plattenförmigen Bauteil verbundenes Insert sowohl die Problematik der Aufnahme einer Verleimhilfe in der stirnseitigen Schmalfläche des einen Bauteils als erstes Fügeteil der winkel- oder T-förmigen Flächeneckverbindung, als auch die Aufnahme derselben Verleimhilfe im randnahen Bereich der Breitfläche des anderen zu verbindenden Bauteils als zweites Fügeteil derselben Verbindung.

In einer weiteren Ausführungsform des Inserts kann dasselbe bereits vor der Integration in das plattenförmige Bauteil mit einer Verleimhilfe, beispielsweise einem Dübel o. dgl. ausgestattet sein. In diesem Falle entfallen im Nachgang die plattenstirnseitige, spanende Bearbeitung zur Erzeugung eines Aufnahmeloches sowie der Fügeprozess zum Verkleben des Dübels im Insert selber.

In einer weiteren Ausführungsform des Inserts kann das Insert selber die Funktion einer Verleimhilfe übernehmen. In diesem Falle ist das Insert mit einem geeigneten Überstand in die Schmalfläche des einen Bauteils als erstes Fügeteil einer winkel- oder T-förmigen Flächeneckverbindung einzusetzen und in seinem vollen Querschnitt in die ebenfalls im Randbereich durch ein Insert zonal verstärkte Breitfläche des anderen zu verbindenden Bauteils als zweites Fügeteil derselben Verbindung einzubohren/einzufräsen und dort stoffschlüssig zu verleimen. Auf derartige Weise lassen sich mit einem Insert auch Längsverbindungen von plattenförmigen Bauteilen herstellen, wie dies beispielsweise bei Längsstößen von Arbeitsplatten eine übliche Anforderung sein kann. In diesem Fall übernehmen die Inserts, stirnseitig in beide Arbeitsplattenabschnitte eingebohrt/eingefräst sowohl die Funktion von Richtlamellen, als auch die Funktion von Verbindungsbeschlägen, die durch einfache Schrägverschraubungen mit den unteren Deckschichten von Arbeitsplatten im Sandwichaufbau Druck in Richtung der Querfuge ausüben können. Grundsätzlich kann das Insert selber in der unmittelbaren Plattenverbinderfunktion stirnseitig auch im Querschnitt reduziert sein, sodass es in Form und Dimension eines Zapfens, einer Feder oder auch einer ZABO-Verbindung (Gestellmöbelverbindung, bei der quadratische Fingerzapfenreihen mit einer gewissen Presspassung in gegenüberliegenden Bohrungsreihen verleimt werden) in die Breitfläche des anderen zu verbindenden Bauteils greift und dort stoff- und reibschlüssig verbunden wird.

In einer weiteren Ausführungsform des Inserts kann dasselbe auch mit einer in der Ebene liegenden Abwinkelung in einem beliebigen Winkel, vorzugweise in Winkeln folgender Winkelgrade > 0° ... 22,5° ... 30° ... 45° ... 60° ... 90° ... 120° ... 135° ... 150° ...< 180° gestaltet sein. Dies ermöglicht damit beispielsweise auch die Verbindung von Arbeitsplatten in stumpfen, rechtem und spitzen Winkeln.

In einer weiteren Ausführungsform des Inserts kann dasselbe auch mit einer räumlichen Abwinkelung in einem beliebigen Winkel, vorzugweise in Winkeln folgender Winkelgrade > 0° ... 22,5° ... 30° ... 45° ... 60° ... 90° ... 120° ... 135° ... 150° ...< 180° gestaltet sein. Diese Ausführungsform bedarf neben dem Einbringen stirnseitiger Ausnehmungen von Seiten der Plattenschmalflächen ggf. im Randbereich weitere Ausnehmungen auch von Seiten der Plattenbreitflächen, sofern die plattenförmigen Bauteile mit stumpfem Stoß u. dgl. und nicht auf Gehrung gefügt werden. Dabei können derartig abgewinkelte Inserts auch auf der Innenseite feste Verstrebungen zur Stabilisierung oder zum Anschluss von weiteren plattenförmigen Bauteilen oder Beschlägen aufweisen, so dass ein Insert als dreidimensionaler Verbinder fungiert. Auf der Außenseite ist der unmittelbare Anschluss von dekorativen Gestaltungselementen, Möbelfüßen o. dgl. möglich, die dann gemeinsam mit dem Insert in plattenförmigen Bauteilen fest verankert werden. Auch diese Ausführungsform bedarf neben dem Einbringen stirnseitiger Ausnehmungen von Seiten der Plattenschmalflächen ggf. im Randbereich weitere Ausnehmungen auch von Seiten der Plattenbereitflächen.

In einer weiteren Ausführungsform des Inserts können in ein Insert durch geeignete Bohrungen und oder Fräsungen, i.d.R. Sacklochbohrungen und Taschenfräsungen die senkrecht zu einer Breitfläche, einseitig oder zweiseitig, oder senkrecht zu einer Schmalfläche ausgeführt werden, auch nahezu alle herkömmlichen, gattungsgemäßen Verbindungsbeschläge in das Insert in topologisch definierter Lage integriert und gemeinsam mit diesem in der Ausnehmung des plattenförmigen Bauteils exakt positioniert und mittels Verleimung/Verklebung dauerhaft verankert werden, so dass zu Bedienung des Beschlages nur noch kleine Durchgangsbohrungen/-fräsungen durch eine Deckschicht notwendig sind, um den innenliegenden Verbindungsbeschlag zu bedienen (i.d.R. geht es hier um eine begrenzte Drehbewegung, die mit einem Schraubendreher oder Inbusschlüssel/Torx-Schlüssel ausgeführt wird). In dieser Ausführungsform des Inserts würden auch herkömmliche Verbindungsbeschlagsysteme für quasi-unsichtbare Bauteilverbindungen genutzt werden können.

In einer weiteren Ausführungsform des Inserts können in ein Insert durch geeignete Bohrungen und oder Fräsungen analog auch nahezu alle herkömmlichen sonstigen Beschläge wie beispielsweise Schrankaufhänger, Tablarträger, Bettbeschläge, Schnäpper, Anschlagpuffer oder Auswerfer (für die "Push to open"-Öffnungsfunktion von grifflosen Fronten) in das Insert in topologisch definierter Lage integriert und gemeinsam mit diesem in der Ausnehmung des plattenförmigen Bauteils exakt positioniert und verankert werden, was je nach Art der Funktionalisierung vor oder nach dem Beschichten der Bauteilschmalflächen erfolgen kann.

In einer weiteren Ausführungsform des Inserts können auch unterschiedliche Muffen, Gewindeeinsätze, Flachmuttern u. dgl. aus Kunststoff oder insb. Metall in geeignete Bohrungen und oder Fräsungen der vorbeschriebenen Art eingebracht werden, so dass sich durch den Einbau des Inserts punktuell der Schraubhalt der plattenförmigen Bauteile von der Plattenbreitfläche aus ganz wesentlich steigern und die Möglichkeit zur Verschraubung auf nahezu alle Gewindearten erweitern lässt.

Derartige Muffen, Gewindeeinsätze, Flachmuttern u. dgl. lassen sich auch in Richtung der Längsachse des Inserts in dasselbe durch geeignete Bohrungen und oder Fräsungen integrieren, so dass beispielsweise ein in die nach unten weisende Stirnfläche eines senkrecht angeordneten plattenförmigen Bauteils (eine Schrankseite, Regalwange u. dgl.) eingesetztes Insert einen Stellfuß mit Niveauausgleichsfunktion über ein Schraubgewinde oder etwa eine Möbelrolle aufnehmen kann. Dies gilt selbst dann, wenn das plattenförmige Bauteil recht dünn und damit der zu Verfügung stehende Bauraum sehr stark begrenzt ist.

Die vorbeschriebene Ausführungsform des Inserts kann auch zur stirnseitigen Anbindung eines plattenförmigen Bauteils mit einer oder mehreren Schmalflächen an das Bauwerk oder andere Teile des Innenausbaus eingesetzt werden, wobei mehrere linear angeordnete Inserts dann zunächst mit dem Bauwerk verbunden (verschraubt, verklebt u. dgl.) werden. Anschließend wird das plattenförmige Bauteil mit den entsprechend ausgeformten Ausnehmungen über die Inserts geschoben und an Ort und Stelle verleimt ggf. an verdeckter Stelle zusätzlich oder überhaupt nur verschraubt.

In einer weiteren Ausführungsform des Inserts können auch unterschiedliche Aufnahmegeometrien wie Hinterschnitte, Einschnitte für federnde Zungen, keilförmige Ausnehmungen o. dgl. in das Insert durch Bohr-, Fräs- und/oder sonstige Bearbeitung oder bei Urformung des Inserts als Spritzgussteil durch entsprechende Gestaltung der Spritzgussform eingebracht werden bzw. durch Einlegen von Fremdteilen realisiert werden, die später bei der Montage eines Produktes aus plattenförmigen Bauteilen eine vollkommen werkzeuglose Montage der Bauteile ermöglichen.

Die vorbeschriebenen Ausführungsformen des Inserts lassen sich in ihrem Komfort und der Handhabungssicherheit im Produktionsprozess noch wesentlich verbessern, wenn die vorgenannten Beschlagteile, Gewindeeinsätze o. dgl. durch schichtweisen Aufbau des Inserts oder Urformung des Inserts als Spritzgussteil vollständig umschlossen in das Innere des Inserts verliersicher eingebettet sind.

In einer weiteren Ausführungsform des Inserts kann dasselbe durch einen schichtweisen Aufbau auch eine oder mehrere besonders schraubfeste Schichten, beispielweise Schichten aus Metall (Stahl-, Aluminium-, Kupferblech, Lochblech, Streckmetall, Hohlprofile o. dgl.) aufweisen. Derartige Inserts können an den Stellen eines plattenförmigen Bauteils eingebracht werden, an denen prospektiv hohe Betriebskräfte die Verschraubung belasten werden, wie beispielweise die Befestigung eines Tischfußes an einer Tischplatte, oder die Befestigung eines Griffes an einer Klappbettfront oder zentrale Montagepositionen an Innenausbauteilen wie Wand-, Decken oder Bodenelementen u. dgl.

Ein großes Problem bei der Verarbeitung von Plattenwerkstoffen mit diskontinuierlichem Dichteverlauf, respektive leichten, mehrlagigen Sandwichbauteilen mit leichten Kernschichten aus Werkstoffen geringer Materialdichte oder Leichtbaustrukturen mit mehr oder weniger geometrisch bestimmten Hohlräumen in der Verbundmittellage zu plattenförmigen Möbel- und Innenausbauteilen ist die zumindest im Eckbereich häufig mangelnde Druckfestigkeit. Insbesondere bei Leichtbauplatten mit Kernschichten aus Kunststoffschäumen, zum Einsatz kommen insb. beim Ausbau in der Caravan-Industrie nicht selten expandierte, geschlossen-, gemischt- und vor allem offenzellige Polystyrol-, Polyurethan- oder Polypropylenschäume, mit geringer Dichte und damit einhergehend auch geringer Stauchhärte, ferner auch ungünstigem Rückstellvermögen nach Druckbelastung, kann es bei manuellen und insb. bei maschinellen Bearbeitungsschritten, hier insb. bei der Schmalflächenbeschichtung in entsprechenden Durchlaufanlagen durch die Fördereinrichtungen zu senkrecht auf die Breitflächen des plattenförmigen Bauteils wirkenden Druckbelastungen kommen, die die Bauteile dann zumindest in den Eckbereich verformen. Da die Bauteile dann im leicht komprimierten Zustand bearbeitet werden, also mit der Schmalflächenbeschichtung verklebt und über Tastaggregate beigefräst, mit der Ziehklinge nachgeformt und ggf. geschwabbelt sowie an den Ecken kupiert werden, kommt es nach der Entlastung zum unmittelbaren Rückstellen der Kernschichten, was im Ergebnis zu unbrauchbaren Schmalflächenbeschichtungsergebnissen führt. Hier kann das vorherige Bestücken des plattenförmigen Bauteils mit Inserts in ihrer einfachen Grundform unter 90° oder in Ausnehmungen, die im 45°-Winkel über Eck gleichermaßen in zwei Schmalflächen des Bauteils eingreifen zur entscheidenden Erhöhung der Druckfestigkeit in den Eckbereichen beitragen.

Gleichzeitig stützen derart eingesetzte Inserts, die spätestens im Fügeprozess vor der Schmalflächenbeschichtung bündig mit der Kontur des plattenförmigen Bauteils gefräst werden, die Schmalflächenbeschichtung (das Kantenmaterial) selber gegen senkrecht auf die Schmalfläche wirkende Kräfte im weiteren Verarbeitungsprozess der Montage, dem Transport und der späteren Produktnutzung. Insb. bei längeren Schmalflächen von Bauteilen aus Leichtbauplatten, die ohne Stützkantentechnik o. dgl. direkt mit einem Dekorkantenband beschichtet werden sollen, können in gewissem Abstand gesetzte Inserts die plattenförmigen Bauteile im Randbereich, sowie das Kantenband entscheidend versteifen.

Ein weiteres Problem bei der Verarbeitung von Plattenwerkstoffen mit diskontinuierlichem Dichteverlauf, respektive leichten, mehrlagigen Sandwichbauteilen mit leichten Kernschichten aus Werkstoffen geringer Materialdichte oder Leichtbaustrukturen mit mehr oder weniger geometrisch bestimmten Hohlräumen in der Verbundmittellage zu plattenförmigen Möbel- und Innenausbauteilen ist die Tatsache, dass die geübte Verbindungstechnik des Einnutens von flachen Bauteilen wie beispielsweise Möbelrückwänden, Schubkastenböden, oder auch Verbindungsfedern oder sich mehr oder weniger linear erstreckenden Beschlägen wie Schiebtürprofilen, Rollladenprofilen, Lochreihenschienen, Staubdichtungen o. dgl. nicht oder nur eingeschränkt anwendbar ist, da einerseits der Nutgrund in der vergleichsweise weichen Kernschicht zu stark nachgibt, um beispielsweise eine Möbelkorpusaussteifung über die Rückwand erzielen zu können, und andererseits die hinter dem Nutrücken verbleibenden schmalen Deckschichtstreifen keine ausreichende Abstützung, häufig auch gar keinen Halt durch die Kernschicht erfahren. Hier kann das vorherige Bestücken des plattenförmigen Bauteils mit Inserts in ihrer einfachen Grundform in Ausnehmungen, die im Bereich der später einzufräsenden Nut liegen, zur entscheidenden Erhöhung der Druck- und Verbundfestigkeit in den Randzonen beitragen.

Ebenso lassen sich Kanten von Ausschnitten, wie diese zum Einbau von Spülen oder Kochfeldern in Arbeitsplatten notwendig sind, im Randbereich im Rahmen des Montageprozesses durch das Einbringen von Inserts verstärken, insb. an den Stellen eines Ausschnitts, die zur Klemm- oder Schraubbefestigung des Einbauteils dienen sollen.

Über die Aspekte der grundständigen Befestigungs-, Verbindungs- und Montagetechnik hinaus, die alle mehr oder weniger durch eine partielle Materialanhäufung mittels massivem Insert zu lösen sind, also die Funktion der mechanischen Versteifung erfüllen, können in weiteren Ausführungsformen des Inserts dieselben auch zur funktionserweiternden zonalen Qualifizierung eines plattenförmigen Bauteils im Randbereich beitragen. So kann beispielweise in ein Insert vor dem Einbau ein Magnet integriert werden, der später vollkommen unsichtbar die Zuhaltung einer Drehtür ermöglicht; dasselbe gilt für entsprechende Beschläge zur "Kindersicherung" von Möbelfronten wie Türen oder Schubkästen, die nur durch das Positionieren eines Magneten an exakter Position auf der Außenseite der plattenförmigen Frontbauteile zu öffnen sind.

In einer weiteren Ausführungsform des Inserts können vor dem Einbau RFID-Chips (Radio-Frequency-Identification, also die Identifizierung mit Hilfe elektromagnetischer Wellen) integriert werden, die beispielsweise im Rahmen des Montageprozesses oder auch später in der bestimmungsgemäßen Benutzung des Möbels oder des Innenausbaus Assistenzfunktionen durch eine offene oder verdeckte Kommunikation mittels geeigneter Soft- und Hardware auf entsprechenden Eingabegeräten, bspw. mit Touchscreen-Funktion verfügen.

In einer weiteren Ausführungsform des Inserts können vor dem Einbau Schnittstellen (Steckerbuchsen) für strom- oder datenleitende Kabel integriert werden, sodass das plattenförmige Möbel- oder Innenausbauteil selber in seinem Inneren, vollkommen verborgen die Spannungen und/oder Signale weiterleiten kann. Dasselbe gilt prinzipiell für luft-, wasser-, öl- oder sonstige gase- und fluideführende Leitungen, also Rohre, Schläuche o. dgl. Auch hier können Inserts vor dem Einbau in plattenförmige Bauteile mit entsprechenden Schnittstellen ausgestattet werden. Für ein durch ein plattenförmiges Bauteil geführtes Kabel können die Eintritts- und Austrittsstellen des Kabels an den Schmalflächen oder im Randbereich der Breitflächen mit Zugentlastungen ausgestattet sein.

In einer weiteren Ausführungsform des Inserts können vor dem Einbau des Inserts in die plattenförmigen Bauteile auch starre oder bewegliche Beschlagteile zur Weiterleitung von mechanischer Energie, zumindest die Lagerpunkte oder Führungen für Gelenke und Hebel integriert werden. Diese Anordnung könnte beispielsweise zu einer weitgehend unsichtbar eingebauten Klappenbremse für horizontal nach unten zu öffnende Möbelklappen, oder einem weitgehend unsichtbar eingebauten Hochstellbeschlag für nach oben zu öffnende Möbelklappen führen. Außerdem ließen sich beispielsweise Dreh-, oder Schubstangenschlösser auf diese Art und Weise komplett durch das Innere eines plattenförmigen Frontbauteils führen. Selbstverständlich können auch Möbelschlösser u. dgl. auf diese Art und Weise in einem plattenförmigen Bauteil integriert werden.

In einer weiteren Ausführungsform des Inserts können vor dem Einbau Sensoren, kleinformatige Netzteile, Speicherbausteine, Induktionsladestationen, sonstige berührungslose Schalt- oder Messelemente u. dgl., also punktuelle bzw. regional eng begrenzte Funktionselemente, auch Beleuchtungselemente in ein oder mehrere Inserts integriert werden und mit diesem/diesen in die Kernschicht von plattenförmigen Bauteilen eingebracht und dort fest verankert werden.

In einer weiteren Ausführungsform des Inserts kann dasselbe einen strom- bzw. signalleitenden Werkstoff (wie beispielsweise einen metallischen Werkstoff) umfassen, aus einem strom- bzw. signalleitenden Werkstoff hergestellt oder mit einer leitenden Oberflächenbeschichtung versehen sein, so dass Energie oder Signale, die in das Insert von außen (von der Außenseite des plattenförmigen Bauteils) oder von innen (aus dem Bereich der Kernschicht) durch eine lösbare oder feste Verbindung oder per Induktion eingeleitet werden, an eine oder beide Deckschichten oder die angrenzende Schmalflächenbeschichtung weitergeleitet werden können. Zur Erfüllung dieses Zweckes kann das Insert schichtweise aufgebaut sein, oder zumindest eine nichtleitende Schicht in seinem Aufbau besitzen, wobei eine solche Isolationsschicht nicht zwangsläufig parallel waagerecht oder parallel senkrecht verlaufen muss, sondern an zweckmäßiger Stelle jedweden Verlauf nehmen kann. Ebenso kann das Insert zumindest in Teilen mit einer isolierenden Oberfläche ausgestattet, um Energie oder Signale gezielt nur in eine Richtung, entweder durch direkten Kontakt oder über leitende Verbinder, weiterzugeben.

In einer weiteren Ausführungsform des Inserts kann dasselbe auch aus einem mehr oder weniger elastischen Material (Kautschuk, Silikon o. dgl.) hergestellt sein oder zumindest ein solches umfassen, um beispielsweise bei Bauwerksanbindungen eine Entkoppelungsfunktion für Körperschallwellen zu übernehmen (vgl. Anschluss einer Treppenkonstruktion an ein Bauwerk), oder um bei besonderer Betriebsbelastung für eine mechanische Dämpfung zu sorgen (vgl. Konstruktion eines Sportbodens), oder bei der Verbindung mit anderen Bauteilen hohe Toleranzen aufzunehmen (vgl. sog. "Shock Mounts" bei der Verbindung von Sitzschale und Gestell im Stuhlbau). Zu diesem Zwecke kann wie bereits grundsätzlich vorstehend beschrieben die Integration von Schraubgewinden oder sonstigen Einlagen oder Anschluss-/Aufnahmestücken aus Metall oder Kunststoff in das elastische Insert sinnvoll sein. Ein derartiges Insert kann auch mehrlagig gestaltet sein, sodass im Außenbereich gut klebbare Deckschichten das Insert begrenzen, im Innenbereich aber ein elastischer Werkstoff als Schicht oder Formteil die Mittellage bildet.

In einer weiteren Ausführungsform des Inserts kann dasselbe auch aus einer formhaltenden, aber flexiblen Hülle bestehen oder eine derartige Hülle umfassen, die beispielsweise mit einem niedrigviskosen Stoffgemisch (reaktives Polymer, kunststoffvergüteter Mörtel o. dgl.) gefüllt ist, um bei Montageprozessen zunächst große bis sehr große Toleranzen aufnehmen zu können (beispielsweise beim Bauwerksanschluss von Innenausbauteilen), dann aber nach Ablauf der chemischen Reaktion des Gemisches bzw. nach dessen physikalischem Aushärten, die Bauteile in fest fixierter Lageposition dauerhaft zueinander zu fixieren.

In einer weiteren Ausführungsform des Inserts kann dasselbe auch aus einem schwer entflammbaren oder nicht brennbaren Werkstoff (beispielsweise ein keramischer Werkstoff, o. dgl.) hergestellt sein, oder mit einer schwer entflammbaren oder nicht brennbaren Oberflächenbeschichtung versehen sein, um beispielsweise Anforderungen des Innenausbaus, insb. des Innenausbaus von Mobilien zu genügen.

In einer weiteren Ausführungsform des Inserts kann dasselbe auch aus einem unter Normalbedingungen (bspw. Raumtemperatur bzw. Holz-Normalklima nach DIN 50014 bei 20° C und 65 % relativer Luftfeuchte) festen, stabilen Werkstoff hergestellt sein, der bei gezielter äußerer Einwirkung (Anlegen von Spannung, Wärmezufuhr von außen o. dgl.) erweicht, und somit die Demontage eines Produktes nach Ablauf seiner Nutzungsphase wesentlich vereinfacht. Dabei erfolgt die Trennung nicht zwangsläufig exakt in den Verbindungspunkten der plattenförmigen Bauteile, sondern an der Schnittstelle zwischen Ausnehmung und Insert bzw. im Insert selber.

In weiteren Ausführungsformen des Inserts kann dasselbe aus jedwedem Werkstoff und in jedwedem Aufbau und Zusammensetzung aus verschiedenen Teilen sowie mit jedweder Oberflächenbeschichtung hergestellt sein, sofern es in seiner Geometrie, den Verfahren zur Einbringung entspricht und in seiner Bestimmung zur zonalen Funktionalisierung einer Platte/eines plattenförmigen Bauteils in ihrem Randbereich beiträgt.

Zum Verfahren der Herstellung der Ausnehmung, des Einbringens des Inserts und des stoffschlüssigen Fügens von plattenförmigem Bauteil und Insert im Bereich der Ausnehmung:
Das Herstellen der punktuellen, kreisförmigen oder regionalen Ausnehmungen in gestreckter Querschnittsform eines Ovals oder eine aus auf einer horizontalen oder vertikalen Linie liegenden Kreisen zusammengesetzte Kontur oder aus auf einer horizontalen oder vertikalen Linie liegen Ovalen zusammengesetzte Kontur kann grundsätzlich mit handwerksüblichen Handmaschinen von der Seite einer Schmalfläche aus oder über Eck von der Kante zwischen zwei Schmalflächen aus in einem beliebigen Winkel, jedoch vorzugsweise unter 90° bzw. über Eck unter 45° in das plattenförmige Bauteil eingebracht werden. Dabei erfolgt der spanende Eingriff in die Kernschicht bzw. die Kernschicht und eine Deckschicht oder die Kernschicht und beide Deckschichten für ein Insert in seiner Grundform stets so, dass das plattenförmige Bauteil auf den Breitflächen vollflächig geschlossen bleibt.

Die Herstellung von punktuellen, kreisförmigen Ausnehmungen kann durch Bohren mit einem Bohrer oder Fräsen mit einem Schaftfräser und einen rein axialen Vorschub des Bohr- oder Fräswerkzeuges in fester räumlicher Relation von Handmaschine und Bauteil an beliebiger Stelle der Schmalfläche des plattenförmigen Bauteils erfolgen. Die Tiefe der Ausnehmung wird durch die Eindringtiefe des Werkzeugs in das Bauteil festgelegt. Zur Herstellung derartiger Ausnehmungen können Handgeräte in Form handelsüblicher Bohrmaschinen oder handelsüblicher Oberfräsmaschinen mit entsprechenden Hilfseinrichtungen oder spezielle Handgeräte in Form von Horizontalbohrmaschinen zum Einsatz kommen.

Bei Konturen, die aus mehreren kreisförmigen Ausnehmungen zusammengesetzt sind, können mehrere Bohrungen durch mehrere parallel angeordnete Werkzeuge gleichzeitig bei einem einzigen axialen Vorschub der Werkzeuge in fester räumlicher Relation von Handmaschine und Bauteil und/oder durch mindestens einen zweiten Bearbeitungsvorgang wie vor beschrieben nach Veränderung der räumlichen Relation von Handmaschine und Bauteil - also seitliches Versetzen der Handmaschine und erneute räumliche Kopplung von Handmaschine und Bauteil - erfolgen. Hier sollten einfache Schablonen oder Anschläge zum Einsatz kommen, die beim seitlichen Versetzen des Handgerätes die aufeinanderfolgenden Bohrvorgänge exakt zueinander positionieren. Zur Herstellung derartiger Ausnehmungen können grundsätzlich Handgeräte in Form handelsüblicher Bohrmaschinen oder handelsüblicher Oberfräsmaschinen mit entsprechenden Hilfseinrichtungen zum Einsatz kommen, vorzugsweise jedoch spezielle Handgeräte in Form Horizontalbohrmaschinen nach Möglichkeit mit mehreren, mind. zwei Bohrspindeln, die in einem definierten seitlichen Abstand gekoppelt sind.

Die Herstellung von regionalen, gestreckten Ausnehmungen in Ovalform (gleich welcher Breite) kann durch Fräsen mit einem Schaftfräser bei axialem Vorschub des Fräswerkzeuges und seitlichem Vorschub des Handgerätes entlang der Schmalfläche des plattenförmigen Bauteils erfolgen. Hier sollten einfache Schablonen oder Anschläge zum Einsatz kommen, die das seitliche Verschieben des Handgerätes entlang der Schmalfläche exakt begrenzen. Zur Herstellung derartiger Ausnehmungen können grundsätzlich Handgeräte in Form handelsüblicher Oberfräsmaschinen mit entsprechenden Hilfseinrichtungen zum Einsatz kommen, wobei größere Gerätebauformen mit besonders langem axialem Vorschubweg und Aufnahmefuttern für Schaftfräser stabiler Ausführung zu bevorzugen sind.

Bei Konturen, die aus mehreren ovalförmigen Ausnehmungen zusammengesetzt sind, können mehrere Fräsungen durch mehrere parallel angeordnete Schaftfräser gleichzeitig bei einem einzigen axialen Vorschub der Werkzeuge und seitlichem Vorschub des Handgerätes entlang der Schmalfläche des plattenförmigen Bauteils und/oder durch mindestens einen zweiten Bearbeitungsvorgang wie vor beschrieben nach Veränderung der räumlichen Relation von Handmaschine und Bauteil - also seitliches Versetzen der Handmaschine und erneutes axiales Eintauchen und seitliches Verschieben des Handgerätes entlang der Schmalfläche bzw. senkrechtes Versetzen der Handmaschine und erneutes axiales Eintauchen und seitliches Verschieben Handgerätes entlang der Schmalfläche - erfolgen. Hier sollten einfache Schablonen oder Anschläge zum Einsatz kommen, die einerseits das seitliche Verschieben des Handgerätes entlang der Schmalfläche exakt begrenzen und die andererseits die beim seitlichen und/oder senkrechten Versetzen des Handgerätes aufeinanderfolgenden Fräsvorgänge exakt zueinander positionieren. Zur Herstellung derartiger Ausnehmungen können grundsätzlich Handgeräte in Form handelsüblicher Oberfräsmaschinen mit entsprechenden Hilfseinrichtungen zum Einsatz kommen, wobei größere Gerätebauformen mit besonders langem axialen Vorschubweg und Aufnahmefuttern für Schaftfräser stabiler Ausführung zu bevorzugen sind.

Bei einer besonderen Ausführung eines handelsüblichen Handgerätes (Horizontalfräse mit Pendelbewegung des Schaftfräsers) ist es möglich bei einem einzigen axialen Vorschub des Fräswerkzeuges in fester räumlicher Kopplung von Handgerät und Bauteil eine waagerechte, exakt ovalförmige Ausnehmung voreingestellter Breite herzustellen. Dies wird dadurch erreicht, dass ein rotierender Schaftfräser beim axialen Vorschub in Werkstückrichtung mithilfe eines Pendelgetriebes gleichzeitig und kontinuierlich eine definiert breite, seitliche Schenkbewegung ausführt. Derart entstehen in Lage und Dimension exakt ausgeführte Langlochfräsungen, die als Ausnehmungen für das Insert im erfindungsgemäßen Insert-System dienen können (DE 103 14 087 B3 offenbart ein derartiges Handgerät). Dieses Handgerät wäre vom Grundsatz her allen anderen Handgeräten zur Herstellung von ovalen Ausnehmungen vorzuziehen, sofern das Aufnahmefutter und die speziellen Schaftfräser in ihrem Durchmesser der gewünschten Höhe der ovalen Ausnehmung entsprechen.

Alle vorbeschriebenen Grundarten von kreis- und ovalförmigen Ausnehmungen, sei es in einfacher Form oder in aus Formwiederholungen zusammengesetzter Kontur, lassen sich mit großer Exaktheit und hoher Wiederholgenauigkeit auf handelsüblichen Stationärmaschinen in Form von im Handwerk weit verbreiteten Langlochbohr- und Langlochfräsmaschinen herstellen. Diese Maschinen verfügen i.d.R. über ein solides Maschinengestell und eine drauf gelagerte, feststehende Bohr- und Frässpindel mit universellem Aufnahmefutter sowie einen vor der Spindel in seiner Höhe fest einzustellenden und in der Tiefe senkrecht zum Werkzeug und in der Breite seitlich zum Werkzeug verschiebbar gelagerten und mit entsprechenden Anschlägen ausgestatteten Werkstückaufnahmetisch mit Werkstückspanneinrichtung und Bedienhebel für die voreingestellte Verfahrbewegung. Ebenso kann auch der Werkstückaufnahmetisch als starres Maschinenelement und die Spindel entsprechend beweglich ausgeführt sein. Große Werkstückaufnahmetische und lange Verfahrbewegungen sind zur rationellen Bearbeitung großformatiger plattenförmiger Bauteile vorteilhaft, um ein mehrfaches Aufspannen des Bauteils bei der Bearbeitung entlang einer Bauteilschmalfläche möglichst zu vermeiden. Das Einbringen von mehrseitig i.d.R. vierseitig am Bauteil angeordneten Ausnehmungen, sei es in Form von kreisrunden Bohrungen oder in Form von ovalen Langlöchern bedingt immer ein mehrmaliges Aufspannen des Bauteils auf dem Werkstückaufnahmetisch. Als Werkzeuge können hier Bohrer bzw. Schaftfräser oder sog. Bohrfräser zum Einsatz kommen. Aufgrund der stabilen Bauart und i.d.R. großen Weite der Aufnahmefutter können in derartigen Stationärmaschinen Bohr- und Fräswerkzeuge mit großen Durchmessern und großer Länge eingesetzt werden, was die Möglichkeit zur Herstellung von im Querschnitt größer dimensionierter Ausnehmungen mit gleichzeitig größerer Tiefe impliziert.

Alle vorbeschriebenen Grundarten von kreis- und ovalförmigen Ausnehmungen, sei es in einfacher Form oder in aus Formwiederholungen zusammengesetzter Kontur, lassen sich mit großer Exaktheit, hoher Wiederholgenauigkeit und gleichfalls großer Geschwindigkeit besonders rationell auf handelsüblichen CNC-gesteuerten (Computerized Numerical Control, also über eine zunächst erstellte Programmierung digital gesteuerte) Werkzeugmaschinen in Form von in Teilen des Handwerks und in der Industrie weit verbreiteten Bearbeitungszentren oder Bohr- und Fräsautomaten sowohl in begrenzter als auch in großer Stückzahl herstellen.

Dabei ist es aufgrund der Werkzeugsteuerung mit diesen Maschinen auch möglich Ausnehmungen mit anderer von den vorbeschriebenen Grundarten der kreis- und ovalförmigen Ausnehmungen abweichenden Querschnittsformen herzustellen, wie Ellipsen, oder an den Innenecken gerundete Rechtecke, Rauten, Parallelogramme, Dreiecke sowie sonstige geometrisch geformte Ausnehmung exakter Lage und Dimensionen.

Vorteilhaft sind je nach Bauart der Maschine oder Anlage zur Bohr- oder Fräsbearbeitung sog. Winkelaggregate, die üblicherweise für Schlosskastenausfräsungen in Türblättern eingesetzt werden, da mit ihnen die Bearbeitung der i.d.R. flächig auf dem Maschinentisch aufgespannten plattenförmigen Bauteile in den Schmalflächen mit einer großen Eindringtiefe des Schaftfräswerkzeugs möglich ist. Ein weiterer kostenerheblicher Vorteil ist die Möglichkeit der vierseitigen Bearbeitung aller Schmalflächen von plattenförmigen Bauteilen in einer einzigen Aufspannung auf dem Maschinentisch.

Über die stationäre Bohr- und/oder Fräsbearbeitung auf einer Maschine oder Anlage des vorbeschriebenen Typs hinaus können derartige Ausnehmungen in plattenförmigen Bauteilen der vorbeschriebenen Querschnittsformen in Großserie auch durch mitgeführte Aggregate in Durchlaufanlagen kostengünstig hergestellt werden.

Die Vielzahl der alternativen Wege zur Herstellung von Ausnehmungen für Inserts in plattenförmigen Bauteilen und der dargelegte, dabei mögliche Einsatz von Handgeräten und stationären Handwerksmaschinen sowie der stationären Bearbeitung bzw. Bearbeitung im Durchlauf auf Industrieanlagen zeigt eine besondere Stärke der vorliegenden Erfindung auf: Seitens der maschinellen Bearbeitungstechnik lässt sich die Herstellung der notwendigen Ausnehmungen auf allen Ebenen der Verarbeitung von plattenförmigen Bauteilen - vom Einzelteil bis zur Großserie - problemlos in die Fertigung integrieren.

In einer besonderen Art der Ausführung des Inserts und der Ausnehmung kann ein in der Querschnittsform langgestrecktes, also von der reinen Kreisform abweichendes, beispielsweise ovalförmiges Insert auf seinen Breitflächen leichte Profilierungen (leichte Rillungen, negativ ins Insert eingebracht, oder leicht erhaben, positiv über die Oberflächen überstehend) erhalten, sofern die Ausnehmung im plattenförmigen Bauteil die exakte Gegenform aufweist. In diesem Falle greift ein entsprechend profilierter, rotierender Schaftfräser mit einer ausschließlich axialen Vorwärtsbewegung am Rand einer Ausnehmung bis zum Ausnehmungsgrund von der Schmalfläche aus in das plattenförmige Bauteil, verfährt dann ausschließlich seitlich bis zum anderen Rand der Ausnehmung und an dieser seitlichen Endposition dann wieder ausschließlich axial zurück. Dadurch ergibt sich eine Ausnehmung, die an beiden Seiten jeweils aus glatten Hohlzylindern gebildet wird, welche im maximalen Flugkreis der Fräsmesser des Schaftfräsers ausgenommen sind. Im dazwischenliegenden Bereich, der oben wie unten parallel zu den Deckschichten liegt, erfolgt jedoch eine Profilierung entsprechend der Geometrie der seitlichen Schneiden des Schaftfräsers. Unter den Voraussetzungen, dass das Insert das Gegenprofil aufweist und sich der Werkstoff des plattenförmigen Bauteils zumindest im Bereich der Ausnehmung senkrecht leicht federnd, also in engen Grenzen flexibel dehnbar und rückfedernd, verhält, kann derart ein Insert unter leichter Vorspannung formschlüssig in eine Ausnehmung eingesetzt werden. Dies ermöglicht das klebstofflose Fixieren von Inserts oder auch eine spätere Verklebung über Kanäle oder auch sonstige Energiezufuhr.

In einer weiteren, besonderen Art der Ausführung des Inserts und der Ausnehmung kann ein oder können beide Fügepartner auf den Breitflächen der Verbindung eine parallel zur seitlichen Fräserbewegung angeordnete Schuppung in Form von einer oder mehreren hintereinander angeordneten leichten Schrägen, in Fügerichtung ansteigend, aufweisen. Dies erleichtert einerseits den folgenden Fügevorgang des Inserts in die Ausnehmung (das Insert dehnt das plattenförmige Bauteil bei der axialen Fügebewegung automatisch und nur exakt so weit wie notwendig), führt ebenfalls zu einer Verrastung von Insert und Ausnehmung und ist außerdem geeignet bei einer stoffschlüssigen Verbindung, die vollständige Verdrängung des in die Ausnehmung angegebenen Klebstoffs durch das Insert bei der axialen Fügebewegung zu verhindern. Letztes führt im Ergebnis zu einer besseren Festigkeit der verleimten/verklebten Verbindung.

In einer weiteren, besonderen Art der Ausführung des Inserts und der Ausnehmung kann ein oder können beide Fügepartner auf den Breitflächen der Verbindung eine parallel zur seitlichen Fräserbewegung angeordnete negative Konturierung (also jeweils in das Material eingebrachte Profilierungen wie leichte Rillungen) aufweisen. Dies reduziert zwar minimal die für die Verbundfestigkeit wichtige Leim-/Klebfläche im Bereich der Profilierung der Breitflächen, sorgt aber für eine gleichmäßigere Verteilung von Leim-/Klebstoff im Bereich der Breitflächen. Durch eine derartige Profilierung kann das Insert bei der axialen Fügebewegung den Klebstoff nicht vollständig an den Grund der Ausnehmung verdrängen, da in der Endposition eine oder mehrere Rillungen von Insert und Ausnehmung exakt aufeinanderliegen, sodass in der so geschaffenen Kavität Klebstoff (ein Klebstoffwulst) aushärten sich so mechanisch in beiden Fügepartnern verankern kann.

Diese Funktion der gezielten Leim-/Klebstoffanhäufung auf den Breitflächen der Fuge zwischen Insert und Deckschichten im Bereich der Ausnehmung wird auch dann schon erfüllt, wenn ausschließlich die Ausnehmung die vorbeschriebene negative Profilierung erhält, das Insert aber auf seiner Oberfläche unprofiliert, also glatt ausgeführt ist und umgekehrt.

Die ausschließliche Profilierung der Breitflächen der Ausnehmung ist auch dann besonders vorteilhaft, wenn der Stoffschluss bzw. Mikroformschluss zwischen Insert und Ausnehmung durch Einleitung von Wärme und Druck oder Vibrationsenergie und Druck erfolgen soll. In diesem Falle ist wie weiter oben beschrieben das Insert zumindest an seiner Oberfläche so beschaffen, dass es an den Grenzflächen zur Ausnehmung im plattenförmigen Bauteil aufgeschmolzen werden kann und somit zumindest mit den Breitflächen der Ausnehmung verschweißt wird. Die Profilierung der Ausnehmung sorgt auch hier für Kavitäten, die mit ausgeschmolzenem Material gefüllt für eine besonders wirkungsvolle mechanische Verankerung sorgen.

Die ausschließliche Profilierung der Breitflächen der Ausnehmung oder des Inserts sind auch dann besonders vorteilhaft, wenn die Verklebung mittels Schmelzklebstoff erfolgen soll, der Klebstoffauftrag jedoch zeitlich getrennt, also vorgelagert vor dem späteren Fügevorgang durch erneute Wärmezufuhr und Druck von außen erfolgt. In diesem Falle dient die Profilierung als Schmelzklebstoffreservoir.

Eine leichte Profilierung beider Fügepartner, also der Ausnehmung und des Inserts auf ihren Breitflächen muss nicht parallel verlaufen, sondern kann auch rechtwinkelig oder in anderen Winkeln oder gar in unterschiedlichen Konturen ausgeführt sein, um beim Einsatz von Leimen/Klebstoffen oder Schmelzklebstoffen, bspw. niedrigviskoser Leime/Klebstoffe oder Schmelzklebstoffe für eine gezielte Gestaltung der Klebfuge mit ausreichenden Hinterschnitten und einer definierten Klebfugenstärke zu sorgen.

Profilierungen der vorgenannten Art sind besonders dann vorteilhaft, wenn das Insert vor der Leim-/Klebstoffangabe in Endposition in die Ausnehmung verbracht wird und daher mit innen verlaufenden Leim-/Klebstoffkanälen ausgestattet ist, die den Leim-/Klebstoff von der freiliegenden, äußeren Stirnfläche des Inserts in die Klebfugen transportieren. Voraussetzung ist, dass der Klebstoff in diesem Fall mit gewissem Druck über eine Düse appliziert wird.

Dabei kann die Leim-/Klebstoffangabe auch dann von außen, oder über vorgenannte Kanäle oder oberflächliche Furchen erfolgen, wenn das Insert bereits zu einem gewissen Anteil seiner Länge in die Ausnehmung verbracht ist. Nach der Leim-/Klebstoffangabe erfolgt dann eine weitere axiale Fügebewegung des Inserts in seine Endposition in der Ausnehmung des plattenförmigen Bauteils, wobei diese zweite Fügebewegung auch gleichzeitig der Leim-/Klebstoffverteilung dienen kann. Dabei sind Profilierungen von Insert oder Ausnehmung der vorgenannten Art hilfreich, um den Leim-/Klebstoff zu transportieren und ihn definiert auf der Oberfläche des Fügepartners zu verteilen.

Grundsätzlich kann die Leim- oder Klebstoffangabe manuell oder vollständig automatisiert erfolgen, angepasst an die Fertigungsprozesse vom handwerklich gefertigten Einzelteil bis zur industriellen Großserie. Dabei kann der Klebstoff- oder Leimauftrag einseitig an den Flächen der Ausnehmung oder auf den Flächen des Inserts oder beidseitig sowohl an den Flächen der Ausnehmung und auf den Flächen des Inserts erfolgen oder durch Kanäle und/oder Furchen im Insert oder auf dessen Oberflächen von Einspritzöffnungen auf der offen liegenden Stirnfläche des Inserts bis zu den Klebefugen zwischen Breitflächen des Inserts und den Innenseiten der Deckschichten des plattenförmigen Bauteils mit gewissem Druck appliziert werden. Dabei können etablierte Auftragsverfahren in Handwerk und Industrie zum Einsatz kommen oder spezielle Verfahrensmodifikationen und/oder Applikationswerkzeuge. So ist es besonders vorteilhaft bei einem punktuellen, raupenförmigen, regionalen oder vollflächigen Leim-/Klebstoffauftrag für die Benetzung von Ausnehmung und/oder Insert spezielle Applikationsköpfe einzusetzen, die in ihrer Bauform die Ausnehmung mehr oder weniger vollständig ausfüllen, über geeignete Leim-/ Klebstoffaustrittspunkte verfügen und mit einer abgestimmte axiale Ein- und Ausfuhrbewegung in die Ausnehmung hinein und wieder heraus bewegt werden bzw. die das Insert vollständig oder teilweise umschließen, ebenfalls über geeignete Leim-/Klebstoffaustrittspunkte verfügen und mit einer abgestimmten Schließ- und Öffnungsbewegung den Leim-/Klebstoff in einer kurzen Zeitspanne, definiert und wiederholgenau applizieren.

In einer besonderen Variante der Verleimung/Verklebung von Insert und Plattenausnehmung kann die Leim-/Klebstoffangabe auch durch eine oder mehrere kleine Öffnungen einer oder beider Breitflächen des plattenförmigen Bauteils im Bereich der Ausnehmung oder in nah benachbarter Position erfolgen. Desgleichen kann die Leim-/ Klebstoffangabe auch durch eine oder mehrere kleine Öffnungen der Schmalfläche des plattenförmigen Bauteils rechts oder links oder an beiden Seiten in nah benachbarter Position zur Ausnehmung erfolgen. Beim Herstellen einer stoffschlüssigen Verbindung zwischen Insert und noch nicht mit Kantenband belegten Schmalfläche eines plattenförmigen Bauteils kann die Klebstoffangabe auch seitlich des Inserts mit länglichen Düsen erfolgen, die bei der Applikation die Kernschicht verdrängen bzw. temporär zur Seite drängen.

Dabei ist der Fügeprozess nicht von der Reaktionsphase bzw. Aushärtungsphase des Leims/Klebstoffs zu trennen, die i.d.R. durch eine zeitlich befristete Druckbeaufschlagung des plattenförmigen Bauteils und nicht selten eine Wärmezufuhr zur Verkürzung des Prozesses gekennzeichnet ist. In Abhängigkeit zur Anzahl der zu fertigenden Bauteile (Einzelteil versus Großserie), der Anzahl der Inserts in einem plattenförmigen Bauteil (ein Insert bzw. nur wenige Inserts versus viele Inserts), der Geometrie und Größe der Inserts (kreisrunder versus länglichgestreckter Querschnitt, eher kleinformatige versus großformatige Inserts), der Art und Funktion der Inserts (druckfester, monolithischer Werkstoff mit reiner Versteifungsfunktion versus druck- und/oder wärmeempfindlicher Werkstoff oder druck- und/oder wärmeempfindliches Einbauteil im Insert), der Position der Inserts in einem plattenförmigen Bauteil (entlang einer einzigen Plattenkante versus allseitig), der geometrischen Ausrichtung und Topologie der Inserts im plattenförmigen Bauteil (90° versus 45° oder einem anderen von 90° abweichenden Winkel, Lage mitten im Bauteil versus an der Ecke des Bauteils), und gleichermaßen in Abhängigkeit zum Werkstoff mit diskontinuierlichem Dichteverlauf (Partikelwerkstoff) bzw. Werkstoffaufbau (insb. leichte Sandwichplatte) sowie der Oberfläche, Größe und Form des plattenförmigen Bauteils sind die Parameter wie Art der Verpressung (punktuell oder flächig, Pressflächen oder Presskalander), Dauer der Verpressung (nur kurz und ggf. anschließendes Aushärten im Stapel oder etwa länger, bis zur vollständigen Reaktion oder Aushärtung der Klebfuge), Höhe der Druckkraft, Zuführung von Wärme u. dgl. durch Versuche zu bestimmen und für einen stabilen Prozess exakt zu definieren und einzuhalten.

Dabei eignen sich im Handwerk in Abstimmung zum eingesetzten Leim-/Klebstoffsystem punktuell angesetzte Klemmen oder Zwingen, Spannhebel oder Gewichte sowie Spannrahmen mit punktuellen Verkeilungen sowie herkömmliche Furnierpressen, letztere insb. wenn eine zusätzliche Wärmezufuhr zur Verkürzung des Reaktions- bzw. Aushärtungsprozesses sinnvoll ist. In industriellen Prozessen werden nicht selten reaktive Klebstoffsysteme eingesetzt, die ihren ersten formhaltenden Aushärtungsprozess auf physikalischem Wege, wie beispielsweise der Aushärtung von Schmelzklebstoffen erfahren. Die Endfestigkeit der Verbindung stellt sich dann erst über Stunden durch einen chemischen Reaktionsprozess ein, der beispielsweise bei entsprechenden Schmelzklebstoffsystemen den Wärmestand der Klebfuge wesentlich steigert. Hier können zur Druckbeaufschlagung der Klebfuge zwischen Insert und Ausnehmung im plattenförmigen Bauteil sowohl Kurztaktpressen als auch Presskalander o. dgl. zum Einsatz kommen.

Dabei ist insbesondere im Rahmen von Serienfertigungen die Platzierung des Insert-Einbring-Prozessschrittes, als auch die topologische Position der Inserts in einem möglichen Halbzeug als Zwischenergebnis der vorhergegangenen Produktionsschritte erheblich für die Kostenattraktivität des Inserts und des erfindungsgemäßen Verfahrens sowie Bauteile.

Ein Insert kann grundsätzlich sowohl in ein fertig formatiertes plattenförmiges Bauteil wie vorbeschrieben eingebracht werden und durchläuft dann mit dem Bauteil gemeinsam den Prozess der Schmalflächenbeschichtung mit dem Dekorkantenmaterial, als auch in ein bereits allseitig fertig beschichtetes Bauteil, wobei dann zumindest kleine Teile des Inserts an der fertig beschichteten Schmalfläche des Bauteils sichtbar sind (die ggf. im Montageprozess des Möbels oder Innenausbaus durch die Fugengestaltung und Bauteilüberlappung verdeckt werden). Darüber hinaus können Inserts aber auch bereits zeitlich früher im Produktionsprozess mit einem Vorprodukt, einem sog. Halbzeug (häufig Strangware) des späteren plattenförmigen Bauteils vereinigt werden. Dabei wird beispielsweise zum Zwecke der Eckverstärkung von plattenförmigen Bauteilen bereits der Plattenstrang in Bauteilbreite, respektive der Plattenstrang in Bauteillänge exakt im Bereich der nachfolgenden Formatierung (also mitten auf der geplanten Schnittfuge, die einzelne Bauteile vom Plattenstrang abtrennt) ein Insert platziert. Durch den nachfolgenden Trennschnitt erhält man im Ergebnis zwei plattenförmige Bauteile, die an ihren ursprünglich im Strang zusammenliegenden Ecken jeweils mit einem halben Insert zu Eckversteifung ausgestattet sind.

So können beispielsweise Plattenstränge, die im Nachgang mittels Folding-Verfahren zu einem Korpus gefügt werden sollen, die also mittels V-förmiger Einfräsungen (i.d.R. unter 90°), die von einer Breitfläche bis zur flexiblen Oberflächenbeschichtung der gegenüberliegenden Breitfläche reichen, anschließend zu einem mehrseitigen, räumlichen Gebilde gefaltet und verleimet/verklebet werden (vierseitige Faltung führt zu einem geschlossenen Korpus, dreiseitige Faltung beispielweise zu einem Innenschubkasten, der anschließend noch mit dem Schubkastenvorderstück verbunden werden muss), im vorgelagerten Prozessschritt exakt im Fugenbereich an beiden Längsschmalflächen mit Inserts ausgestattet werden, was eine anschließende teilflächige Verleimung/Verklebung der Gehrungsfugen ermöglicht.

Dieselbe vorbeschriebene Produktionsstrategie lässt sich schlussendlich auf alle Bauteile anwenden, auch Bauteile, die im weiteren Produktionsprozess vollständig voneinander getrennt und weiterbearbeitet werden und im Rahmen von Montageprozessen zu einem Produkt oder mehreren oder auch ganz anderen Produkten gefügt zu werden. Auch hier können Inserts durch gezielte Prozessoptimierung bereits in ein Halbzeug eingebracht werden, um anschließend nach einem Trennschnitt als in zwei vollkommen voneinander losgelösten, plattenförmigen Bauteilen als Bestandteil zu fungieren.

Im speziellen Bedarf der Prozess des Einfügens von Inserts in plattenförmige Bauteile weitere Vorkehrungen zur Integration von Funktionen in den Randbereich derselben. Beim Weiterleiten von Strom oder Signalen durch ein plattenförmiges Bauteil kann es beispielweise notwendig sein, zwischen den Schnittstellen (Steckern, Steckerbuchsen o. dgl.) als integrale Bestandteile von mind. zwei Inserts zwischen diesen beiden ein Kabel zu verlegen. Zu diesem Zweck muss auf geeignete Art und Weise durch entsprechende Öffnung der Kernschicht (ggf. auch durch Nutzung von vorhandenen Hohlräumen der Kernstruktur von Leichtbauplatten) ein Kanal für die Kabelverlegung geschaffen werden. Derartige Kanäle können beispielweise bei der bauteilbezogenen Herstellung von Plattensträngen als Halbfertigwaren (nicht unüblich beim Ausbau von Mobilien, wie etwa von Caravans und Schienenfahrzeugen) durch Einlegen von Leerrohren oder spaltweises, lineares Auslassen der Kernstruktur bereits beim Urfügeprozess von Sandwichplattensträngen geschaffen werden.

Auch bei der Montage von Produkten vor Ort, beispielsweise dem Aufbau einer Küche und dem Ausstatten einer Küchenarbeitsplatte mit Öffnungen für Einbaugeräte wie Spülen oder Kochfelder, kann das Setzen von Inserts in die Schmalfläche der Arbeitsplattenausschnitte sinnvoll und notwendig sein. Hier eignen sich aufgrund der stark eingeschränkten Möglichkeiten der exakten spanenden Bearbeitung der Schmalflächen der Ausschnitte insb. Inserts in kreisrunder Querschnittform, deren Ausnehmung durch eine reine Bohrbearbeitung mit einer Handbohrmaschine hergestellt werden kann. In diesem Falle kann die Verklebung von Inserts auch mithilfe von Dichtklebstoffen (wie Bausilicon, Acrylat o. dgl.) oder besonders fugenfüllenden Klebstoffen (wie sog. Montageklebstoffen, speziellen Weißleimen oder reaktiven Klebstoffgemischen) erfolgen. Derartige Klebstoffe sind in der Lage größere Spalte zwischen Insert und baustellseitig vorgenommener Ausnehmung dauerhaft betriebssicher zu übernehmen. Außerdem benötigen derartige Klebstoffe i.d.R. keinen besonderen Pressdruck zur Reaktion bzw. Aushärtung, was den Möglichkeiten der Montagesituation entspricht.

Weitere vorteilhafte Ausführungsformen der Erfindung sehen vor, dass:
- das Insert selber durch geeignete Binnenformgebung und/oder Einlegen von Fremdteilen gleich aus welchem Material so gestaltet ist, dass die Montage eines aus mit derartigen Inserts ausgestatteten plattenförmigen Bauteilen zu einem Produkt vollkommen werkzeuglos erfolgen kann;
- das Insert selber durch geeignete Formgebung und/oder in Kombination mit Fremdteilen gleich aus welchem Material so gestaltet ist, dass ein fester oder lösbarer Bauwerksanschluss eines aus mit derartigen Inserts ausgestatteten plattenförmigen Bauteils oder eines aus derartigen Bauteilen gefertigten Produktes an den Schnittstellen zu den komplementären Ausnehmungen - auch mittels Schraubfixierung - möglich ist;
- das Insert selber in seinem Inneren so gestaltet und aufgebaut ist, dass es starre oder bewegliche Beschlagteile zur Weiterleitung mechanischer Energie oder Lagerpunkte für deren Gelenke oder Führungen für Hebel beherbergen kann;
- die Positionen von Inserts und Ausnehmungen derart in der Rohplatte oder in einem Plattenzuschnitt oder im formatierten plattenförmigen Bauteil angeordnet sind, dass es zu einer wesentlichen mechanischen Verstärkung und Erhöhung der Verbundfestigkeit der Platte, des Plattenzuschnitts oder des Bauteils im Rand- und/oder Eckbereich der Breitflächen sowie gleichfalls zu einer wesentlichen Unterstützung der Schmalflächenbeschichtung insb. auch durch Vergrößerung der Leim- bzw. Klebflächen kommt, die auch eine randnahe Lage von durchlaufenden Nuten oder sonstigen Aussparungen in der Bauteilbreitfläche oder derartige Aussparungen in Schmalfläche bei nur unwesentlichem Festigkeitsverlust des plattenförmigen Bauteils ermöglicht;
- das Insert selber Innenstrukturen in Form von gezielten Hohlräumen aufweist, die in der Funktion von Leim- bzw. Klebstoffkanälen den Leim bzw. Klebstoff von mind. einer Einfüllöffnung in der nach außenliegend zunächst ohne Bindemittel gefügten Insert-Stirnfläche zur Klebefuge zwischen den Breitflächen des Inserts und den Breitflächen der Ausnehmung durch leichten Einfülldruck transportieren, wobei die Verteilung des Leimes- bzw. Klebstoffs am den Orten der Klebefugen durch auf den Insert-Breitflächen eingebrachten Vertiefungen in der Funktion von Leim- bzw. Klebstofffurchen erfolgen kann;
- das Insert selber zumindest zweiteilig aus einer formhaltenden, begrenzt-flexiblen Hülle und einem darin befindlichen niedrigviskosen Stoffgemisch aufgebaut ist, um hohe Toleranzen in Verbindungspunkten aufnehmen zu können und nach Ablauf der chemischen Reaktion bzw. der physikalischen Aushärtung des Stoffgemisches derart ausgestattetet plattenförmige Bauteile in dauerfest fixierte Lageposition zueinander zu positionieren;
- das Insert vor dem Einbringen, im eingebrachten Zustand isoliert und/oder gemeinsam mit dem plattenförmigen Bauteil in herkömmlichen, materialabtragenden (spanenden) und materialauftragenden Fertigungsprozessschritten bearbeitet werden kann.
- das Insert und die Ausnehmung oval, insbesondere mit einem im Querschnitt geraden Mittelstück (bspw. quadratisch/rechteckig), das an seinen beiden Enden jeweils einen Kreisabschnitt aufweist, ausgebildet sind oder mehrere, beispielsweise drei oder vier Kreisabschnitten umfassen, wobei die jeweiligen Mittelpunkte der Kreisabschnitte insbesondere auf einer Linie angeordnet sind und die Kreisabschnitte bspw. durch sich überlappende Abschnitte der Kreise erzeugt werden.

Außerdem können bisher oder im Weiteren verwendete Begriffe wie folgt verstanden werden:
- Unter Verbindungselemente zur festen Bauteilverbindung können Verleimhilfen, wie Holzdübel, Lamellodübel u. dgl. verstanden werden;
- Unter lösbaren Bauteilverbindungen können Verbindungsbeschläge verstanden werden;
- Unter Funktionselementen zur Bauteilverbindung können Verleimhilfen oder Verbindungsbeschläge verstanden werden;
- Unter funktionserweiternden Elementen können Steckerbuchsen, RFID-Chips, Schalter, Sensoren u. dgl. verstanden werden;
- Unter einer Aussparung können auch Ausnehmungen, bspw. für das Insert verstanden werden;
- Unter dem vertikalen Querschnitt der Ausnehmung wird insbesondere die Querschnittsebene verstanden, die senkrecht auf der Einführungsrichtung des Inserts in die Ausnehmung steht;
- Unter an die Form angepasst kann sowohl beim Insert, als auch bei einer Auftragsvorrichtung verstanden werden, dass die Querschnittsform (Ebene senkrecht zur Einführungsrichtung) des Inserts/der Auftragsvorrichtung die gleiche Querschnittsform der Ausnehmungen (Ebene senkrecht zur Einführungsrichtung) aufweist und in ihrer Größe insbesondere passgenau (ohne Spiel) in die Ausnehmung eingeführt werden kann oder dass das Insert/die Auftragsvorrichtung bspw., geringfügig kleiner, aber an die Form angepasst, ausgebildet sein kann.
- Unter geringfügig kleiner kann im Zusammenhang mit der Größe des Insert verstanden werden, dass das Insert bspw. 0,05 mm bis 0,8 mm, vorzugsweise 0,1 mm bis 0,4 mm kleiner als die Ausnehmung ist.
- Unter geringfügig kleiner kann im Zusammenhang mit der Größe einer Auftragsvorrichtung bzw. eines Abschnittes einer Auftragsvorrichtung verstanden werden, dass der Abschnitt der Auftragsvorrichtung insbesondere bspw. zwischen 0,3 mm und 2 mm, vorzugsweise zwischen 0,5 mm bis 1 mm kleiner als die Ausnehmung ist.

Zur Herstellung der Verbindung zwischen dem Insert und der Leichtbauplatte ist zudem eine Auftragsvorrichtung zum Auftragen von Klebstoff auf die Oberflächen von Ausnehmungen für Inserts vorgesehen, bei der zumindest ein Abschnitt der Auftragsvorrichtung an eine Querschnittsform der Ausnehmung angepasst ist. Die Auftragsvorrichtung kann insbesondere an gegenüberliegenden Seiten des Abschnitts Leimaustrittsdüsen aufweisen, die derart ausgerichtet sind, dass ein Klebstoffaustrag aus der Vorrichtung in zwei entgegengesetzte Richtungen erfolgt. Dabei sind die Auftragsdüsen insbesondere derart angeordnet, dass in einer in die Ausnehmung eingeführten Position der Klebstoffaustritt in Richtung der Deckseiten des plattenförmigen Bauteils erfolgt.

Hierdurch kann auf besonders einfache Weise ein besonders gleichmäßiger Klebstoffauftrag auf die Oberflächen, zumindest auf die den Deckseiten zugewandten Oberflächen (abschnitten), der Ausnehmung erfolgen, wodurch eine besonders sichere und feste Verklebung des Inserts mit der Leichtbauplatte erreicht wird.

Die Auftragsvorrichtung ist insbesondere als Applikationskopf ausgebildet und kann an einer Aufnahme einer Klebstoffabgabevorrichtung angebracht werden. Insbesondere kann sie beispielsweise auf eine Aufnahme einer Klebstoffflasche aufgesetzt werden. Die Verbindung zwischen der Auftragsvorrichtung und der Aufnahme erfolgt vorzugsweise klemmend, sodass ein einfacher manueller (händisch durch eine Person) Austausch erfolgen kann.

Die Auftragsvorrichtung weist insbesondere einen Klebstoffkanal auf. Dieser kann einen ersten Abschnitt zum Anordnen an der Aufnahme der Klebstoffabgabevorrichtung und beispielsweise einen zweiten Abschnitt, der in einer Klebstoffaustrittsöffnung endet, aufweisen. Die Querschnittsgröße der beiden Abschnitte kann gleich sein, ist vorzugsweise jedoch unterschiedlich. So ist es beispielsweise möglich, den zweiten Abschnitt im Querschnitt zu verkleinern, um die Klebstoffmenge, die aus der Klebstoffaustrittsöffnung austritt, zu begrenzen.

Die Klebstoffaustrittsöffnung mündet beispielsweise auf einer Stirnseite eines Grundkörpers der Auftragsvorrichtung. In diesem Fall kann der Klebstoffkanal beispielsweise im Grundkörper angeordnet sein. Auf der Stirnseite können beispielsweise Abstandshalter, die ggf. auch gleichzeitig zur Verteilung des Klebstoffs auf der Stirnseite ausgebildet sind, angeordnet sein. An die Abstandshalter anschließend ist vorzugsweise eine Klebstoffverteileinheit, wie beispielsweise eine Rakel, insbesondere eine Zahnrakel angeordnet. Bei der Benutzung wird der Klebstoff durch den Klebstoffkanal auf die Stirnseite transportiert, dort von den Abstandshaltern in die Außenbereiche der Stirnseite gelenkt, sodass beim Herausziehen der Auftragsvorrichtung aus der Ausnehmung der Klebstoff an der Oberfläche der Ausnehmung, zumindest im Bereich der Breitseiten (der den Deckseiten zugewandten Oberflächenabschnitte) haften bleibt.

Über die Klebstoffverteileinheit wird insbesondere eine gleichmäßige Verteilung des Klebstoffs erreicht. So kann beispielsweise der Rakel gleichmäßige Klebstofflinien erzeugen. Aufgrund der gleichmäßigen Klebstoffverteilung wird eine bessere Verklebung zwischen dem Insert und der Oberfläche der Ausnehmung erreicht. Besonders bevorzugt ist neben der Klebstoffverteileinheit ein Abstreifen angeordnet, der bspw. zwischen der Stirnseite des Grundkörpers und den Abstandshaltern positioniert ist. Hierdurch wird auf sichere Weise verhindert, dass der Klebstoff über den Stirnseitenbereich hinaus, beispielsweise auf weitere Abschnitte des Grundkörpers, bzw. auf die Stirnseite selbst kommt. Der Abstreifer kann bspw. Kunststoff oder Gummi umfassen oder daraus bestehen. Für einen besonders haltbaren Abstreifer kann dieser aus Polypropylen bestehen.

Unter an die Form angepasst kann verstanden werden, dass die Querschnittsform (Ebene senkrecht zur Einführungsrichtung) von mindestens einem Abschnitt der Auftragsvorrichtung die gleiche Querschnittsform (Ebene senkrecht zur Einführungsrichtung) der Ausnehmungen aufweist und auch in ihrer Größe soweit angepasst ist, sodass der Abschnitt insbesondere passgenau (ohne Spiel) in die Ausnehmung eingeführt werden kann oder dass der Abschnitt bspw., geringfügig kleiner, aber weiterhin an die Form angepasst, ausgebildet ist um das Einführen und herausziehen zu erleichtern.

Eine bevorzugte Querschnittsform des Abschnitts entspricht der Querschnittsform einer bevorzugten Ausgestaltung des Inserts. Diese ist beispielsweise oval. Sie kann im Querschnitt ein gerades Mittelstück umfassen, das an seinen beiden Enden jeweils einen Kreisabschnitt aufweist. Eine weitere bevorzugte Querschnittsform sowohl des Abschnitts als auch des Inserts bzw. der dazugehörigen Ausnehmung besteht aus mehreren, beispielsweise drei oder vier Kreisabschnitten, wobei die jeweiligen Mittelpunkte der Kreisabschnitte auf einer Linie angeordnet sind und die Kreisabschnitte durch sich überlappende Kreise erzeugt werden.

Bei einer alternativen Ausführungsform endet die Klebstoffaustrittsöffnung des Klebstoffkanals in einen Klebstoffkopf. Dabei weist der Klebstoffkopf bevorzugt die Querschnittsform der Ausnehmung auf, d. h., er bildet bspw. den angepassten Abschnitt aus. Der Klebstoffkopf weist bevorzugt zwei Stirnseiten auf, eine in Richtung des Klebstoffkanals zeigende und eine zweite parallel dazu angeordnete nach außen zeigende Stirnseite. Die Vorrichtung wird bevorzugt mit der zweiten Stirnseite voran in die Ausnehmung eingeführt. Zwischen den beiden Stirnseiten sind Kontaktflächen angeordnet, die beim Einführen und Herausziehen der Vorrichtung aus der Ausnehmung mit der Oberfläche der Ausnehmung in Kontakt kommen bzw. zu diesen ausgerichtet sind. Zwei sich gegenüberliegende Abschnitte der Kontaktflächen sind als Austragsflächen ausgebildet. In ihnen sind Klebstoffdüsen angeordnet. Bevorzugt sind dabei jeweils mehrere Düsen je Austragsflächen vorgesehen. Die Klebstoffdüsen auf einer Austragsfläche können zudem vorzugsweise in einer Reihe nebeneinander, beispielsweise eine gerade Linie bildend, angeordnet sein.

Die Anordnung der Klebstoffdüsen erfolgt beispielsweise zentral, d. h. mittig zwischen den beiden Stirnseiten. Vorzugsweise können die Klebstoffdüsen, insbesondere auch eine Reihe von Klebstoffdüsen, auch versetzt zur Mitte, beispielsweise in Richtung der Stirnseite versetzt angeordnet sein. Hierdurch wird ein verbesserter Leimauftrag und eine geringere Verschmutzung des Klebstoffkopfes erreicht.

Die Austragsflächen können eben ausgebildet sein. Vorzugsweise können Sie jedoch auch rund oder hohl ausgebildet sein, wodurch die Kontaktfläche zwischen der Vorrichtung und der Oberfläche der Ausnehmung deutlich verringert wird.

Der Klebstoffkanal mündet bevorzugt in einem Klebstoffverteilkanal, der beispielsweise im Klebstoffkopf angeordnet ist oder durch den Abstreifen, die Klebstoffverteileinheit, und/oder die Abstandshalter ausgebildet werden kann.

Die Erfindung wird nachfolgend anhand der Zeichnungen beispielhaft näher erläutert. Es zeigt:
- Fig. 1: eine Einbausituation von Inserts in einer Korpusseite;
- Fig. 2 bis 16: verschiedene Ausführungsformen und Verwendungsmöglichkeiten der Inserts;
- Fig. 17: schematisch eine weitere Ausführungsform des Inserts mit einer Herstellungsvariante in verschiedenen Ansichten;
- Fig. 18a: in einer perspektivischen Darstellung eine weitere Ausführungsform des Inserts mit einer zusätzlichen Verleimhilfe;
- Fig. 18b: die Ausführungsform aus Figur 18a schematisch in einem Querschnitt;
- Fig. 19: schematisch in einer perspektivischen Darstellung eine Ausführungsform einer Klebstoffauftragsvorrichtung ;
- Fig. 20-23: schematisch in perspektivischen Darstellungen weitere Ausführungsformen der Auftragsvorrichtung für Klebstoff;
- Fig. 24 - 25: schematisch in Querschnittsdarstellungen die Ausführungsformen aus Figur 21-23.

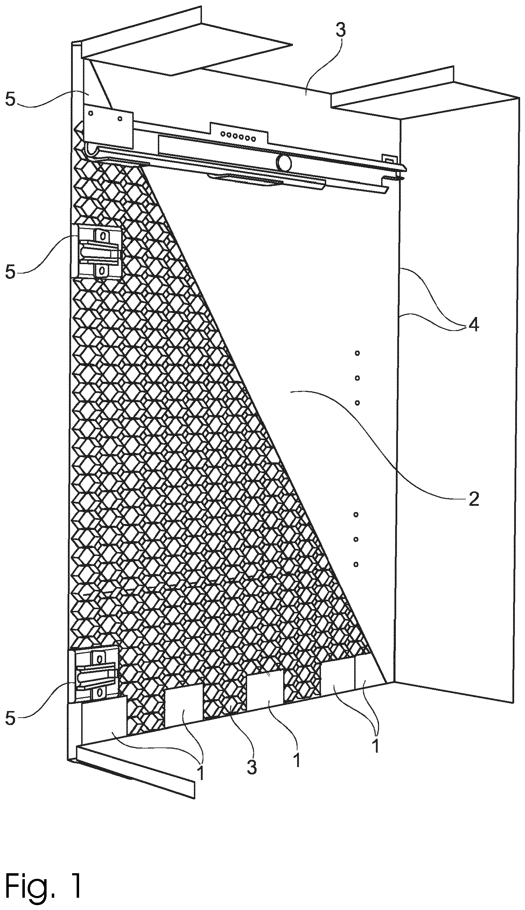

Figur 1 zeigt eine Einbausituation von Inserts 1 eines erfindungsgemäßen Insert-Systems - hier in der Grundform aus Massivholz - in einer Korpusseite als plattenförmiges Bauteil 2 aus einem ligno-zellulosebasierten Werkstoff mit diskontinuierlichem Dichteverlauf, respektive einer leichten, mehrlagigen Sandwichplatte - hier mit Papierexpansionswabenkernschicht -, wobei die Inserts 1 sowohl den oberen und unteren Randbereich 3 des plattenförmigen Bauteils 2 zur Korpusverleimung über Weißleim und Holzdübel als Verleimhilfen entscheidend verstärken, als auch den Bereich der Rückwandnut 4 sowie die Beschlaganschlusspunkte 5, gleichzeitig die Schmalflächenbeschichtung (an der Korpusseite vorne nicht dargestellt).

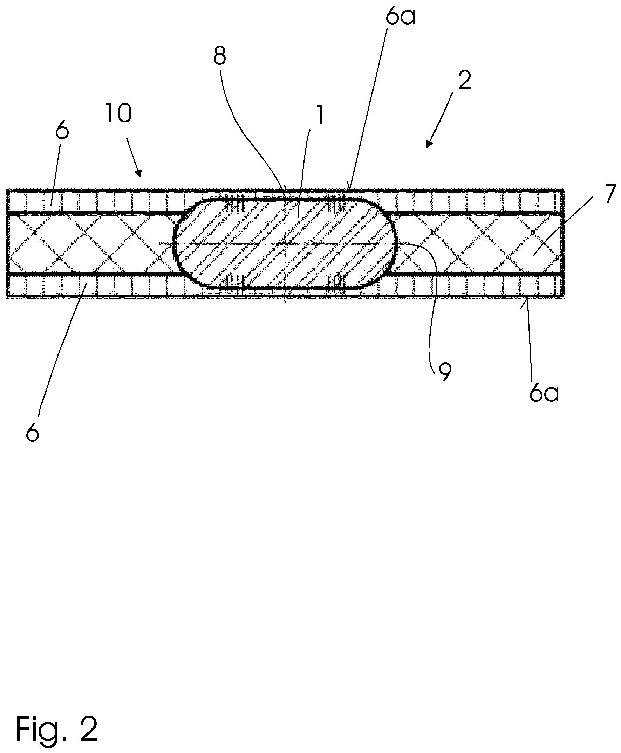

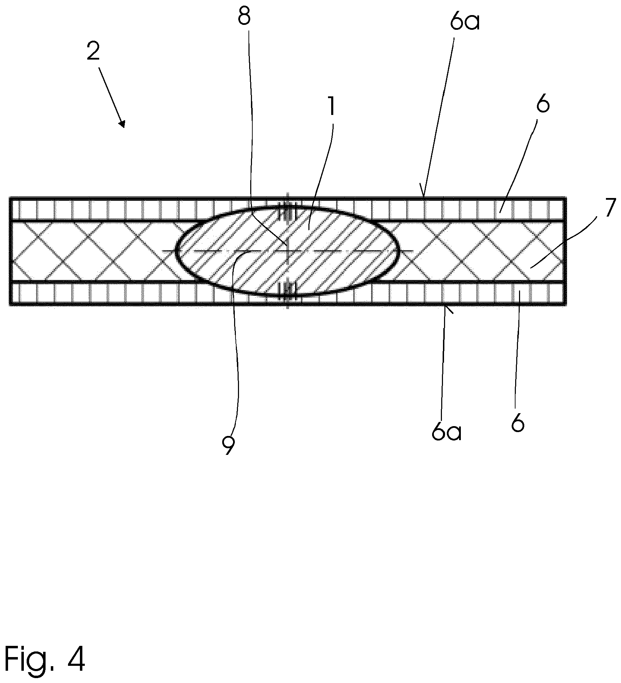

Figur 2 bis 6 zeigen jeweils einen Ausschnitt von einem plattenförmigen Bauteil 2, der hier als Leichtbauplatte ausgebildet ist und zwei Deckschichten 6 mit einer dazwischenliegenden Kernschicht 7 aufweist. Zwischen die beiden Deckschichten 6, in den Kern 7 hinein, wurde eine Ausnehmung 10 eingearbeitet und ein Insert 1 eingeschoben. Die Inserts 1 sind mit beiden Deckschichten 6 verleimt (durch Striche angedeutet). Die dargestellten Inserts 1 sind spiegelsymmetrisch um eine Vertikalachse 8 und eine Horizontalachse 9 ausgebildet.

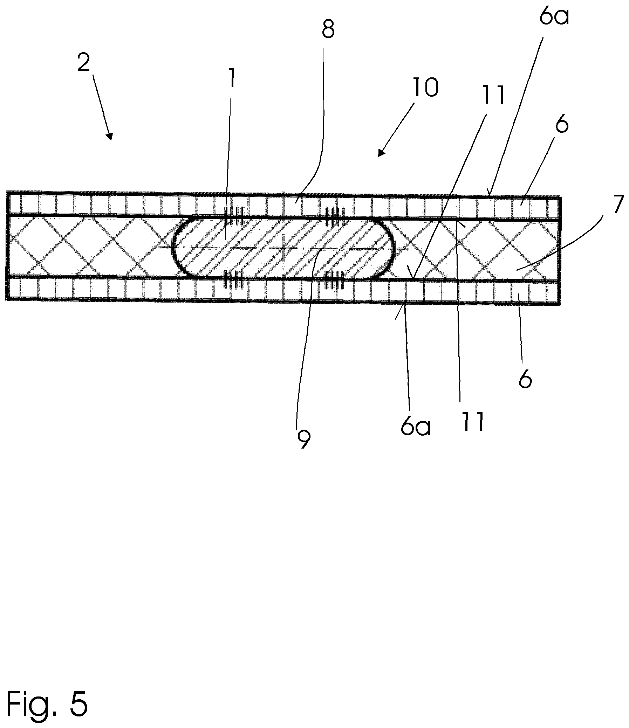

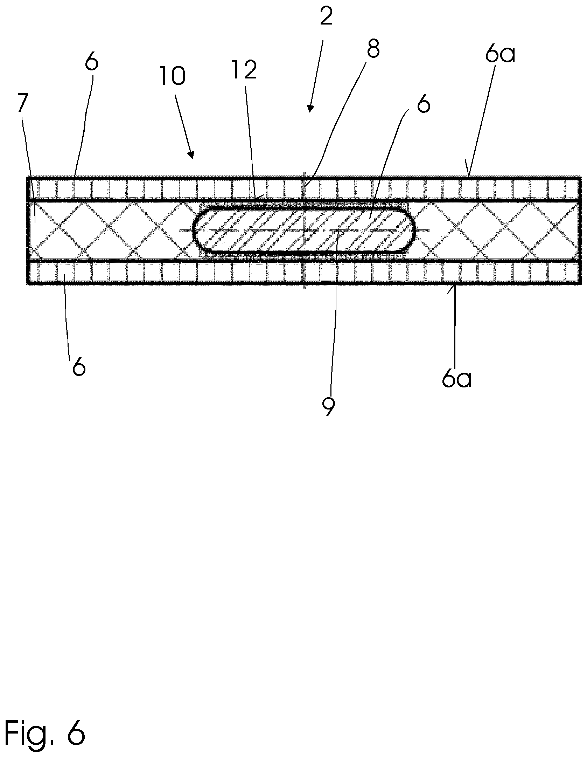

Die in Figur 2-4 dargestellten Ausnehmungen 10 ragen jeweils in beide Deckschichten 6 hinein, d. h., die Deckschichten 6 sind Teil der Ausnehmung 10. Die in Figur 5 dargestellte Ausnehmung 10 wurde ausschließlich im Kern 7 erzeugt und grenzt an die jeweilige Innenoberfläche 11 jeder Deckschicht 6 an. Das eingeschobene Insert 1 ist ebenfalls mit den Deckschichten 6 verleimt. Figur 6 zeigt eine Ausnehmung 10, die ausschließlich im Kern 7 erstellt wurde und nicht an die Deckschichten 6 angrenzt. Das in die Ausnehmung 10 eingeschobene Insert 1 ist über eine besonders dicke Klebeschicht 12, beispielsweise einem Schaumkleber mit den Deckschichten 6 verklebt.

Die in den Figuren 2-6 dargestellten Ausnehmungen 10 und Inserts 1 sind aufeinander angepasst sodass das jeweilige Insert 1 passgenau in die jeweilige Ausnehmung 10 eingeschoben werden kann.

Die in den Figuren 2,5 und 6 dargestellte Ausnehmung 10 mit dem dazugehörigen Insert 1 weisen einen ovalen Querschnitt auf mit jeweils zwei einseitigen Kreisbögen und einem geraden Mittelstück. Die Ausnehmungen 10 wurden jeweils mittels eines Schaftfräsers (hier nicht dargestellt) erstellt, dessen Durchmesser exakt der Höhe der Ausnehmung entspricht. Zum Erstellen der Ausnehmung 10 wurde der Schaftfräser in Axialrichtung zwischen die beiden Deckschichten 6 eingeschoben und mittels einer einzelnen Bewegung parallel zu den Deckschichtebenen bewegt. Alternativ kann die Ausnehmung auch mittels eines Fräsers mit kleinerem Durchmesser erstellt werden, der entsprechend bahngesteuert wird.

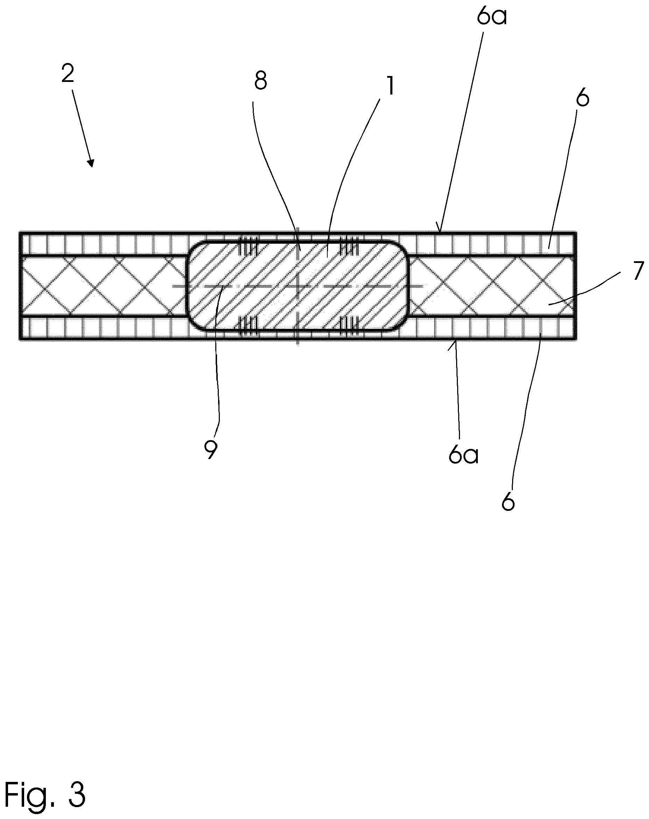

Die in Figur 3 (nicht erfindungsgemäß) und 4 dargestellten Ausnehmungen 10 und Insert 1 wurden ebenfalls mittels eines Schaftfräsers (hier nicht dargestellt) erstellt, der jedoch einen Durchmesser aufweist, der kleiner als die Höhe der Ausnehmung 10 ist und entsprechend bahngesteuert wurde.

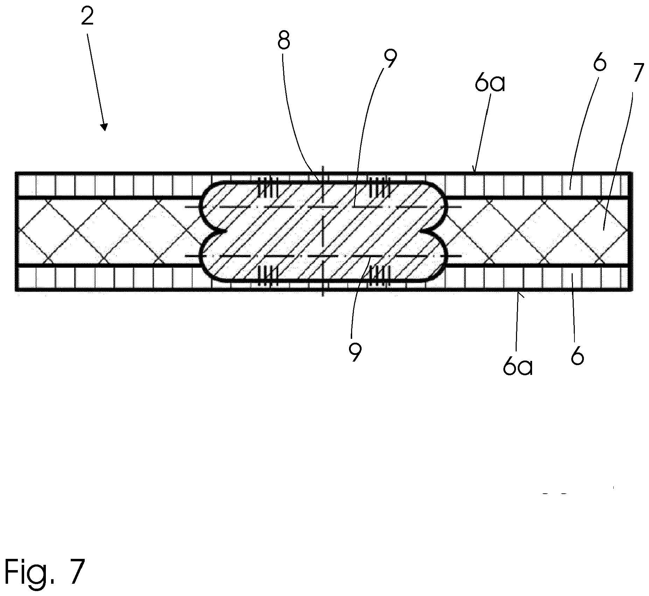

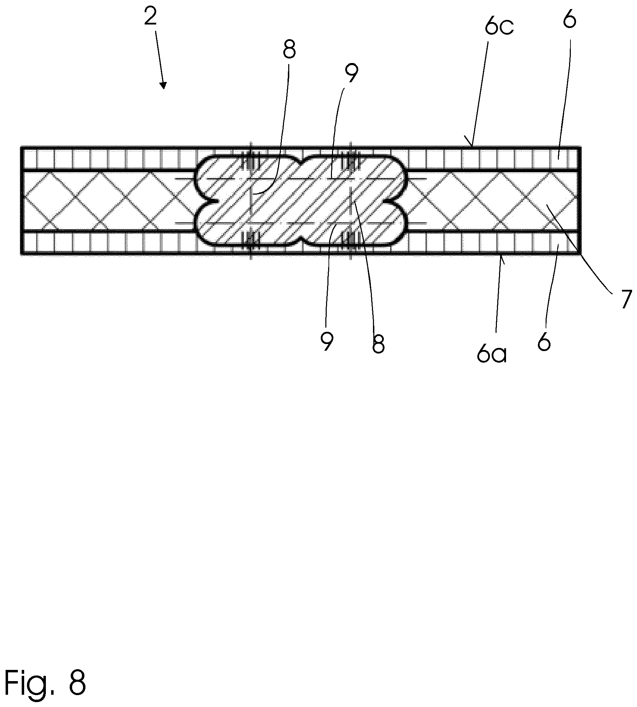

Figur 7 und Figur 8 zeigen zwei alternative Querschnittsformen der Ausnehmung 10 und des Inserts 1, welche jedoch nicht erfindungsgemäße Ausgestaltungen darstellen. Die Ausnehmungen 10 wurden, wie bereits in den Figuren 1 bis Figur 6 dargestellt, in ein plattenförmiges Bauteil 2, das als Leichtbauplatte mit zwei Deckschichten 6 und einem dazwischenliegenden Kern 7 ausgebildet ist, erstellt.

Die in Figur 7 dargestellte Querschnittsform wurde mit einem bahngesteuerten Schaftfräser erstellt und aus zwei vertikal versetzten Ovalen zusammengesetzt. Figur 8 zeigt eine alternative Ausführungsform, die ebenfalls mit einem bahngesteuerten Schaftfräser erstellt wurde und aus vier Ovalen zusammengesetzt ist, die jeweils paarweise vertikal und horizontal versetzt angeordnet sind.

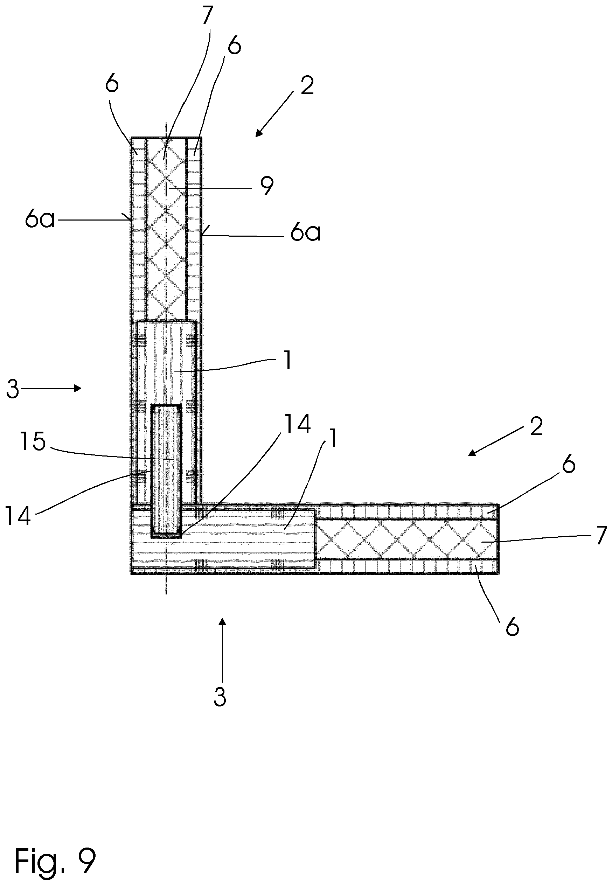

Figur 9 zeigt eine Eckverbindung aus zwei plattenförmigen Bauteilen 2 im Querschnitt, die ebenfalls jeweils als Leichtbauplatte ausgebildet sind. Die plattenförmigen Bauteile 2 umfassen jeweils zwei Deckschichten 6 mit einem dazwischenliegenden Kern 7. Im Randbereich 13 jedes plattenförmigen Bauteils 2 wurde jeweils ein Insert 1 angeordnet. Das Insert 1 ist jeweils mit den beiden Deckschichten 6 verklebt und greift zudem jeweils in die beiden Deckschichten 6 ein. In die beiden Inserts 1 wurde jeweils eine Ausnehmung 14 eingebracht. In der Ausnehmung 14 ist ein Verbindungselement 15, hier in Form einer Verleimhilfe, nämlich einem Dübel, eingebracht und mit beiden Inserts 1 verklebt (hier nicht dargestellt).

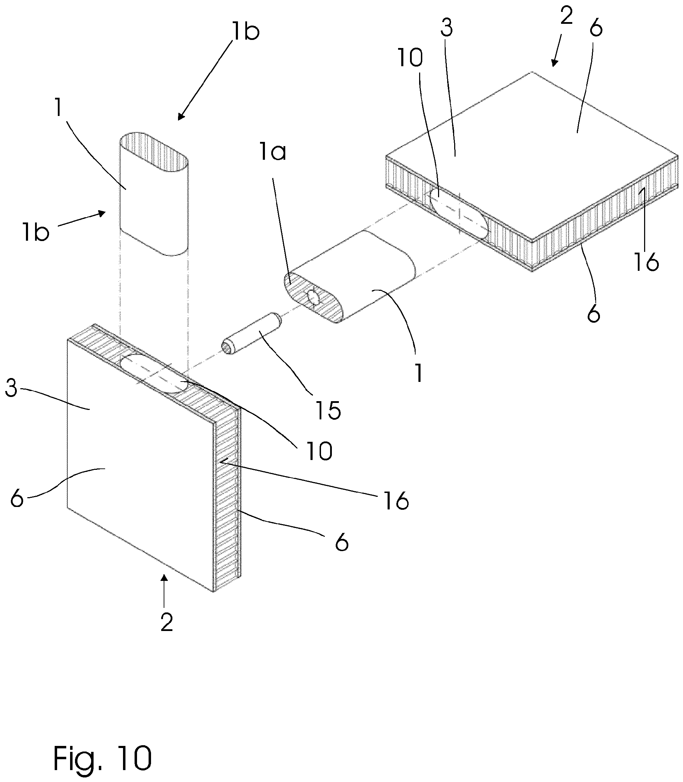

Figur 10 zeigt die Eckverbindung der beiden plattenförmigen Bauteile 2 aus Figur 9 in einer perspektivischen Darstellung. Deutlich erkennbar sind die beiden Ausnehmungen 10, die jeweils in den plattenförmigen Bauteilen 2 erstellt wurden. Die Ausnehmungen 10 ragen bis in die jeweiligen Deckschichten 6 des jeweiligen plattenförmigen Bauteils 2 hinein. Weiter dargestellt sind die beiden Inserts 1 zum Einfügen in die dafür vorgesehenen Ausnehmungen 10. Ein erstes Insert 1 weist bereits eine sich von seiner Stirnseite 1a ausgehend in das Insert 1 erstreckende Ausnehmung 14 zur Aufnahme des Verbindungmittels 15 (hier ein Runddübel) auf. Das zweite Insert 1 weist ebenfalls eine Ausnehmung (hier nicht dargestellt) auf, die sich jedoch von einer Hauptoberfläche 1b des zweiten Inserts 1 in Richtung zur gegenüberliegenden Hauptoberfläche 1b des zweiten Inserts 1 erstreckt. Ferner ist in dem zur Aufnahme 10 des zweiten Inserts 1 ausgebildeten plattenförmigen Bauteil 2 eine Bohrung in einer Deckschicht 6 vorgesehen, die deckungsgleich zur Ausnehmung 14 des in die dafür vorgesehene Ausnehmung 10 eingeschobenen zweiten Inserts 1 angeordnet ist. Der Dübel ragt somit durch die Deckschichten 6 in die Ausnehmung 14 des zweiten Inserts 1 hinein.

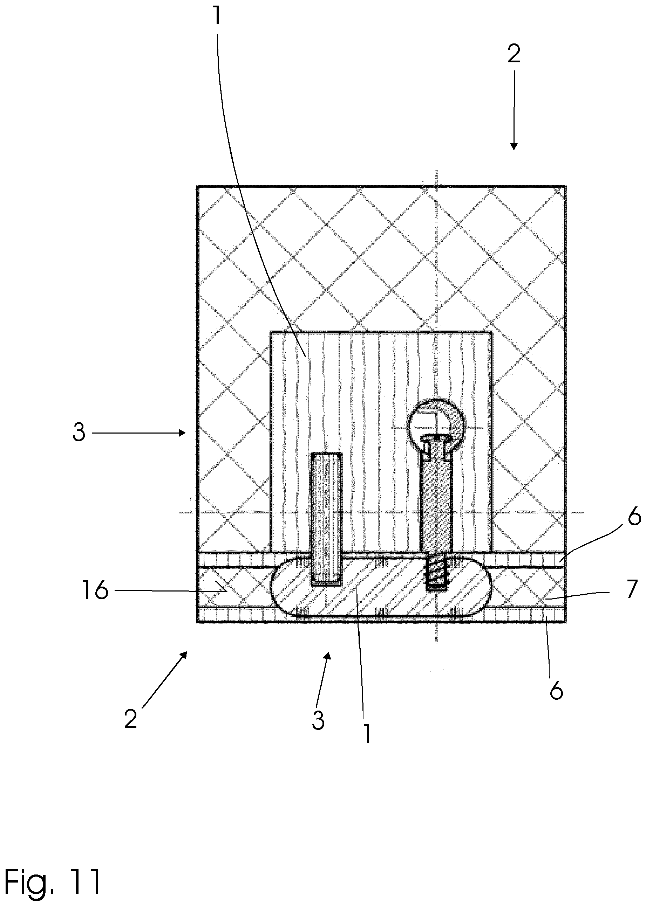

Figur 11 zeigt einen Ausschnitt von einer Eckverbindung aus zwei plattenförmigen Bauteilen 2, die ebenfalls als Leichtbauplatten ausgebildet sind. In die Leichtbauplatten wurde jeweils ein Insert 1 ausgehend von der Plattenschmalflächen 16 in den Randbereich 13 jeder Leichtbauplatte eingeführt. Die Inserts 1 sind mit den Deckschichten 6 und gegebenenfalls den Kernen 7 verklebt. Die Inserts 1 sind jeweils zur Aufnahme eines Verbindungselementes 15, hier einem Dübel, und einer lösbaren Bauteilverbindung 17, nämlich eines Verbindungschlages, der hier als Exzenterbeschlag ausgebildet ist, ausgebildet. Der Dübel ist dementsprechend mit maximal einem der plattenförmigen Bauteile 2 verleimt, sodass die beiden plattenförmigen Bauteile 2 beim Öffnen des Exzenterbeschlags auseinander genommen werden können. Deutlich erkennbar ist, dass der Exzenter 17a des Exzenterbeschlags durch die Deckschichten 6 des entsprechenden plattenförmigen Bauteils 2 in das eingebrachte Insert 1 ragt.

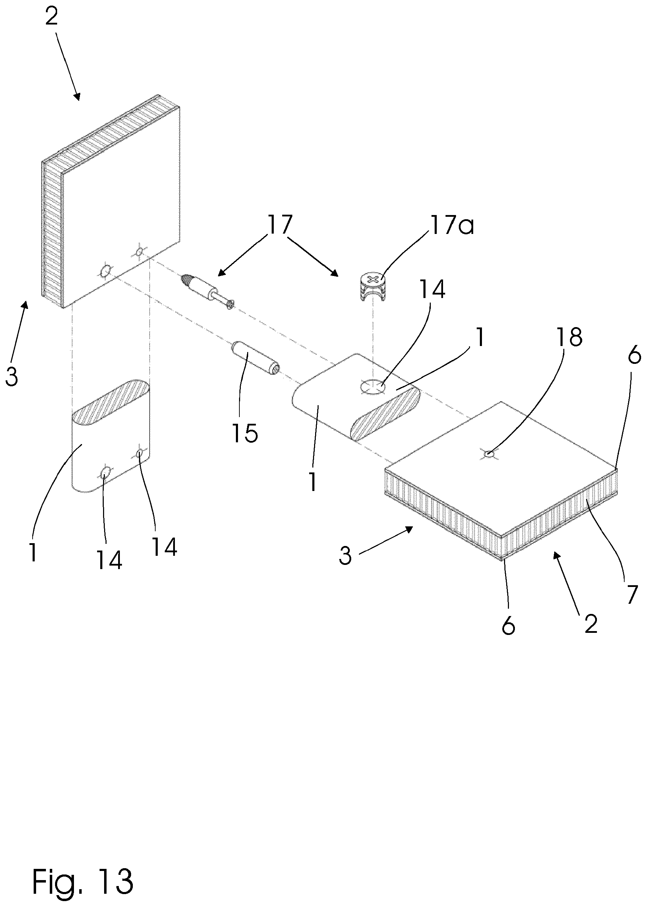

Figur 13 zeigt einen Ausschnitt einer Eckverbindung, die der in Figur 13 dargestellten Eckverbindung weitestgehend entspricht. Sie unterscheidet sich jedoch darin, dass der Exzenter 17a der lösbaren Bauteilverbindung 17 vollständig im Insert 1 angeordnet ist und zum Bedienen des Exzenters 17 a ausschließlich ein entsprechendes Loch 18 in der Deckschicht 6, das deckungsgleich über dem Exzenter 17 a des eingeschobenen Inserts 1 angeordnet ist, vorgesehen ist.

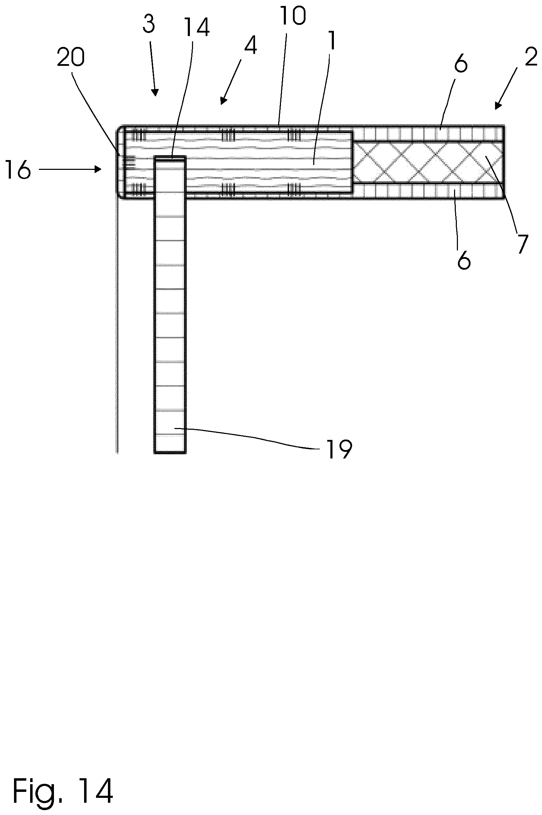

Figur 14 zeigt in einem Querschnitt einen Rückwandanschluss eines Korpus (hier nicht dargestellt) mit einem plattenförmigen Bauelement 2, das als Leichtbauplatten ausgebildet ist und die Seitenwand des Korpus bildet. Im Randbereich 13 der Leichtbauplatte ist ein Insert 1 eingebracht. Die hierfür erstellte Ausnehmung 10 ragt in beide Deckschichten 6 des plattenförmigen Bauteils 2. Auf die Schmalflächen 16 des plattenförmigen Bauteils 2 ist ein Kantenanleihemarkt 20 aufgebracht der mit dem Insert 1 verklebt ist. Über die Länge der Leichtbauplatten sind mehrere dieser Inserts 1 hintereinander angeordnet. In den Inserts 1 ist ferner eine als Nut ausgeführte Ausnehmung 14 angeordnet, in die eine Rückwand 19 eingeschoben ist. Die Inserts 1 erhöhen die Festigkeit und Stabilität des als Leichtbauplatte ausgeformten plattenförmigen Bauteils 2 im Randbereich 13, sodass auch eine Rückwand 19 ausreichend Stabilität über die Nut erhält.

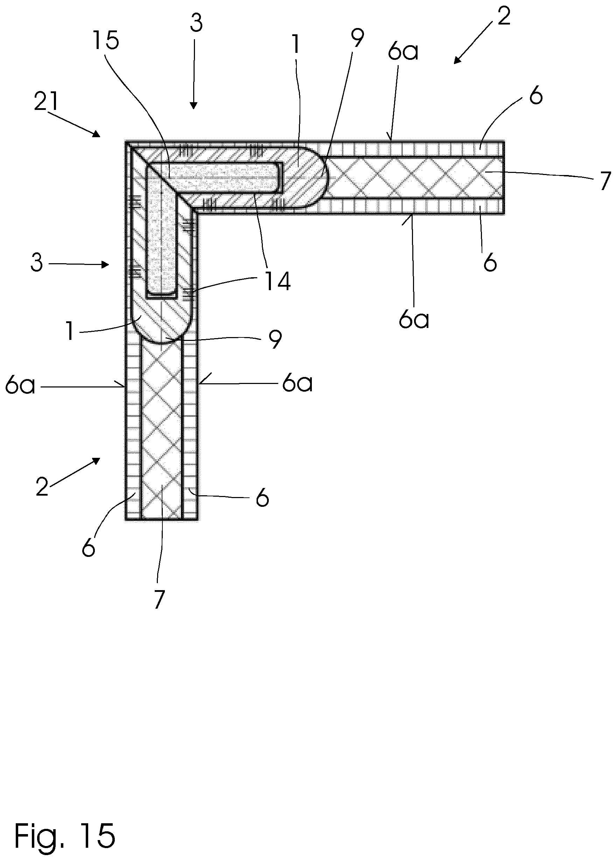

Figur 15 zeigt eine Eckverbindung zwischen zwei plattenförmigen Bauteilen 2. Die Eckverbindung ist als Gehrungsverbindung 21 ausgebildet. In den die Gehrungsverbindung 21 ausbildenden Randbereichen 13 der plattenförmigen Bauteile 2 sind jeweils Inserts 1 eingebracht. Die Inserts 1 weisen jeweils eine Ausnehmung 14 auf die zur Aufnahme eines Verbindungmittels 15 hier eines winkeligen Dübels ausgebildet sind. Die Gehrungsverbindung ist beispielsweise herstellbar, in dem in jedes der plattenförmigen Bauteile 2 ein Insert 1 mit einer Ausnehmung 14 eingebracht und mit dem plattenförmigen Bauteil 2 verklebt wird. Alternativ kann die Ausnehmung auch nach dem Einbringen in das plattenförmige Bauteil 2 angeordnet werden. Anschließend werden die beiden Platten im Bereich des eingebrachten Inserts 1 auf Gehrung geschnitten und die Eckverbindung kann unter Einbringung des Eckdübels entsprechend gefaltet und verleimt werden. Alternativ kann beispielsweise auch nur in ein einzelnes plattenförmiges Bauteil 2 ein besonders großes Insert 1 eingebracht werden. Das plattenförmige Bauteil 2 wird anschließend im Bereich des Inserts 1 in zwei plattenförmige Bauteile 2 aufgetrennt und die entsprechenden Gehrungen angeordnet. Grundsätzlich können derart Gehrungsverbindung mit unterschiedlichsten Winkeln erstellt werden. Diese können entweder stumpf d. h. ohne weitere Verbindungmittels 15 oder sofern dem Winkel entsprechende Verbindungsmittel 15 vorhanden sind mit einem entsprechenden Verbindungsmittel 15 verklebt werden.

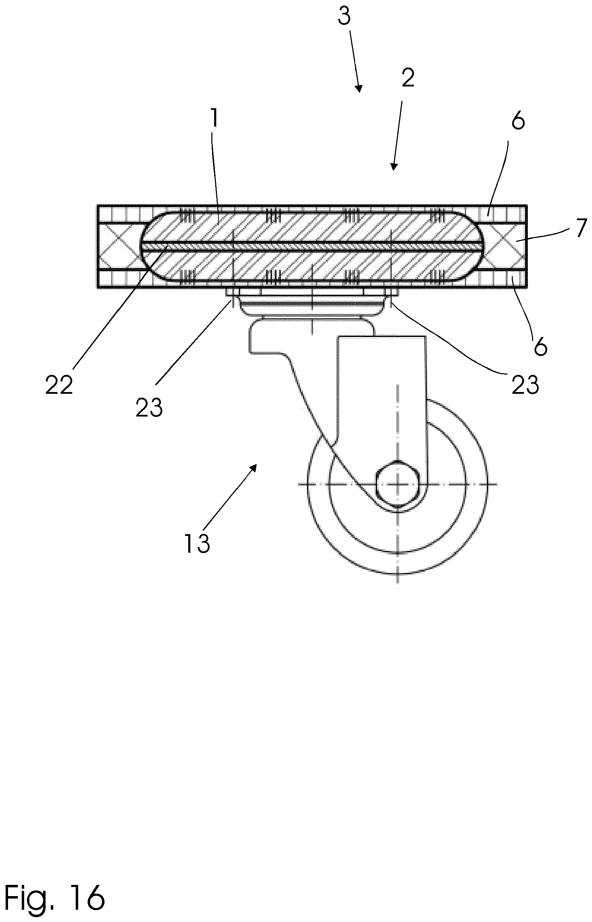

Figur 16 zeigt eine weitere Ausführungsform eines Inserts 1. Das Insert 1 ist in einen Randbereich 13 eines plattenförmigen Bauteils 2, das ebenfalls als Leichtbauplatte ausgebildet ist, eingebracht. Das Insert 1 ist speziell zur Aufnahme von Schrauben 23 ausgebildet und erhöht die Schraubenauszugsfestigkeit. Hierfür weist das Insert 1 eine Verstärkungsschicht 22 auf, die hier aus Metall besteht. Die Verstärkungsschicht 22 ist mittig im Insert 1 angeordnet, d. h., das Insert 1 besteht aus drei Schichten, die miteinander fest verbunden (bspw. verklebt) sind. Das Insert 1 wird in diesem Fall genutzt, um eine Lenkrolle 24 mittels der Schrauben 23 sicher an dem plattenförmigen Bauteil 2 zu befestigen.

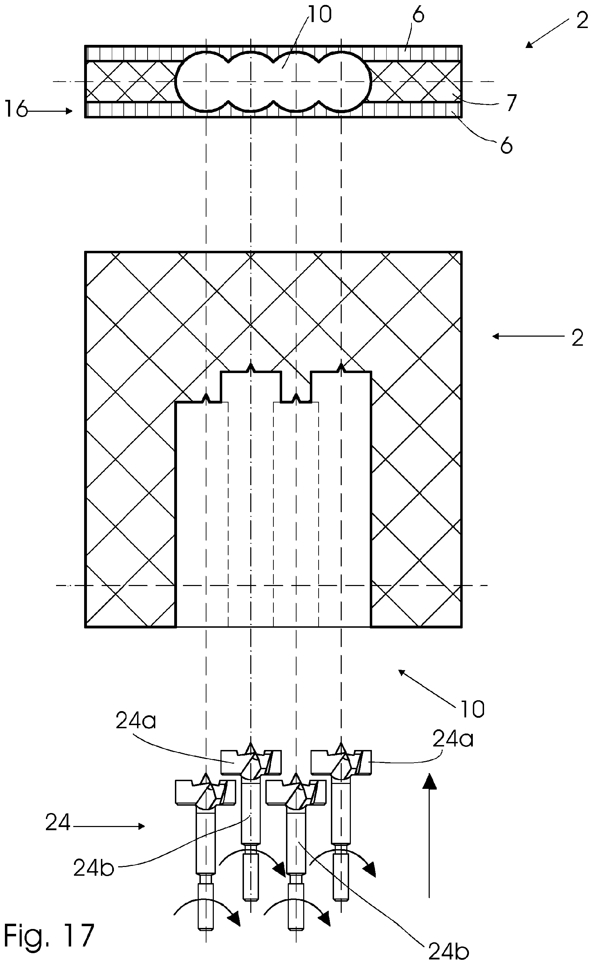

Figur 17 zeigt in zwei Darstellung eine weitere Ausführungsform der für das Insert 1 vorgesehenen Ausnehmung 10 in dem plattenförmigen Bauteil 2 und vier zum Herstellen der Ausnehmung 10 angeordnete Bohrer 24a, 24b. Die Ausnehmung 10 und dementsprechend auch das Insert 1 ist aus vier Kreisabschnitten ausgebildet. Dabei sind die eigentlich kreisförmigen Ausnehmungen überlappend angeordnet, sodass die vier Kreisabschnitte entstehen, die die Ausnehmung 10 bilden. Zum Herstellen einer derartigen Ausnehmung 10 kann beispielsweise ein Mehrspindelbohrkopf (hier nicht dargestellt) verwendet werden, mit dem mehrere Bohrer 24a, 24b, wie hier vier Bohrer 24a, 24b, die beispielsweise als Forstnerbohrer ausgebildet sind, gleichzeitig angetrieben werden können. Besonders geeignet sind zudem aus drei Kreisabschnitten gebildete Ausnehmungen/Inserts. Der Mehrspindelbohrkopf ermöglicht in vorteilhafter Weise mit einem einzelnen Arbeitsgang alle (vier) Kreisabschnitte, die die Ausnehmung 10 bilden, gleichzeitig herzustellen. Dabei werden die Bohrer 24a ,24b vorzugsweise versetzt angeordnet, sodass beim Bohren der Ausnehmung 10 zwei Bohrer 24a eine größere Bohrtiefe gegenüber den beiden weiteren Bohrern 24b aufweisen. Dabei können die Bohrer 24a, 24b beispielsweise alle in die gleiche Richtung drehend (hier durch Pfeile dargestellt) verwendet werden. Der Mehrspindelbohrkopf ermöglicht es, alle vier Bohrer 24 gleichzeitig in axialer Richtung der Bohrer 24 zu bewegen und ausgehend von der Schmalfläche 16 des plattenförmigen Bauteils 2 in das plattenförmige Bauteil 2 einzuführen. Das dazugehörige Insert 1 würde in der äußeren Gestaltung den (hier vier) Kreisabschnitten der Ausnehmung 10 entsprechen, in seiner Länge wäre es jedoch an die beiden kürzeren Ausnehmungen 10 angepasst.

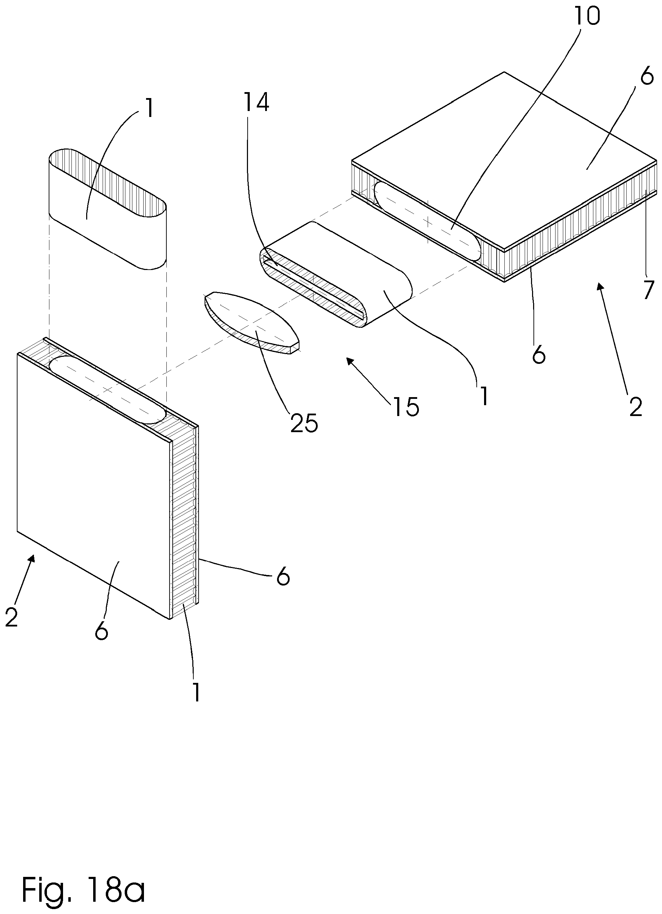

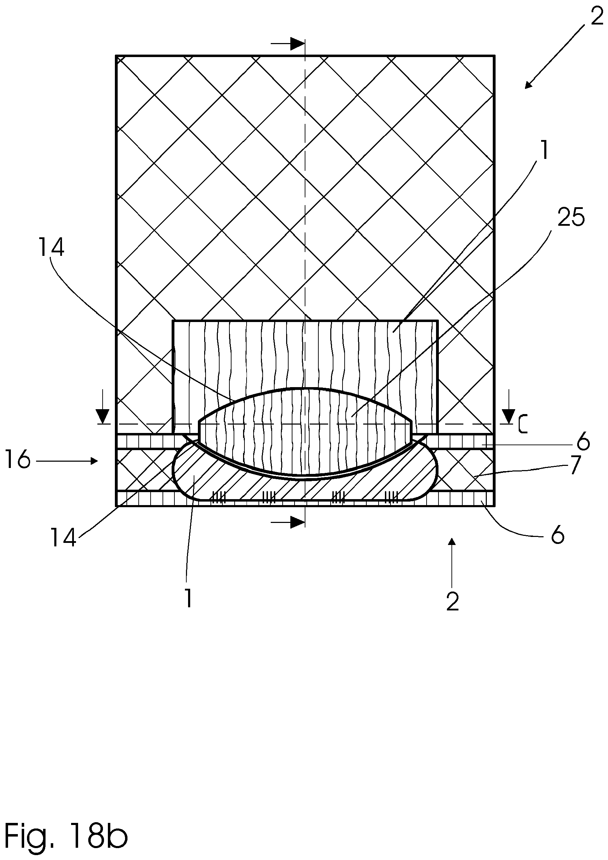

Figur 18a und Figur 18b zeigen eine weitere Ausführungsform des Inserts 1 und der zugehörigen Ausnehmung 10. Das Insert 1 weist ebenfalls die ovale Grundform auf und eine Ausnehmung 14, die im vertikalem Querschnitt schlitzförmig und im horizontalen Querschnitt halbovalförmig ausgebildet ist. Dabei ist die Ausnehmung 14 an die Form eines Lamellodübels 25 angepasst. Der Lamellodübel 25 ist somit als Verbindungsmittel 15, hier als Verleimhilfe, ausgebildet. Zum Verbinden ist in dem zweiten plattenförmigen Bauelement 2 ebenfalls eine halbovale, schlitzförmige (an den Lamellodübel angepasste) Ausnehmung angeordnet, die durch die Deckseiten 6 in das dortige Insert 1 ragt. Der Lamellodübel 25 ist in beiden Ausnehmungen 14 jeweils mit dem Insert 1 bzw. mit dem Insert 1 und gegebenenfalls der Deckseite 6 verleimt (hier nicht dargestellt).

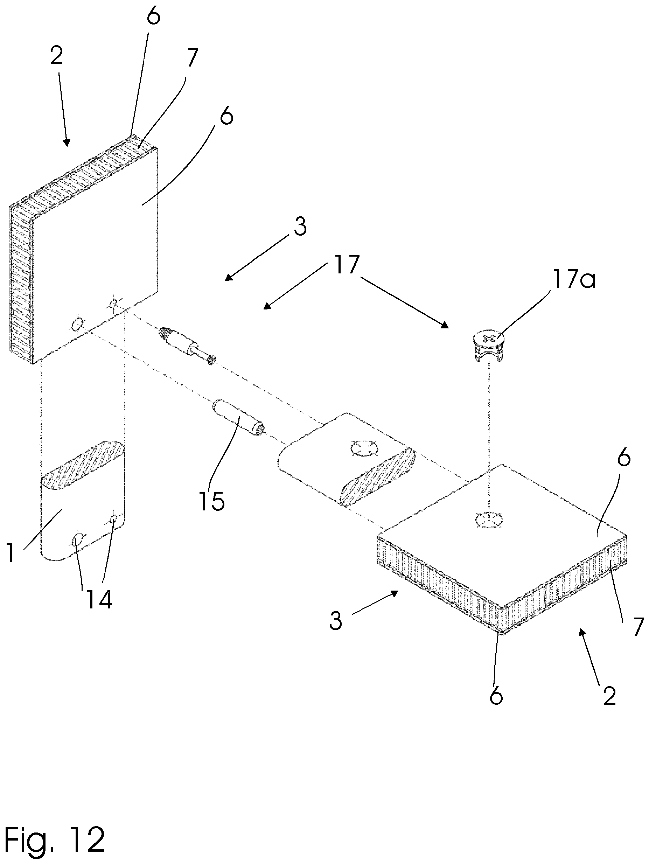

Alle in den Figuren 1 bis 18b dargestellten plattenförmigen Bauteile 2 sind als Leichtbauplatten mit zwei Deckschichten 6 und einem dazwischenliegenden Kern 7 ausgebildet, und weisen somit eine klare Grenze zwischen den Deckseiten 6 und dem Kern 7 auf. Alternativ können selbstverständlich auch eine oder beide der Leichtbauplatten im Querschnitt eine weniger deutliche Abgrenzung zwischen Deckseite 6 und Kern 7 aufweisen. So können eine oder beide der Leichtbauplatten aus einem einheitlichen Werkstoff wie beispielsweise Spänen oder Fasern bestehen, und einen fließenden Übergang zwischen Deckschichten 6 und Kern 7 (Mittelschicht) umfassen. Dieser kann bspw. durch einen gegenüber der Mittelschicht höheren Kompressionsgrad im Bereich der Deckschichten 6 erzeugt werden. Dabei weisen die beiden Deckschichten 6 eine höhere Dichte auf als der Kern 7. Die beiden Deckschichten 6 können beispielsweise aus einem Holzwerkstoff, wie einer Spanplatte, Faserplatte, Schichtholzplatte, Sperrholzplatte oder ähnlichem bestehen. Auch können die Deckschichten 6 beispielsweise, jedoch nicht erfindungsgemäß, einen Kunststoff oder metallischen Werkstoff umfassen oder aus diesem bestehen. Unabhängig von dem für den Kern 7 verwendeten Werkstoff weist dieser bei einer Leichtbauplatte eine geringere Dichte gegenüber den Deckschichten 6 auf. Der Kern 7 kann dementsprechend beispielsweise Papier, Pappe, Kunststoff, Holz, Holzwerkstoff, gegebenenfalls auch metallische Werkstoffe oder eine Kombination aus den vorgenannten Materialien umfassen oder hieraus ausgebildet sein. Vorzugsweise weist er dabei eine Wabenstruktur, Gitterstruktur o. ä. auf, sodass seine Dichte entsprechend gering ist. Alternativ kann der Kern 7 beispielsweise auch Schäume (hier nicht dargestellt), die sowohl hart, als auch elastisch ausgeführt sein können, umfassen.

Die in den Figuren 1-15 dargestellten Inserts 1 bestehen aus bzw. umfassen Vollholz oder einen Holzwerkstoff. Alternativ oder ergänzend können die Inserts 1 beispielsweise auch Kunststoff, beispielsweise als Spritzgussteil, gepresstes Papier, Metall oder ähnliches umfassen oder hieraus ausgebildet sein. Selbstverständlich kann das Insert 1, wie beispielsweise auch in Figur 16 dargestellt, aus einer Kombination mehrerer Werkstoffe, hier Holz bzw. Holzwerkstoff in Kombination mit einem Metall, ausgebildet sein.

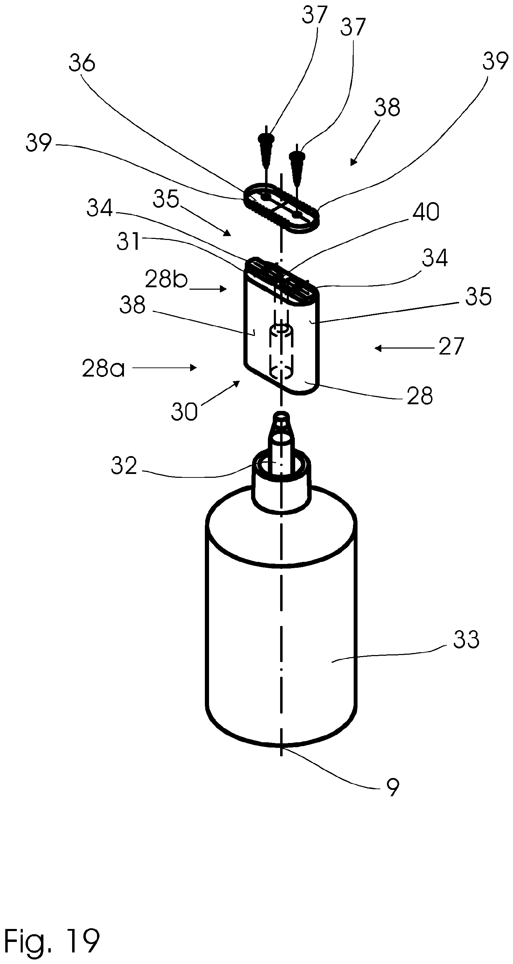

Figur 19 zeigt eine Auftragsvorrichtung 25 zum Auftragen eines Klebstoffs (hier nicht dargestellt) auf die Oberfläche 26 (siehe beispielsweise Figur 18a) der Ausnehmung 10. Die Auftragsvorrichtung 27 ist somit insbesondere zum Auftragen des Klebstoffs auf die innenliegenden Oberflächenabschnitte (im Weiteren auch Oberflächen) der Ausnehmung 10 ausgebildet. Dabei ist sie insbesondere derart ausgebildet, dass mit ihr ein Klebstoffauftrag in Richtung der Deckschichten 6 erfolgt. Selbstverständlich kann die Auftragsvorrichtung 25 jedoch auch derart ausgebildet sein, dass sie einen Klebstoffauftrag in Richtung der Deckschichten 6 und zusätzlich parallel zu den Deckschichten 6 ermöglicht.

Die Auftragsvorrichtung 25 ist insbesondere im vertikalem Querschnitt an den vertikalen Querschnitt der Ausnehmung 10 und somit auch an die vertikale Querschnittsform des Inserts 1 angepasst. Unter dem vertikalen Querschnitt der Ausnehmung wird (bei allen beschriebenen Ausführungen) insbesondere die Querschnittsebene verstanden, die senkrecht zur Einführungsrichtung des Inserts 1 auf der Ausnehmung 10 steht. Dabei kann die Auftragsvorrichtung 25 insbesondere geringfügig, kleiner (im Querschnitt bei gleichbleibender Form) ausgebildet sein, damit sie besonders einfach in die Ausnehmung eingeführt werden kann.

Die in Figur 19 dargestellte Auftragsvorrichtung 27 weist einen Grundkörper 28 auf, der im Querschnitt entsprechend der obigen Darstellung an den Querschnitt einer ovalen Ausnehmung 10 (siehe beispielsweise Figur 1, 2, 5, 6, 10, 11, 12, 15, 16, 18a, 18a) angepasst ist. Die Auftragsvorrichtung 2 bzw. der Grundkörper 28 kann selbstverständlich auch an alternative Querschnittsformen (siehe beispielsweise Figuren 3, 4, 7, 8, 17) angepasst sein.

Weiter weist die Auftragsvorrichtung 27 einen Klebestoffkanal 29 auf. Der Klebstoffkanal 29 ist im Querschnitt rund ausgebildet. Der Klebstoffkanal 29 ist hier im Inneren des Grundkörpers 28 angeordnet. Er erstreckt sich zwischen zwei Stirnseiten 30, 31 des Grundkörpers 28. Mit einem ersten Ende 28 a des Grundkörpers 28 ist die Auftragsvorrichtung 25 dazu ausgebildet, auf eine entsprechend korrespondierend ausgebildete Aufnahme 32 (hier als Flaschenspitze ausgebildet) einer Klebstoffabgabevorrichtung, hier einer Klebstoffflasche 33, aufgesetzt zu werden. Dabei ist die Auftragsvorrichtung 27 und insbesondere das erste Ende 28a insbesondere derart ausgebildet, dass sie auf der entsprechenden Aufnahme 32 festklemmt. Selbstverständlich kann die Aufnahme 32 auch als Aufnahme für eine anderweitige Klebstoffabgabevorrichtung, beispielsweise auch eine automatische, und/oder industriell verwendete Klebstoffabgabevorrichtung ausgebildet sein.

Wie bereits erwähnt, erstreckt sich der Klebstoffkanal 29 zwischen den beiden Stirnseiten 30, 31, sodass der Klebstoff (hier nicht dargestellt) von der Klebstoffflasche 33 durch die Aufnahme 32, durch den Klebstoffkanal 29 fließt und aus einer am zweiten Ende 28 B des Grundkörpers 28 vorliegenden zweiten Stirnseite 31 aus einer Klebstoffaustrittsöffnung 40 austritt.

Auf der zweiten Stirnseite 31 sind zudem zwei Abstandshalter 34 angeordnet. Die beiden Abstandshalter 34 sind dabei rechts und links von der Klebstoffaustrittsöffnung 40 positioniert. Sie erstrecken sich jeweils von der Klebstoffaustrittsöffnung 40 zu jeweils einer der Seitenflächen 35 des Grundkörpers 28, die hier rund ausgebildet sind. Sie sind gegenüber der Breite des Grundkörpers 28 schmaler ausgebildet.

In Längsachsenrichtung 9 des Grundkörpers 28 ist nachfolgend auf die Abstandshalter 34 eine Klebstoffverteileinheit 36 (hier als Zahnrakel ausgebildet) angeordnet. Insbesondere für die bessere Reinigbarkeit und Austauschbarkeit der Klebstoffverteileinheit 36 ist diese mittels mindestens einer lösbaren Schraube 37, hier mittels zwei lösbarer Schrauben 37 an dem Grundkörper 28 fixiert. Dabei ragen die Schrauben 37 durch die Abstandshalter 34 durch.

Bei der Benutzung unterstützen die Abstandshalter 34 die Klebstoffverteilung, da aufgrund der Anordnung der Abstandshalter 34 in Kombination mit der Klebstoffverteileinheit 36 der aus der Klebstoffaustrittsöffnung 40 austretende Klebstoff automatisch in Richtung der beiden Flächenabschnitte 38 des Grundkörpers 28 geleitet wird, die, in der in die Ausnehmung 10 eingeführten Position, in Richtung der Deckseiten 6 zeigen.

Die Klebstoffverteileinheit 36 weist ebenfalls einen an den Querschnitt der Ausnehmung 10 angepassten Querschnitt auf, d. h. sie ist an den Querschnitt der Ausnehmung 10 angepasst. Dabei kann sie bspw. passgenau oder mit geringen Übermass (wenige Zehmtelmillimeter) zur Ausnehmung 10 ausgebildet sein.

Zum Verteilen des Klebstoffes weist die Klebstoffverteilereinheit 36 Zähne 39 auf. Die Zähne 39 sind mit ihren Zahnspitzen (hier nicht dargestellt) quer zur Längsachse 9 ausgerichtet, d. h. sie weisen in der eingeführten Position ebenfalls in Richtung der Deckseiten 6.

Bei der Benutzung der Auftragsvorrichtung 27 wird diese mit ihrem Grundkörper 28 in Längsachsenrichtung 9 in eine Ausnehmung 10 eingeführt. Nach dem Einführen wird über die Klebstoffflasche 33 (Klebstoffabgabevorrichtung) der Klebstoff aus der Klebstoffaustrittsöffnung 40 herausgedrückt, sodass dieser in einen Bereich zwischen den Abstandshaltern 34 und der Oberfläche 26 der Ausnehmung 10 kommt. Beim Herausziehen der Auftragsvorrichtung 27 aus der Ausnehmung 10 wird weiterer Klebstoff bereitgestellt. Mittels der Klebstoffverteilvorrichtung 36 wird der in dem Bereich zwischen dem Abstandshalter 34 und der Oberfläche 26 vorhandene Klebstoff gleichmäßig verteilt, hier aufgrund der Zähne in gleichmäßige Streifen gezogen.

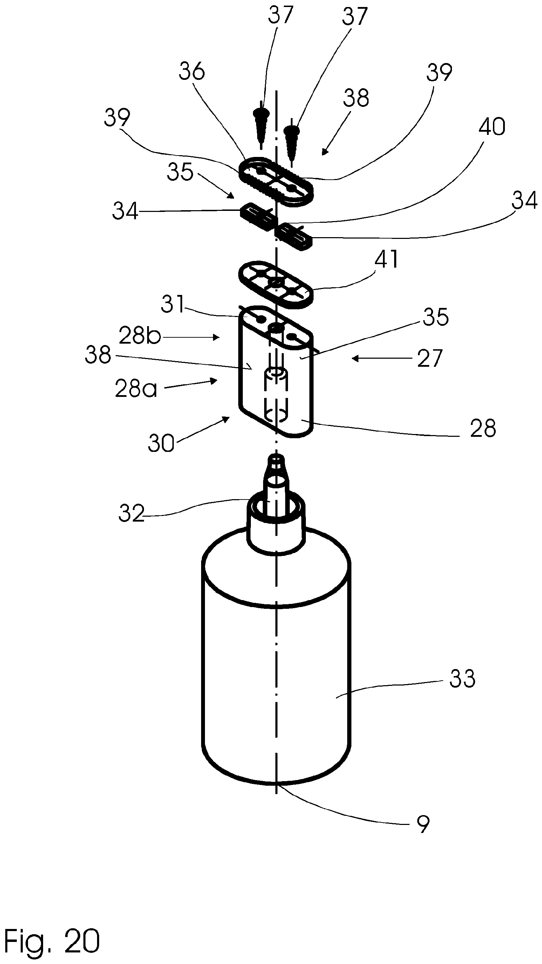

Figur 20 zeigt eine weitere Ausführungsform, die zu der in Figur 19 gezeigten Ausführungsform weitestgehend identisch ausgebildet ist. Sie weist jedoch zwischen dem Grundkörper 28 und den Abstandshaltern 34 einen Abstreifen 41 auf. Der Abstreifen 41 verhindert, dass sich der Klebstoff beim Auftragen des Klebstoffes auf die Oberfläche 26 der Ausnehmung 10 auf dem Grundkörper 28 verteilt. Der Abstreifen 41 verhindert beim Einführen der Auftragsvorrichtung 27 in die Ausnehmung, dass gegebenenfalls bereits im Bereich der Abstandshalter/Klebstoffverteileinheit vorhandener Klebstoff an den Grundkörper kommt. Der Abstreifen 41 kann vorzugsweise derart ausgebildet sein, dass er beim Einführen (und/oder ggf. auch beim Herausziehen) in die Ausnehmung 10 an der Oberfläche der Ausnehmung 10 anliegt.

Der Abstreifen 41 ist dementsprechend ebenfalls an die Querschnittsform der Ausnehmung 10 angepasst und beispielsweise passgenau ausgebildet. Auch kann der Abstreifen gegebenenfalls im Querschnitt bei angepasster Form geringfügig (beispielsweise wenige Zehntelmillimeter) größer ausgebildet sein, damit er sicher an der Oberfläche anliegt. Alternativ und bspw. sofern er nur den Grundkörper vor Klebstoff schützen soll, kann er selbstverständlich auch wenige Zehntelmillimeter kleiner (bspw. an den Grundkörper 28 angepasst) ausgebildet sein. Der Abstreifen 41 besteht vorzugsweise aus einem Kunststoff (wie bspw. PP) oder Kautschuk. Er kann elastisch ausgebildet sein, sodass er beispielsweise beim Entlanggleiten an der Oberfläche eine leichte Verformung erfährt. Ein besonders haltbarer Abstreifer kann bspw. PP und wenig elastisch ausgebildet sein.

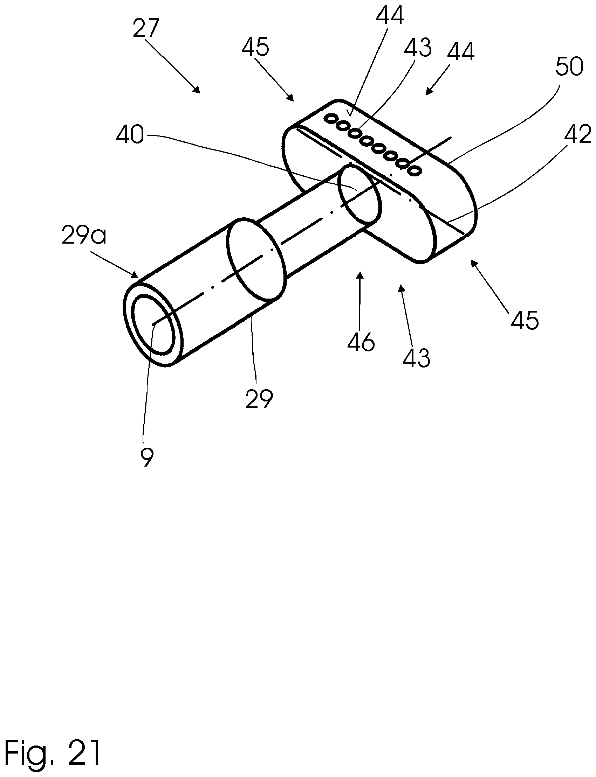

Figur 21 zeigt eine alternative Ausführungsform der Auftragsvorrichtung 27. Die Auftragsvorrichtung 27 weist einen Klebstoffkopf 42 auf, der sich an die Klebstoffaustrittsöffnung 40 des Klebstoffkanals 29 anschließt. Die Auftragsvorrichtung 27 weist somit keinen Grundkörper 28 entsprechend der Ausführungsform aus Figur 19 und 20 auf. Der Klebstoffkanal 29 ist wie der Klebstoffkanal 29 bei den Ausführungsformen aus Figur 19 und 20 zweiteilig aufgebaut und weist einen ersten Abschnitt 29a auf, der vom Durchmesser darauf ausgelegt ist, auf die Aufnahme 32 der Klebstoffauftragsvorrichtung aufgesetzt zu werden. Der zweite Abschnitt 29b des Klebstoffkanals 29 ist im Durchmesser verändert und auf die notwendige Klebstoffaustrittsmenge, die aus der Klebstoffaustrittsöffnung 40 in einer bestimmten Zeiteinheit austreten soll, ausgerichtet. Hier weist der zweite Abschnitt somit einen geringeren Querschnitt als der erste Abschnitt auf. Beide Abschnitte 29a, 29b sind im Querschnitt rund ausgebildet.

Der Klebstoffkopf 42 ist im Querschnitt an den Querschnitt der Ausnehmung 10 angepasst und zwar entsprechend der Beschreibung des Grundkörpers 28 zu Figur 19 und Figur 20. Er kann somit passgenau zur Ausnehmung 10 oder auch beispielsweise in der Form gleichbleibend jedoch im Querschnitt geringfügig kleiner ausgebildet sein.

Die Auftragsvorrichtung 27 weist Klebstoffdüsen 43 auf, die derart angeordnet sind, dass sie zumindest auf die zu den Deckseiten 6 ausgerichteten Oberflächen 26 der Ausnehmung 10 einen Klebstoff abgeben. D. h., die Klebstoffdüsen 43 sind derart ausgerichtet, dass der Klebstoffaustrag aus ihnen in Richtung der Deckseiten 6 erfolgt.

Bei der in Figur 21 dargestellten Auftragsvorrichtung weist der Klebstoffkopf 42 eine ovale Querschnittsform auf, bei der ein gerades Mittelstück 44 mit parallelen Außenflächen jeweils an seinen gegenüberliegenden Enden einen Kreisabschnitt 45 aufweist. Die Klebstoffdüsen 43 sind im Bereich des geraden Mittelstücks 44 angeordnet. Alternativ oder ergänzend könnten auch Klebstoffdüsen 43 im Bereich der Kreisabschnitte 45 angeordnet sein. Die Klebstoffdüsen 43 sind somit derart ausgerichtet, dass der Klebstoff quer zur Längsachse 9 der Auftragsvorrichtung 27 (hier ausschließlich im Bereich des geraden Mittelstücks44) aus den Klebstoffdüsen 43 ausgetragen wird. Die Klebstoffdüsen 43 sind in einer Reihe nebeneinander angeordnet. Die Reihe aus Klebstoffdüsen 43 ist dabei quer zur Längsachse 9 ausgerichtet. Die Klebstoffdüsen 43 sind somit in Austragsflächen 46 angeordnet, die parallel zueinander angeordnet sind. Die Austragsflächen 46 sind, in dieser Asuführungsform, eben, d. h., sowohl im vertikalen Querschnitt parallel zur Längsachse 9 als auch quer zur Längsachse 9 jeweils gerade.

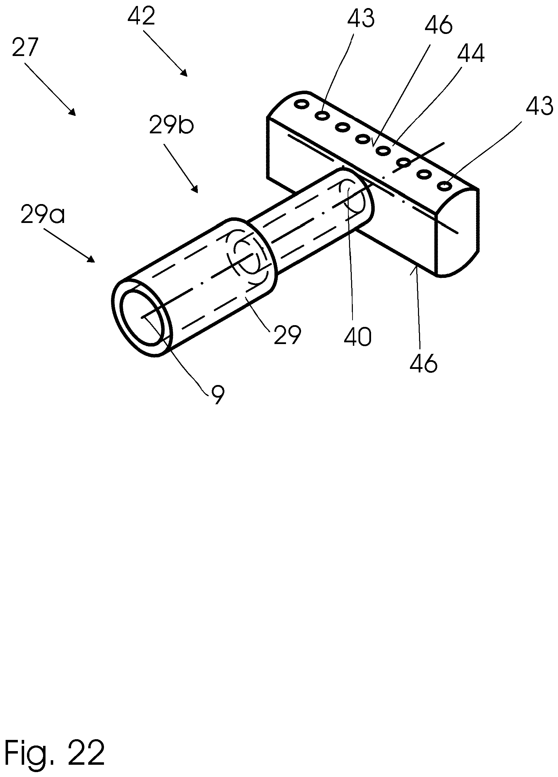

Die in Figur 22 dargestellte Ausführungsform ist weitestgehend identisch zur Ausführungsform in Figur 21 ausgebildet. Sie unterscheidet sich jedoch in der Form des Klebstoffkopfes 42. Bei dieser Ausführungsform ist der Klebstoffkopf 42 als Balken mit geraden Enden, d. h. ohne Kreisabschnitte an seinen Enden, ausgebildet. Zudem ist die Austragsfläche 46 nicht eben, sondern rund ausgeformt. Hierdurch wird der Kontaktbereich zwischen dem Klebstoffkopf 42 und der Oberfläche 26 der Ausnehmung 10 verringert. Selbstverständlich ist auch eine Balkenform mit ebenen oder hohlen Austrittsfläachen 46 oder eine ovaler Kopf mit runden Austrittsflächen 46 möglich.

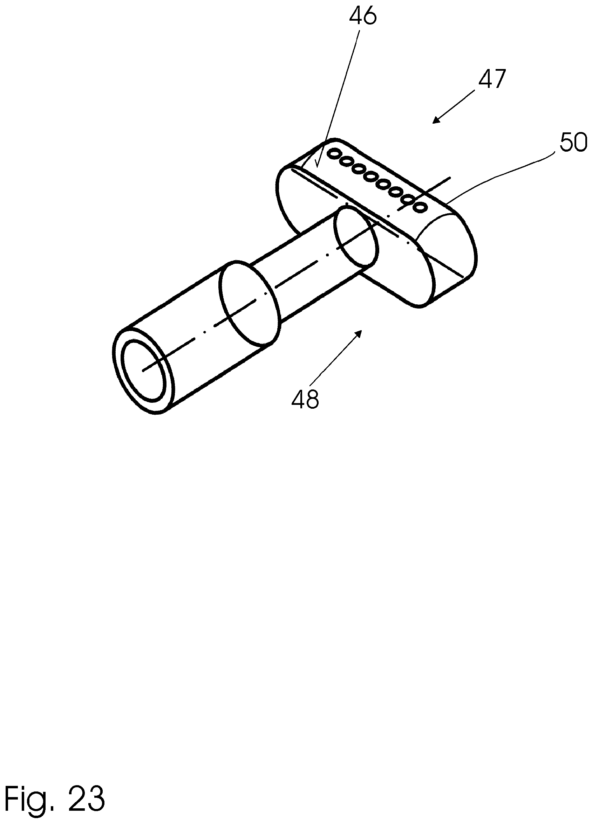

Die Figur 23 zeigt eine weitere Ausführungsform der Auftragsvorrichtung 27. Diese Ausführungsform ist ebenfalls weitestgehend identisch zu den in Figur 21 und 22 gezeigten Ausführungsformen. Diese Ausführungsform unterscheidet sich im Wesentlichen auch wieder durch die Ausgestaltung des Klebstoffkopfes 42. Der Klebstoffkopf 42 ist entsprechend der Ausführungsform aus Figur 21 im Querschnitt an die Querschnittsform der Ausnehmung angepasst. Die Austragsflächen 46 sind jedoch entgegen der Ausführungsform in Figur 22 nicht rund, sondern hohl, als Hohlkehle, ausgebildet. Ferner sind die Klebstoffdüsen 43, die ebenfalls auf beiden Seiten des Klebstoffkopfes 42 angeordnet sind, in Reihen angeordnet. Die Klebstoffdüsen 43 sind jedoch aus einer zentralen Position zwischen der äußeren Stirnseite 47 und der inneren Stirnseite 48 in Richtung der äußeren Stirnseite 27 verschoben. Durch die Veränderung der Position wird insbesondere eine geringere Verschmutzung des Klebstoffkopfes 42 erreicht. Die Hohlkehle bewirkt zudem das Ausbilden eines Reservoirs, sodass immer ausreichend Klebstoff auf die Oberfläche 26 der Ausnehmung 10 aufgetragen wird. Die runden, hohlen oder ebenen Austrittsflächen 46 sind unabhängig von der Form des Klebstoffkopfes 42 ausbildbar.

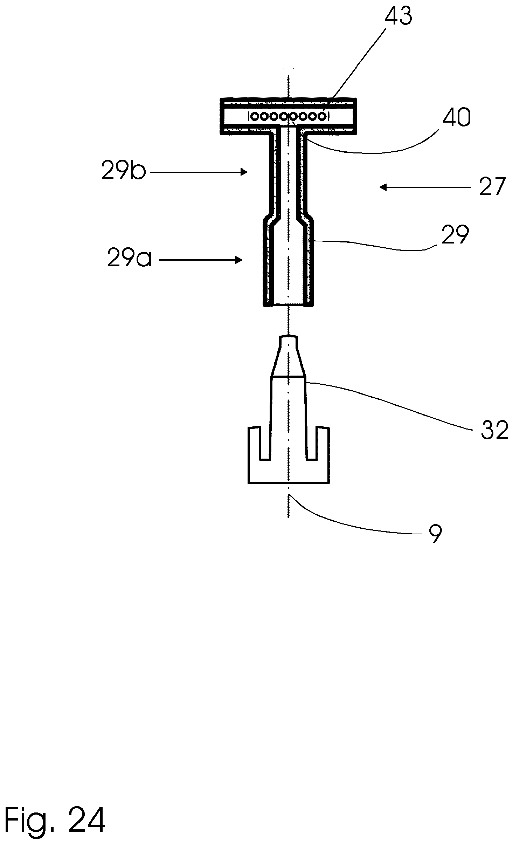

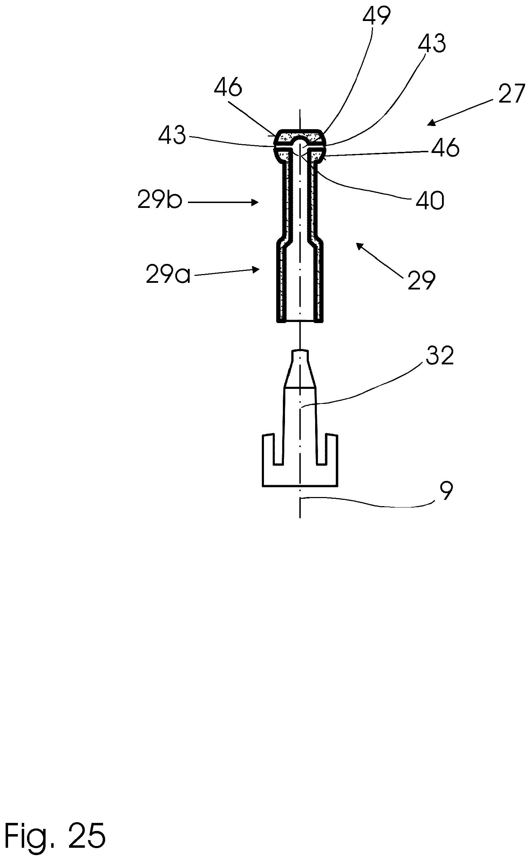

Die Figuren 24 und 25 zeigen schematisch die Auftragsvorrichtungen 27 aus den Figuren 21-23 in Querschnitten, wobei die jeweiligen Formen der Klebstoffköpfe 42 nur bedingt dargestellt sind.

Figur 24 zeigt einen Querschnitt parallel zu den Austragsflächen 46. In Figur 24 ist deutlich die einstückige Ausbildung der Auftragsvorrichtung 27 erkennbar. Ferner ist die Querschnittveränderung des Klebstoffkanals 29 zwischen dem ersten Abschnitt 29a und dem zweiten Abschnitt 29b dargestellt. Die in Reihe angeordneten Klebstoffdüsen 43 sind quer zur Längsachse 9, hier in einem 90°-Winkel ausgerichtet.

Figur 25 zeigt einen Querschnitt quer zu den Austragsflächen 46. In Figur 25 ist ebenfalls der Klebstoffkanal 29 mit seinem ersten Abschnitt 29a und zweiten Abschnitt 29b deutlich erkennbar. Der Klebstoffkanal 29 mündet in eine Klebstoffaustrittsöffnung 40. Der Klebstoffkopf 42 weist quer zur Längsachse 9 die Klebstoffdüsen 43 auf. Die Klebstoffdüsen 43 sind dabei in den beiden parallel zueinander angeordneten Austragsflächen 46 angeordnet. Die Austragsflächen 46 sind hier im Querschnitt rund (wie Figur 22) dargestellt, können alternativ aber beispielsweise auch gerade (siehe Figur 21) oder als Hohlkehle (siehe Figur 23) ausgebildet sein. Hier dargestellt ist ferner ein Klebstoffverteilkanal 49, der sich an die Klebstoffaustrittsöffnung 40 anschließt und in dem der Klebstoff zu den Klebstoffdüsen 43 transportiert wird.

Bei den in Figur 21 und Figur 23 dargestellten Ausführungsformen können alternativ beispielsweise im Bereich der äußeren Kanten 50 zwischen der äußeren Stirnseite 47 und den Austragsflächen 46 eine Klebstoffverteilereinheit, wie beispielsweise eine Rakel angeordnet werden, die bspw. einteilig mit dem Rest der Auftragsvorrichtung 27 ausgebildet und hergestellt werden kann.

Die in Figur 21 bis Figur 25 dargestellten Ausführungsformen der Auftragsvorrichtung 27 können als einteilige Bauteile, beispielsweise als Spritzgussbauteile, Hohlblasformteile oder als Tiefziehteile aus beispielsweise Folie ausgebildet sein. Bei allen diesen Auftragsvorrichtungen 25 und auch den Ausführungsformen aus Figur 19 und 20 ist das Grundprinzip nämlich, dass der Leimaustrag zumindest in Richtung der Breitflächen der Ausnehmungen 10 und somit in entgegengesetzte Richtung erfolgt, identisch.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block- oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparates), wie z. B. einen Mikroprozessor, einen programmierbaren Computer oder eine elektronische Schaltung ausgeführt werden.

## Patentansprüche

1. Insert-System mit einem plattenförmigen Bauteil (2) und einem Insert (1) zur zonalen Funktionalisierung des plattenförmigen Bauteils (2) im Randbereich eines Plattenwerkstoffs mit diskontinuierlichem Dichteverlauf im Plattenquerschnitt oder eines mehrlagigen Sandwichplattenwerkstoffs, die beide mind. zwei äußere mehr oder weniger abgegrenzte Deckschichten (6) aus Holz oder Holzwerkstoff und eine dazwischen angeordnete Kernschicht (7) aufweisen, mit einer senkrecht zur Schmalfläche (16) eingebrachten Ausnehmung (10) und dem in diese Ausnehmung (10) eingeschobenen und dort dauerfest, insb. stoffschlüssig verankerten Insert (1) aus vollem Material, das geeignet ist ein derartiges plattenförmiges Bauteil (2) zonal in seiner Festigkeit durch die partielle Materialanhäufung wesentlich zu verstärken, insb. zur Ausbildung von dauerhaft gefügten Bauteilverbindungen oder zur Unterstützung der Bauteil- und Produktstabilität gegenüber Kräften, die im Herstell- und Montageprozess eines Produktes oder während der Nutzung eines Produktes von außen auf das plattenförmige Bauteil (2) einwirken, und/oder das geeignet ist, ein derartiges plattenförmiges Bauteil (2) zonal mit funktionserweiternden Elementen zum Vorteil von Herstell-, Montageprozess und/oder Nutzung des Bauteils oder eines Endproduktes weitestgehend von außen unsichtbar auszustatten, **dadurch gekennzeichnet, dass** die Ausnehmung (10) punktuell oder regional in einer Plattenschmalfläche oder über Eck in zwei benachbarte Plattenschmalflächen eingebracht ist und eine im Querschnitt ovale oder eine aus auf einer Linie liegenden Kreisen zusammengesetzte Kontur aufweist.

2. Insert-System nach dem Anspruch 1, **dadurch gekennzeichnet, dass** das die Ausnehmung (10) vollständig oder teilweise ausfüllende Insert aus einem Vollmaterial besteht, das in Abstimmung zum Material der Kernschicht (7) und insb. der Deckschichten (6) des plattenförmigen Bauteils (2) mit herkömmlichen Leim- bzw. Klebstoffsystemen - Weißleim bei ligno-zellulosebasierten Plattenwerkstoffen und Inserts (1) aus Massivholz oder Holzwerkstoffen - dauerhaft wirksam verbunden ist.

3. Insert-System nach einem der Ansprüchen 1 und 2, **dadurch gekennzeichnet, dass** das Insert (1) vor dem Einbringen, im eingebrachten Zustand isoliert und/oder gemeinsam mit dem Plattenförmigen Bauteil (2) in herkömmlichen, materialabtragenden spanenden und materialauftragenden Fertigungsprozessschritten bearbeitet werden kann.

4. Insert-System nach einem der vorhergehenden Ansprüche, **dadurch gekennzeichnet, dass** das Insert (1) nach dem dauerfesten Einbringen und weiterer spanender Bearbeitung von Insert und/oder plattenförmigen Bauteil (2) und Insert (1) form- und stoffschlüssig Verbindungselemente zur festen Bauteilverbindung oder form- und kraftschlüssig zur lösbaren Bauteilverbindung auch über wirksame Schraubbefestigungen aufnehmen kann.

5. Insert-System nach einem der vorhergehenden Ansprüche, **dadurch gekennzeichnet, dass** das Insert (1) bereits vor dem dauerfesten Einbringen in das plattenförmige Bauteil (2) mit Funktionselementen zur Bauteilverbindung oder funktionserweiternden Elementen ausgestattet ist, und diese Elemente durch das dauerfeste Einbringen des Inserts (1) weitgehend unsichtbar in das plattenförmige Bauteil (2) integriert sind.

6. Insert-System nach einem der vorhergehenden Ansprüche, **dadurch gekennzeichnet, dass** das Insert (1) selber schichtweise aufgebaut ist und dergestalt Verstärkungsschichten oder Verstärkungselemente enthalten kann, die eine besonders hohe Schraubfestigkeit u.a. auch eine metrische oder sonstige Verschraubung für den späteren Anschluss von externen Elementen oder weiteren Bauteilen an das so ausgestattete, plattenförmige Bauteil ermöglichen.

7. Insert-System nach einem der vorhergehenden Ansprüche, **dadurch gekennzeichnet, dass** das Insert (1) selber aus einem strom- bzw. signalleitenden Werkstoff hergestellt oder mit einer leitenden Oberflächenbeschichtung versehen ist, so dass Energie oder Signale, die in das Insert (1) von außen durch Steckverbindung oder per Induktion eingeleitet werden, an eine oder beide Deckschichten (6) oder die angrenzende Schmalflächenbeschichtung weitergeleitet werden können, oder das Insert (1) zur Erfüllung dieses Zweckes schichtweise aufgebaut ist, oder zumindest eine nichtleitende Schicht in seinem Aufbau besitzt, wobei eine solche Isolationsschicht nicht zwangsläufig parallel waagerecht oder parallel senkrecht verlaufen muss, sondern an zweckmäßiger Stelle jedweden Verlauf nehmen kann, oder das Insert zumindest in Teilen mit einer isolierenden Oberfläche ausgestattet, um Energie oder Signale gezielt nur in eine Richtung, entweder durch direkten Kontakt oder überleitende Verbinder, weiterzugeben.

8. Insert-System nach einem der vorhergehenden Ansprüche, **dadurch gekennzeichnet, dass** das Insert (1) an sich oder durch weitere geeignete Formgebung wie eine in der Ebene liegenden Abwinkelung oder eine räumliche Abwinkelung oder eine sonstige, teilflächige, stirnseitige Formgebung und einen entsprechenden Überstand über die Kanten der Ausnehmung geeignet ist, selber die Verbindungsfunktion von Bauteilen wie eindimensionale Plattenlängs- oder Plattenbreitenverbindungen, zweidimensionale winkel- oder T-förmige Platteneckverbindungen oder dreidimensionale Korpuseckverbindungen von drei plattenförmigen Bauteilen und mehr Bauteilen im Zusammenwirken mit Leim- bzw. Klebstoffsystemen und/oder integrierten Beschlagsystemen oder einer mechanischen Klemmverbindung zu erfüllen.

9. Insert-System nach einem der vorhergehenden Ansprüche, **dadurch gekennzeichnet, dass** das Insert (1) selber und/oder die Ausnehmung (10) mit leichten Vertiefungen und/oder Erhöhungen in parallel zum Schmalflächenverlauf angeordneter Rillen-, oder Schuppenform zumindest in Teilbereichen seiner/ihrer Breitflächen versehen ist, was einerseits eine mechanische Verrastung und andererseits eine bessere Leim- bzw. Klebstoffverteilung sowie mechanische Leim- bzw. Klebstoffverankerung begünstigt und gleichzeitig der vollständigen Leim- bzw. Klebstoffverdrängung beim Einschieben des Inserts (1) in die komplementäre Ausnehmung entgegenwirkt.

10. Insert-System nach einem der vorhergehenden Ansprüche, **dadurch gekennzeichnet, dass** das Insert (1) selber entweder vollständig aus thermoplastischem Kunststoff oder einem thermoplastischen Verbundwerkstoff besteht oder aus einem anderen Werkstoff hergestellt ist, dafür aber eine sich im Wesentlichen aus thermoplastischem Kunststoff zusammensetzende Oberflächenbeschichtung erhält, um das Insert nach dem Einführen in seine Endposition in der komplementären Ausnehmung an der Grenzfläche zu den Breitflächen der Ausnehmung durch Einleitung von Wärme und Druck oder Vibrationsenergie und Druck über eine oder beide Breitflächen des plattenförmigen Bauteils (2) mit den Deckschichten (6) des Bauteils durch Eindringen des verflüssigten Kunststoffs in die Kavitäten der porösen Deckschichten zur Ausbildung eines dauerfesten Mikroformschlusses zu verschweißen.

11. Insert-System nach einem der vorhergehenden Ansprüche, **dadurch gekennzeichnet, dass** das Insert (1) selber zumindest in Teilen aus einem definiert elastischen Material gefertigt ist, um im weiteren Montageprozess des damit ausgestatteten plattenförmigen Bauteils flexibel Toleranzen aufnehmen zu können oder im späteren Produktgebrauch eine gewisse Dämpfungsfunktion und/oder Körperschallwellenentkopplungsfunktion im Verbindungspunkt zu realisieren.

12. Insert-System nach einem der vorhergehenden Ansprüche, **dadurch gekennzeichnet, dass** das Insert (1) selber zumindest in Teilen aus einem unter normalen Produktnutzungsbedingungen festen, polymeren Werkstoff hergestellt ist, der bei gezielter Energieeinleitung außerhalb der normalen Nutzungsbedingungen gezielt erweicht und somit die Demontage eines derart gefertigten Produktes nach Ablauf der Nutzungsphase wesentlich vereinfacht.

13. Verfahren zur Einbringung eines Inserts in ein plattenförmiges Bauteil entsprechend eines Insert-Systems nach mindestens einem der Ansprüche 1 bis 12 **dadurch gekennzeichnet, dass** die Aussparung im plattenförmigen Bauteil (2) durch einen spanenden Eingriff mit einem Bohrer oder Schaftfräser vorgenommen wird, der um eine senkrecht zur Plattenschmalfläche (16) liegende Achse rotiert und der mind. einmal in axialer Richtung von Seiten einer Schmalfläche (16), oder über Eck von Seiten zweier benachbarter Schmalflächen (16) parallel zu den Breitflächen in das Bauteil eindringt und derart eine im Querschnitt kreisrunde Ausnehmung herstellt und der außerdem durch mind. eine zusätzliche seitliche Bewegung eine im Querschnitt ovalförmige Ausnehmung herstellen kann, wobei die Ausnehmung nur die Kernschicht (7), die Kernschicht (7) und eine Deckschicht (6) oder die Kernschicht (7) und beide Deckschichten (6) erfassen kann, ohne dass es dabei zu einer Öffnung der Plattenbreitflächen im Eingriffsbereich kommt und die Ausnehmung mittels eines durch eine Handmaschine betriebenen Bohrers oder Schaftfräsers erzeugt wird.

14. Verfahren nach Anspruch 13, **dadurch gekennzeichnet, dass** die Positionen von Inserts (1) und Ausnehmungen (10) derart in der Rohplatte oder in einem Plattenzuschnitt oder einem vorformatierten Plattenstrang (Halbfertigprodukt) angeordnet wird , dass durch einen im Prozess nachgelagerten Trennschnitt zur Formatierung gleich mehrere plattenförmige Bauteile (2) Anteile eines ursprünglich einzigen Inserts (1) an geeigneter Stelle aufweisen.

15. Verfahren nach Anspruch 13 **dadurch gekennzeichnet, dass** ein mind. zweikomponentiges Klebstoffsystem eingesetzt wird und die Fügepartner Insert und Ausnehmung nur jeweils mit einer Klebstoffkomponente benetzt werden, so dass der Reaktionsprozess zur Ausbildung einer dauerfesten Klebefuge erst mit dem Vereinigen der Fügepartner beginnt oder einer oder beide Fügepartner mit einem Schmelzklebstoff vorbeschichtet sind, der durch später ins Bauteil eingeleitete Wärmenergie erneut verflüssigt wird und somit die Klebstoffapplikation zeitlich vom Fügeprozess getrennt wird.

## Claims

1. Insert system comprising a plate-shaped component (2) and an insert (1) for zonal functionalization of the plate-shaped component (2) in the edge region of a plate material with discontinuous density gradient in the plate cross-section or of a multi-layer sandwich plate material, both of which comprise at least two outer more or less delimited cover layers (6) of wood or wood material and a core layer (7) disposed therebetween, comprising a recess (10) introduced perpendicular to the narrow surface (16) and the insert (1) made of a solid material which is inserted into this recess (10) and is anchored there in a permanently fixed, in particular material bond manner, which is suitable for substantially reinforcing such a plate-shaped component (2) zonally in its strength by the partial accumulation of material, in particular for the formation of permanently joined component connections (3) or for supporting the component and product stability with respect to forces acting from the outside onto the plate-shaped component (2) during the manufacturing and assembly process of a product or during the use of a product, and/or which is suitable for providing such a plate-shaped component (2) zonally with function-enhancing elements for the benefit of the manufacturing and assembly process and/or use of the component or of an end product so as to be largely invisible from the outside,
**characterized in that**
the recess (10) is introduced punctually or regionally in a narrow plate surface or across the corner in two adjacent narrow plate surfaces and comprises an oval cross section contour or a contour composed of circles lying on a line.

2. Insert system according to claim 1, **characterized in that** the insert completely or partially filling the recess (10) consists of a solid material which, in accordance with the material of the core layer (7) and, in particular, of the cover layers (6) of the plate-shaped component (2), is permanently effectively bonded with conventional glue or adhesive systems - white glue in the case of ligno-cellulose-based plate materials and inserts (1) made of solid wood or wood materials.

3. Insert system according to any one of claims 1 and 2, **characterized in that** the insert (1) can be insulated and/or machined together with the plate-shaped component (2) in conventional, material-removing machining and material-applying manufacturing process steps in the inserted state before insertion.

4. Insert system according to any one of the preceding claims, **characterized in that**, after the permanently fixed insertion and further machining of the insert and/or the plate-shaped component (2) and insert (1), the insert (1) can receive connecting elements in a form-fitting and firmly bonded manner for a fixed component connection or in a form-fitting and force-fitting manner for a releasable component connection, also via effective screw fasteners.

5. Insert system according to any one of the preceding claims, **characterized in that** the insert (1) is already equipped with functional elements for component connection or function-enhancing elements before permanent insertion into the plate-shaped component (2), and these elements are integrated essentially invisibly into the plate-shaped component (2) by the permanently fixed insertion of the insert (1).

6. Insert system according to any one of the preceding claims, **characterized in that** the insert (1) itself is constructed in layers and thus can include reinforcing layers or reinforcing elements which enable a particularly high screw resistance, including a metric or other screw connection for the subsequent connection of external elements or further components to the plate-shaped component thus equipped.

7. Insert system according to any one of the preceding claims, **characterized in that** the insert (1) itself is made from a current- or signal-conducting material or is provided with a conductive surface coating, so that energy or signals introduced into the insert (1) from the outside by a plug-in connection or by induction can be transferred to one or both cover layers (6) or the adjacent narrow surface coating, or the insert (1) is constructed in layers to fulfil this purpose, or comprises at least one non-conductive layer in its structure, wherein such an insulating layer not necessarily has to extend parallel horizontally or parallel vertically, but can take any course at an appropriate point, or the insert is equipped at least in parts with an insulating surface in order to transfer energy or signals targetedly only in one direction, either by direct contact or by conducting connectors.

8. Insert system according to any one of the preceding claims, **characterized in that** the insert (1) itself or by further suitable shaping, such as an in-plane angulation or a spatial angulation or another, partial-surface, end-face shaping and a corresponding projection over the edges of the recess is itself suitable to meet the connecting function of components such as one-dimensional plate longitudinal or plate width connections, two-dimensional angular or T-shaped plate corner connections or three-dimensional carcass corner connections of three plate-shaped components and more components in cooperation with glue or adhesive systems and/or integrated fitting systems or a mechanical clamping connection.

9. Insert system according to any one of the preceding claims, **characterized in that** the insert (1) itself and/or the recess (10) is provided with slight depressions and/or elevations in the form of grooves or scales arranged parallel to the course of the narrow surface, at least in partial areas of its/their wide surfaces, which on the one hand ensures mechanical locking and on the other hand supports an improved glue or adhesive distribution as well as a mechanical glue or adhesive anchoring and at the same time counteracts a complete glue or adhesive displacement when the insert (1) is pushed into the complementary recess.

10. Insert system according to any one of the preceding claims, **characterized in that** the insert (1) itself either consists entirely of a thermoplastic material or a thermoplastic composite material, or is made of another material, but is provided with a surface coating consisting essentially of a thermoplastic material, in order to weld the insert after insertion into its final position in the complementary recess at the interface with the wide surfaces of the recess by the introduction of heat and pressure or vibratory energy and pressure over one or both wide surfaces of the plate-shaped component (2) with the cover layers (6) of the component by penetration of the liquefied plastic into the cavities of the porous cover layers in order to form a permanent microform fit.

11. Insert system according to any one of the preceding claims, **characterized in that** the insert (1) itself is manufactured at least in parts from a defined elastic material in order to be able to flexibly accommodate tolerances in the further assembly process of the plate-shaped component equipped therewith or to realize a certain damping function and/or structure-borne sound wave decoupling function at the connection point in the subsequent product use.

12. Insert system according to any one of the preceding claims, **characterized in that** the insert (1) itself consists at least in parts of a polymeric material which is solid under normal product use conditions, and which, when energy is introduced in a targeted manner outside the normal conditions of use, softens in a targeted manner and thus substantially simplifies the disassembly of a product manufactured in this way after the end of the use phase.

13. Method for introducing an insert into a plate-shaped component corresponding to an insert system according to at least one of claims 1 to 12, **characterized in that** the recess in the plate-shaped component (2) is made by a cutting operation with a drill or end mill which rotates about an axis extending perpendicular to the narrow plate surface (16) and which penetrates into the component at least once in the axial direction from the sides of a narrow surface (16) or across a corner from the sides of two adjacent narrow surfaces (16) parallel to the wide surfaces and thus produces a recess of circular cross-section, and which can also produce a recess of an oval cross-section by at least one additional lateral movement, wherein the recess can accommodate only the core layer (7), the core layer (7) and a cover layer (6) or the core layer (7) and both cover layers (6) without creating an opening of the wide plate surfaces in the area of engagement and the recess is created by means of a drill or an end mill operated by a manual machine.

14. Method according to claim 13, **characterized in that** the positions of inserts (1) and recesses (10) are arranged in the raw plate or in a plate blank or in a preformatted plate strand (semi-finished product) in such a way that, as a result of a separating cut downstream the process for formatting a plurality of plate-shaped components (2) have parts of an originally single insert (1) at a suitable position.

15. Method according to claim 13, **characterized in that** an at least two-component adhesive system is used and the joining partners insert and recess are respectively wetted with only one adhesive component, so that the reaction process for forming a permanently bonded joint does not begin until the joining partners are joined, or one or both joining partners are precoated with a hotmelt adhesive which is liquefied again by thermal energy introduced later into the component and thus the adhesive application is separated in time from the joining process.

## Revendications

1. Système d'insert avec un composant en forme de plaque (2) et un insert (1), permettant une fonctionnalisation zonale du composant en forme de plaque (2) dans la zone de bordure d'un matériau en plaque doté d'une distribution de densité discontinue dans la section transversale de la plaque ou d'un matériau en plaques de type sandwich en plusieurs couches, qui présentent tous les deux au moins deux couches de recouvrement (6) en bois ou dans un matériau de type bois extérieures plus ou moins délimitées, et une couche centrale (7) disposée entre, avec une cavité (10) formée perpendiculairement par rapport à la surface étroite (16) et avec l'insert (1), inséré dans cette cavité (10) et ancré dans celle-ci de manière durable, en particulier, par complémentarité des matières, à base d'un matériau plein, qui est approprié pour renforcer essentiellement de manière zonale un tel composant en forme de plaque (2) dans sa résistance par une accumulation de matière partielle, notamment pour la formation de liaisons de composants assemblés de manière durable, ou pour le renforcement de la stabilité des composants et des produits vis-à-vis de forces qui agissent de l'extérieur sur le composant en forme de plaque (2) dans le processus de fabrication et de montage d'un produit ou pendant l'utilisation d'un produit, et/ou qui est approprié pour équiper surtout à partir de l'extérieur de manière invisible un tel composant en forme de plaque (2) de manière zonale avec des éléments élargissant la fonction à l'avantage du processus de fabrication, de montage, et/ou pour l'utilisation du composant ou d'un produit final, **caractérisé en ce que** la cavité (10) est formée ponctuellement ou par zones dans une surface mince de plaque ou sur un coin dans deux surfaces minces de plaque voisines et présente un contour ovale en section transversale ou un contour résultant de l'assemblage de cercles se situant sur une ligne.

2. Système d'insert selon la revendication 1, **caractérisé en ce que** l'insert remplissant totalement ou partiellement la cavité (10) est constitué d'un matériau plein qui est relié de manière efficace et durable, pour correspondre avec le matériau de la couche centrale (7) et en particulier des couches de recouvrement (6) du composant en forme de plaque (2), avec des systèmes de colles, respectivement, d'adhésifs, colle blanche, conventionnels pour des matériaux en plaques à base le lignocellulose et des inserts (1) en bois massif ou en matériaux à base de bois.

3. Système d'insert selon l'une des revendications 1 et 2, **caractérisé en ce que** l'insert (1) peut être façonné, avant l'insertion, isolé à l'état inséré et/ou conjointement avec le composant en forme de plaque (2), dans des étapes de processus de finition conventionnels, exerçant une traction en retirant de la matière et en rajoutant de la matière.

4. Système d'insert selon l'une des revendications précédentes, **caractérisé en ce que** l'insert (1), après la mise en place durable et un nouveau façonnage sous traction de l'insert et/ou du composant en forme de plaque (2) et de l'insert (1), peut comprendre, des éléments de liaison pour la liaison solide de composants par complémentarité des formes et des matières, ou par complémentarité des formes et des forces pour la liaison amovible de composants également par le biais de fixations par vissage efficaces.

5. Système d'insert selon l'une des revendications précédentes, **caractérisé en ce que** l'insert (1) est déjà équipé d'éléments fonctionnels avant la mise en place durable dans le composant en forme de plaque (2) pour la liaison des composants, ou d'éléments élargissant la fonction, et ces éléments sont largement intégrés de manière invisible dans le composant en forme de plaque (2) par la mise en place durable de l'insert (1).

6. Système d'insert selon l'une des revendications précédentes, **caractérisé en ce que** l'insert (1) lui-même est construit sous forme de couches et peut ainsi contenir du fait de la conception des couches de renforcement ou des éléments de renforcement qui permettent une résistance du vissage particulièrement élevée et entre autres, également un vissage métrique ou autre pour le raccordement ultérieur d'éléments externes ou d'autres composants au composant en forme de plaque ainsi équipé.

7. Système d'insert selon l'une des revendications précédentes, **caractérisé en ce que** l'insert (1) lui-même est fabriqué à partir d'une matière conductrice du courant, respectivement, de signaux, ou est muni d'un revêtement de surface conducteur, de sorte que l'énergie ou des signaux, qui sont alimentés dans l'insert (1) à partir de l'extérieur par une liaison par connexion ou par induction, peuvent être transférés plus loin vers une ou deux couches de couverture (6) ou vers le revêtement de surface mince limitrophe, ou l'insert (1) est construit sous forme de couches pour satisfaire à cette condition, ou possède dans da construction au moins une couche non conductrice, où une telle couche isolante doit s'étendre non nécessairement de manière parallèle et horizontale ou de manière parallèle et verticale, mais peut adopter une évolution quelconque à un endroit opportun, ou l'insert est équipé d'une surface isolante au moins par endroits afin de transférer plus loin de manière ciblée de l'énergie ou des signaux uniquement dans une direction soit par contact direct, soit par des connecteurs de transfert.

8. Système d'insert selon l'une des revendications précédentes, **caractérisé en ce que** l'insert (1), par lui-même ou par une conformation appropriée, comme une articulation située dans le plan ou une articulation spatiale ou une conformation autre, de surface partielle, du côté frontal et une protubérance correspondante par-dessus les arêtes de la cavité, est approprié, pour remplir lui-même la fonction de liaison de composants comme des liaisons monodimensionnelles longitudinales des plaques ou en largeur de plaques, des liaisons de plaques bidimensionnelles en forme d'angles ou en forme de T, ou des liaisons tridimensionnelles de raccords d'angles de trois composants en forme de plaques et de plus de composants en conjonction avec des systèmes de colle, respectivement, d'adhésifs, et/ou ou des systèmes de raccords intégrés ou d'une liaison de serrage mécanique.

9. Système d'insert selon l'une des revendications précédentes, **caractérisé en ce que** l'insert (1) lui-même, et/ou la cavité (10), est muni(e) de petits creux et/ou bosses parallèlement à une évolution de la surface étroite d'une forme de nervures ou de pellicules disposées au moins dans des zones partielles de sa/ses surface(s) du côté de la largeur, ce qui favorise d'une part un ancrage mécanique et d'autre part une meilleure distribution de la colle, respectivement de l'adhésif, ainsi qu'un ancrage mécanique de la colle, respectivement de l'adhésif, et agit simultanément contre l'élimination totale de la colle, respectivement de l'adhésif, lors de l'insertion de l'insert (1) dans la cavité complémentaire.

10. Système d'insert selon l'une des revendications précédentes, **caractérisé en ce que** l'insert (1) lui-même est constitué soit totalement d'une matière thermoplastique, soit d'un composite thermoplastique, ou est fabriqué à base d'un autre matériau, mais par contre reçoit un revêtement de surface à base d'une formulation essentiellement de matière thermoplastique afin de souder l'insert après l'insertion dans sa position finale dans la cavité complémentaire au niveau de la surface de délimitation vers la surface dans la largeur de la cavité par un apport de chaleur et de pression, ou d'énergie de vibration et de pression par le biais d'une ou des deux surfaces dans la largeur du composant en forme de plaque (2) avec les couches de recouvrement (6) du composant par une pénétration de la matière plastique liquéfiée dans les cavités des couches de recouvrement poreuses pour la formation d'une obturation par micro complémentarité des formes durable.

11. Système d'insert selon l'une des revendications précédentes, **caractérisé en ce que** l'insert (1) lui-même est élaboré au moins dans des parties à base d'un matériau élastique défini afin de pouvoir absorber des tolérances de manière flexible dans le processus de montage ultérieur du composant en forme de plaque en étant équipé ou pour réaliser une certaine fonction d'amortissement dans l'utilisation du produit ultérieure, et/ou une fonction de couplage d'ondes sonores corporelles au point de liaison.

12. Système d'insert selon l'une des revendications précédentes, **caractérisé en ce que** l'insert (1) lui-même est fabriqué au moins dans des parties à base d'un matériau polymère solide dans des conditions d'emploi de produit normales qui se ramollit de manière ciblée pour un apport d'énergie ciblé en dehors des conditions d'utilisation normales et facilite essentiellement ainsi le démontage d'un produit fabriqué de cette façon après l'écoulement de la phase d'utilisation.

13. Procédé d'insertion d'un insert dans un composant en forme de plaque d'un système d'insert selon au moins une des revendications 1 à 12, **caractérisé en ce que** l'évidement dans le composant en forme de plaque (2) est effectué par une action sous tension avec un forêt ou une fraise à queue, qui est en rotation autour d'un axe situé perpendiculairement par rapport à la surface étroite de plaque (16) et qui pénètre au moins une fois en direction axiale à partir de côtés d'une surface étroite (16), ou pénètre parallèlement vers les surfaces dans la largeur dans le composant par le biais d'un coin de côtés de deux surfaces étroites (16) voisines et forme ainsi une cavité circulaire dans la section transversale et en outre peut former, par au moins un mouvement latéral complémentaire, une cavité de forme ovale dans la section transversale, où la cavité ne peut comprendre que la couche centrale (7), la couche centrale (7) et une couche de recouvrement (6) ou la couche centrale (7) et deux couches de recouvrement (6), sans qu'il ne se produise ce faisant une ouverture des surfaces dans la largeur des plaques dans la zone d'insertion et la cavité est créée au moyen d'un forêt ou d'une fraise à queue entrainé(e) par une outil manuel.

14. Procédé selon la revendication 13, **caractérisé en ce que** les positions de l'insert (1) et des cavités (10) sont disposées de telle manière dans la plaque brute ou dans une découpe de plaque, ou dans un tronçon de plaque préformaté (produit semi fini), que, par une découpe de séparation située après dans le processus pour le formatage immédiat de plusieurs composants en forme de plaques (2), présentent des parties d'un insert (1) unique d'origine à l'endroit approprié.

15. Procédé selon la revendication 13, **caractérisé en ce qu'**un système d'adhésifs à au moins deux composants est employé et que les éléments à assembler, insert et cavité, ne sont mouillés respectivement uniquement avec un composant d'adhésif, de sorte que le processus réactionnel pour la formation d'un assemblage par collage durable commence seulement avec l'assemblage des éléments d'assemblage, ou un ou les deux éléments d'assemblage sont prérevêtus avec un adhésif fusible qui est de nouveau rendu liquide plus tard par de l'énergie calorifique apportée dans le composant et ainsi l'application d'adhésif est séparée dans le temps du processus d'assemblage.
